(19) Europäisches Patentamt / European Patent Office / Office européen des brevets

(11) **EP 4 694 260 A1**

(12) **EUROPEAN PATENT APPLICATION**
published in accordance with Art. 153(4) EPC

(43) Date of publication:
**11.02.2026 Bulletin 2026/07**

(21) Application number: **23935963.1**

(22) Date of filing: **06.05.2023**

(51) International Patent Classification (IPC):
**H04W 12/06** (2021.01)    **H04L 9/14** (2006.01)

(52) Cooperative Patent Classification (CPC):
**H04W 12/06; H04L 9/14**

(86) International application number:
**PCT/CN2023/092602**

(87) International publication number:
**WO 2024/229634 (14.11.2024 Gazette 2024/46)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **GUANGDONG OPPO MOBILE
TELECOMMUNICATIONS
CORP., LTD.
Dongguan, Guangdong 523860 (CN)**

(72) Inventor: **GAN, Lu
Dongguan, Guangdong 523860 (CN)**

(74) Representative: **RGTH
Patentanwälte PartGmbB
Neuer Wall 10
20354 Hamburg (DE)**

(54) **AUTHENTICATION METHODS, KEY GENERATION METHOD, AND DEVICE**

(57)    The present application relates to authentication methods, a key generation method, a device, a computer-readable storage medium, a computer program product and a computer program. An authentication method comprises: a first device receiving a first message from a first network device, the first message carrying a MAC, an authentication parameter, and an identifier of a second device; and the first device sending a second message to the second device, the second message carrying the MAC and the authentication parameter, the authentication parameter being used for the second device to obtain a verification MAC on the basis of a root key, the verification MAC being used for the second device to authenticate, in combination with the MAC, a core network side device, and the root key being a key shared by the second device and the core network side device.

A first device receives a first message from a first network device, the first message carrying a MAC, an authentication parameter and an identifier of a second device ⟨— S210

The first device transmits a second message to the second device, the second message carrying the MAC and the authentication parameter, where the authentication parameter is used for the second device to obtain a verification MAC based on a root key, the verification MAC is used for the second device to perform authentication of a core network side device in combination with the MAC, and the root key is a key shared between the second device and the core network side device ⟨— S220

FIG. 2

# EP 4 694 260 A1

**Description**

TECHNICAL FIELD

The present application relates to the field of communications, and more specifically, to authentication methods, a key generation method, devices, a computer-readable storage medium, a computer program product, and a computer program.

BACKGROUND

In the related art, an authentication process and key agreement process between a user equipment (UE) and a core network employ high-complexity calculation functions and complex key architectures. However, a zero-power device, such as an ambient Internet of Things (AIoT) device, also has a need to access a network such as the core network. How to enable the AIoT device to use a low-complexity computing method to achieve authentication with a network side while ensuring security has become a problem that needs to be solved.

SUMMARY

Embodiments of the present application provide authentication methods, a key generation method, devices, a computer-readable storage medium, a computer program product, and a computer program.

Embodiments of the present application provide an authentication method, and the method includes:

receiving, by a first device, a first message from a first network device, the first message carrying a MAC, an authentication parameter and an identifier of a second device;

transmitting, by the first device, a second message to the second device, the second message carrying the MAC and the authentication parameter, where the authentication parameter is used for the second device to obtain a verification MAC based on a root key, the verification MAC is used for the second device to perform authentication of a core network side device in combination with the MAC, and the root key is a key shared between the second device and the core network side device.

Embodiments of the present application provide an authentication method, and the method includes:

receiving, by a second device, a second message from a first device, the second message carrying a MAC and an authentication parameter;

calculating, by the second device, a verification MAC based on the authentication parameter and a root key, the root key being a key shared between the second device and a core network side device;

completing, by the second device, authentication of the core network side device in a case where the verification MAC is the same as the MAC.

Embodiments of the present application provide an authentication method, and the method includes:
transmitting, by a first network device, a first message to a first device, where the first message carries a MAC, an authentication parameter and an identifier of a second device, where the authentication parameter is used for the second device to obtain a verification MAC based on a root key, the verification MAC is used for the second device to perform authentication of a core network side device in combination with the MAC, and the root key is a key shared between the second device and the core network side device.

Embodiments of the present invention provide a key generation method, and the method includes:
calculating, by an electronic device, an integrity protection key and/or an encryption key, where the integrity protection key is related to a key generation parameter and a third random number, the encryption key is related to the key generation parameter and a fourth random number, the key generation parameter includes an anonymous key and/or a first random number, the integrity protection key is used to calculate an integrity verification code, and the encryption key is used to encrypt transmitted data and/or decrypt received data.

Embodiments of the present application provide an authentication method, and the method includes:

receiving, by the first device, a first message from a first network device, the first message carrying an authentication parameter and an identifier of a second device;

transmitting, by the first device, a second message to the second device, the second message carrying the authentication parameter;

receiving, by the first device, a third message from the second device, the third message carrying a first RES, where the first RES is obtained by the second device based on the authentication parameter and a root key, and the root key is a key shared between the second device and a core network side device; and

transmitting, by the first device, a fourth message to the first network device, the fourth message carrying the first RES, and the first RES being used for the core network side device to perform authentication of the second device.

Embodiments of the present application provide an authentication method, and the method includes:

receiving, by a second device, a second message from a first device, the second message carrying an authentication parameter;

calculating, by the second device, a first RES based on the authentication parameter and a root key, the root key being a key shared between the second device and a core network side device;

transmitting, by the second device, a third message to the first device, the third message carrying the first RES, and the first RES being used for the core network side device to perform authentication of the second device.

Embodiments of the present application provide an authentication method, and the method includes:

transmitting, by a first network device, a first message to a first device, the first message carrying an authentication parameter and an identifier of a second device;

receiving, by the first network device, a fourth message from the first device, the fourth message carrying a first RES, where the first RES is obtained by the second device based on the authentication parameter and a root key, and the root key is a key shared between the second device and a core network side device; and

determining, by the first network device, that authentication of the second device succeeds in a case where the first RES is the same as a first verification RES.

Embodiments of the present application provide an authentication method, and the method includes:

transmitting, by a first device, a second message to a second device, the second message carrying an authentication parameter;

receiving, by the first device, a third message from the second device, the third message carrying a second RES, and the second RES being related to the authentication parameter and a first key;

generating, by the first device, a second verification RES based on the authentication parameter and the first key; and

determining, by the first device, that authentication of the second device succeeds in a case where the second verification RES is the same as the second RES.

Embodiments of the present application provide an authentication method, and the method includes:

receiving, by a second device, a second message from a first device, the second message carrying an authentication parameter;

calculating, by the second device, a second RES based on the authentication parameter and a physical layer key, the first key being related to the first device; and

transmitting, by the second device, a third message to the first device, the third message carrying the second RES, and the second RES being used for the first device to perform authentication of the second device.

Embodiments of the present application provide a first device, and the first device includes:

a first communication unit configured to receive a first message from a first network device, the first message carrying a MAC, an authentication parameter and an identifier of a second device; and transmit a second message to the second device, the second message carrying the MAC and the authentication parameter, where the authentication parameter is used for the second device to obtain a verification MAC based on a root key, the verification MAC is used for the second device to perform authentication of a core network side device in combination with the MAC, and the root key is a key shared between the second device and the core network side device.

Embodiments of the present application provide a second device, and the second device includes:

a second communication unit configured to receive a second message from a first device, the second message carrying a MAC and an authentication parameter;

a second processing unit configured to calculate a verification MAC based on the authentication parameter and a root key, the root key being a key shared between the second device and a core network side device; in a case where the verification MAC is the same as the MAC, the second device completing authentication of the core network side device.

Embodiments of the present application provide a first network device, and the first network device includes: a third communication unit configured to transmit a first message to a first device, where the first message carries a MAC, an authentication parameter and an identifier of a second device, the authentication parameter is used for the second device to obtain a verification MAC based on a root key, the verification MAC is used for the second device to perform authentication of a core network side device in combination with the MAC, and the root key is a key shared between the second device and the core network side device.

Embodiments of the present application provide an electronic device, and the electronic device includes: a fourth processing unit configured to calculate an integrity protection key and/or an encryption key, where the integrity protection key is related to a key generation parameter and a third random number, the encryption key is related to the key generation parameter and a fourth random number, the key generation parameter includes an anonymous key and/or a first random number, the integrity protection key is used to calculate an integrity verification code, and the encryption key is used to encrypt transmitted data and/or decrypt received data.

Embodiments of the present application provide a first device, and the first device includes: a first communication unit configured to receive a first message from a first network device, the first message carrying an authentication parameter and an identifier of a second device; transmit a second message to the second device, the second message carrying the authentication parameter; receive a third message from the second device, the third message carrying a first RES, the first RES being obtained by the second device based on the authentication parameter and a root key, and the root key being a key shared between the second device and a core network side device; and transmit a fourth message to the first network device, the fourth message carrying the first RES, and the first RES being used for the core network side device to perform authentication of the second device.

Embodiments of the present application provide a second device, and the second device includes:

a second communication unit configured to receive a second message from a first device, the second message carrying an authentication parameter; and transmit a third message to the first device, the third message carrying a first RES, and the first RES being used for a core network side device to perform authentication of the second device; and

a second processing unit configured to calculate the first RES based on the authentication parameter and a root key, the root key being a key shared between the second device and the core network side device.

Embodiments of the present application provide a first network device, and the first network device includes:

a third communication unit configured to transmit a first message to a first device, the first message carrying an authentication parameter and an identifier of a second device; receive a fourth message from the first device, where the fourth message carries the first RES, the first RES is obtained by the second device based on the authentication parameter and a root key, and the root key is a key shared between the second device and a core network side device; and

a third processing unit configured to determine that authentication of the second device succeeds in a case where the first RES is the same as a first verification RES.

Embodiments of the present application provide a first device, and the first device includes:

a first communication unit configured to transmit a second message to a second device, the second message carrying an authentication parameter; and receive a third message from the second device, the third message carrying a second RES, and the second RES being related to the authentication parameter and a first key; and

a first processing unit configured to generate a second verification RES based on the authentication parameter and the first key; and determine that authentication of the second device succeeds in a case where the second verification RES is the same as the second RES.

Embodiments of the present application provide a second device, and the second device includes:

a second communication unit configured to receive a second message from a first device, the second message carrying an authentication parameter; and transmit a third message to the first device, the third message carrying a second RES, and the second RES being used for the first device to perform authentication of the second device; and a second processing unit configured to calculate the second RES based on the authentication parameter and a first key, the first key being related to the first device.

Embodiments of the present application provide a first device, and the first device includes a transceiver, a processor and a memory. The memory is configured to store a computer program, and the processor is configured to call and run the computer program stored in the memory, so that the first device performs the above method.

Embodiments of the present application provide a second device, and the second device includes a transceiver, a processor and a memory. The memory is configured to store a computer program, and the processor is configured to call and run the computer program stored in the memory, so that the second device performs the above method.

Embodiments of the present application provide a first network device, and the first network device includes a transceiver, a processor and a memory. The memory is configured to store a computer program, and the processor is configured to call and run the computer program stored in the memory, so that the first network device performs the above method.

Embodiments of the present application provide an electronic device, and the electronic device includes a transceiver, a processor and a memory. The memory is configured to store a computer program, and the processor is configured to call and run the computer program stored in the memory, so that the electronic device performs the above method.

Embodiments of the present application provide a chip for implementing the above method.

Specifically, the chip includes a processor. The processor is configured to call and run a computer program from a memory, so that a device equipped with the chip performs the above method.

Embodiments of the present application provide a computer-readable storage medium for storing a computer program. The computer program, when executed by the device, causes a device to perform the above method.

Embodiments of the present application provide a computer program product including computer program instructions. The computer program instructions cause a computer to perform the above method.

Embodiments of the present application provide a computer program. The computer program, when executed on a computer, causes the computer to perform the above method.

By adopting the solutions provided in the embodiments, the first device transmits the authentication parameter to the second device, so that the second device may directly calculate the verification MAC based on the authentication parameter and the root key shared with the core network side device, and authenticate the core network device based on the verification MAC and the received MAC. In this way, the second device side is prevented from performing complex calculations while ensuring security of the authentication process between the second device and the core network side device, thereby improving processing efficiency of the second device, which is particularly suitable for devices with low computing power.

BRIEF DESCRIPTION OF THE DRAWINGS

FIG. 1 is a schematic diagram of an application scenario according to an embodiment of the present application.
FIG. 2 is a schematic flowchart of an authentication method according to an embodiment of the present application.
FIG. 3 is a schematic flowchart of an authentication method according to another embodiment of the present application.
FIG. 4 is a schematic flowchart of an authentication method according to yet another embodiment of the present application.
FIG. 5 is a schematic flowchart of a key generation method according to an embodiment of the present application.
FIGS. 6 to 20 are schematic diagrams of various example processes of an authentication method according to an embodiment of the present application, as well as schematic diagrams of various key architectures and schematic diagrams of various authentication architectures.
FIG. 21 is a schematic flowchart of an authentication method according to an embodiment of the present application.
FIG. 22 is a schematic flowchart of an authentication method according to another embodiment of the present application.
FIG. 23 is a schematic flowchart of an authentication method according to another embodiment of the present application.
FIG. 24 is a schematic flowchart of an authentication method according to an embodiment of the present application.
FIG. 25 is a schematic flowchart of an authentication method according to another embodiment of the present application.
FIG. 26 is a schematic diagram of a scenario in which an AIoT device accesses a network in the related art.
FIG. 27 is a schematic diagram of an authentication and key agreement (AKA) authentication process.
FIG. 28 is a schematic diagram of an authentication architecture in the related art.
FIG. 29 is a schematic diagram of a key architecture in the related art.
FIG. 30 is a schematic block diagram of a first device according to an embodiment of the present application.
FIG. 31 is a schematic block diagram of a second device according to an embodiment of the present application.
FIG. 32 is a schematic block diagram of a first network device according to an embodiment of the present application.

FIG. 33 is a schematic block diagram of an electronic device according to an embodiment of the present application.

FIG. 34 is a schematic block diagram of a communication device according to an embodiment of the present application.

FIG. 35 is a schematic block diagram of a chip according to an embodiment of the present application.

FIG. 36 is a schematic block diagram of a communication system according to an embodiment of the present application.

DETAILED DESCRIPTION

Technical solutions of embodiments of the present application may be applied to various communication systems, for example, a global system of mobile communication (GSM), a code division multiple access (CDMA) system, a wideband code division multiple access (WCDMA) system, a general packet radio service (GPRS) system, a long term evolution (LTE) system, an advanced long term evolution (LTE-A) system, a new radio (NR) system, an evolution system of an NR system, a wireless local area network (WLAN), wireless fidelity (WiFi), or other communication systems.

The embodiments of the present application describe various embodiments in conjunction with network devices and terminals. The terminal may be mobile or fixed, and the terminal may also be referred to as a mobile station, or a user unit, etc. The terminal may be a station in the WLAN, or may be a terminal such as a smart terminal, a wireless modem, a laptop computer, or a tablet computer. In embodiments of the present application, the terminal may be a virtual reality (VR) terminal/ augmented reality (AR) terminal, a terminal in industrial control, a terminal in self driving, a terminal in remote medical, a terminal in smart grid, a terminal in transportation safety, a terminal in smart city, or a wireless terminal in smart home, etc. By way of example and not limitation, in the embodiments of the present application, the terminal may also be a wearable device.

In the embodiments of the present application, the network device may be a device for communicating with the terminal. The network device may be an access point in the WLAN; a base station in GSM, CDMA or WCDMA; an evolved base station in LTE; a relay station; a network device (gNB) in a vehicle-mounted device, a wearable device and an NR network; a network device in a future evolved PLMN network; or a network device in a non-terrestrial network, etc. By way of example and not limitation, in the embodiments of the present application, the network device may have a mobile feature. For example, the network device may be a mobile device.

It should be understood that the terms "system" and "network" are often used interchangeably herein. The term "and/or" herein is merely a description of an association relationship of associated objects, indicating that three relationships may exist. For example, A and/or B may mean that: A exists alone, both A and B exist, and B exists alone. In addition, the character "/" herein generally indicates that the previous and next associated objects are in an "or" relationship. It should be understood that the "indication" mentioned in the embodiments of the present application may be a direct indication, an indirect indication, or an indication of an associated relationship. For example, A indicates B, which may mean that A directly indicates B, for example, B may be obtained through A; it may also mean that A indirectly indicates B, for example, A indicates C, and B may be obtained through C; it may also mean that there is an association relationship between A and B. In the description of the embodiments of the present application, the term "corresponding" may indicate a direct or indirect correspondence between two items, or an association relationship between the two items, or a relationship between indicating and being indicated, configuring and being configured, and the like.

To facilitate understanding of the technical solutions of the embodiments of the present application, relevant technologies of the embodiments of the present application are described below. The following related technologies, as optional solutions, may be arbitrarily combined with the technical solutions of the embodiments of the present application, and they all fall within the protection scope of the embodiments of the present application.

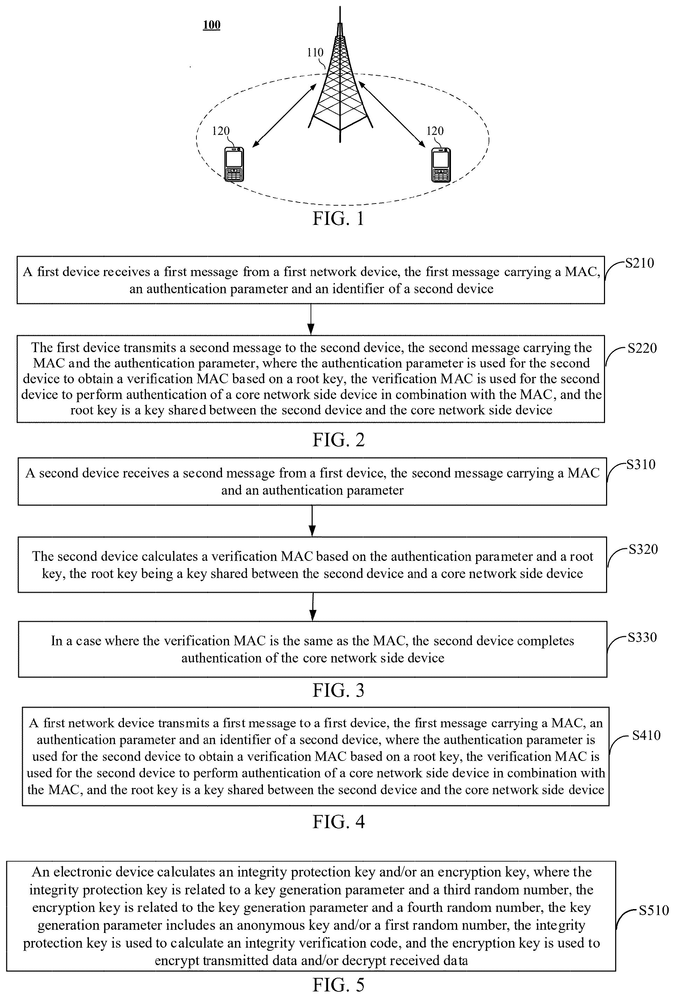

FIG. 1 exemplarily shows a communication system 100. The communication system includes one network device 110 and two terminals 120. In a possible implementation, the communication system 100 may include a plurality of network devices 110, and each network device 110 may include other number of terminals 120 within its coverage area, which is not limited in the embodiments of the present application. In a possible implementation, the communication system 100 may further include a mobility management entity, an access and mobility management function, and other network entities, which are not limited in the embodiments of the present application. The network device may include an access network device and a core network device. That is, the communication system may further include a plurality of core networks for communicating with access network devices. The access network device may be a base station of the LTE, LTE-A, or NR system. Taking the communication system shown in FIG. 1 as an example, communication devices may include the network device and the terminals with a communication function, and the communication devices may further include other devices in the communication system, such as a network controller, a mobile management entity and other network entities, which are not limited in the embodiments of the present application.

FIG. 2 is a schematic flowchart of an authentication method according to an embodiment of the present application. The method includes at least part of the following.

In S210, a first device receives a first message from a first network device, the first message carrying a MAC, an authentication parameter, and an identifier of a second device.

In S220, the first device transmits a second message to the second device, the second message carrying the MAC and the authentication parameter, where the authentication parameter is used for the second device to obtain a verification MAC based on a root key, the verification MAC is used for the second device to perform authentication of a core network side device in combination with the MAC, and the root key is a key shared between the second device and the core network side device.

FIG. 3 is a schematic flowchart of an authentication method according to another embodiment of the present application. The method includes at least part of the following.

In S310, a second device receives a second message from a first device, the second message carrying a MAC and an authentication parameter.

In S320, the second device calculates a verification MAC based on the authentication parameter and a root key, the root key being a key shared between the second device and a core network side device.

In S330, in a case where the verification MAC is the same as the MAC, the second device completes authentication of the core network side device.

FIG. 4 is a schematic flowchart of an authentication method according to another embodiment of the present application. The method includes at least part of the following.

In S410, a first network device transmits a first message to a first device, the first message carrying a MAC, an authentication parameter and an identifier of a second device, where the authentication parameter is used for the second device to obtain a verification MAC based on a root key, the verification MAC is used for the second device to perform authentication of a core network side device in combination with the MAC, and the root key is a key shared between the second device and the core network side device.

FIG. 5 is a schematic flowchart of a key generation method according to another embodiment of the present application. The method includes at least part of the following.

In S510, an electronic device calculates an integrity protection key and/or an encryption key, where the integrity protection key is related to a key generation parameter and a third random number, the encryption key is related to the key generation parameter and a fourth random number, the key generation parameter includes an anonymous key and/or a first random number, the integrity protection key is used to calculate an integrity verification code, and the encryption key is used to encrypt transmitted data and/or decrypt received data.

The core network side device includes one of: one or more core network devices or authentication servers (ASs).

The second device is an ambient Internet of Things (AIoT) device. The AIoT device may also be expressed as an AIoT device. This embodiment does not list all possible representations. In some possible examples, the second device may also be a zero-power device, for example, an active zero-power device, a passive zero-power device, or a semi-passive zero-power device. Optionally, the second device may be called a tag, and optionally the second device may also be an IoT device, etc. In some other possible examples, the second device may be a terminal with lower computing power. All possible names or possible devices for the second device are not exhaustively listed here.

The first device includes at least one of a terminal device, an access network device, an authenticator, or a first core network device. The first core network device may include at least one of access and mobility management function (AMF), a security anchor function (SEAF), or a core network element dedicated to AIoT services (for example, which may be referred to as AIoT network element for short). In addition, the first core network device may also be a network element of other core network, which are not exhaustive here.

The one or more core network devices may include at least one of authentication server function (AUSF), unified data management (UDM) function, or authentication credential repository and processing function (ARPF). It should be understood that this is only an exemplary description. In actual processing, the one or more core network devices may further include other devices of the core network, which are not exhaustive here. The first network device may be one of the aforementioned core network side devices. For example, the first network device is the AUSF or an authentication server.

In some possible implementations, the authentication parameter includes one of an anonymous key (AK) and a first random number.

Calculating, by the second device, the verification MAC based on the authentication parameter and the root key may include one of: calculating, by the second device using a first calculation manner, the verification MAC based on the anonymous key and the root key; calculating, by the second device, the anonymous key based on an exclusive OR (XOR) of the first random number and the root key, and calculating, by the second device using the first calculation manner, the verification MAC based on the anonymous key and the root key; calculating, by the second device, the first random number based on an XOR of the anonymous key and the root key, and calculating, by the second device using the first calculation manner, the verification MAC based on the first random number and the root key; or calculating, by the second device using the first calculation manner, the verification MAC based on the first random number and the root key.

Optionally, the authentication parameter includes the anonymous key. Correspondingly, calculating, by the second device, the verification MAC based on the authentication parameter and the root key may include one of: calculating, by the second device using the first calculation manner, the verification MAC based on the anonymous key and the root key; or calculating, by the second device, the first random number based on the XOR of the anonymous key and the root key, and calculating, by the second device using the first calculation manner, the verification MAC based on the first random number and the root key.

Here, the first calculation manner may include at least one of: a second authentication function, a hash algorithm, an advanced encryption standard (AES), ACSON, snow third generation (SNOW 3G), or ZUChongzhi (ZUC). The second authentication function may be expressed as f2(); the hash algorithm may be expressed as HASH(), and the hash algorithm may include hash based message authentication code-secure hash algorithm-256 (HMAC-SHA-256), or other hash algorithms may be used, which are not exhaustive in this embodiment. In addition, the first calculation manner is only for exemplary explanation. In actual processing, other algorithms for calculating the MAC or the verification MAC may also be included in the first calculation manner, which are not exhaustive here.

For example, the verification MAC is calculated by the second device based on the anonymous key and the root key using the first calculation manner, and may be calculated using the following formula: MAC'=f2(Kr, AK), where MAC' represents the verification MAC, f2() represents that the first calculation manner is specifically the second authentication function, Kr represents the root key, and AK represents the anonymous key. In addition to Kr, the root key may be expressed as any one of K, pre-shared key (PSK), and pairwise master key (PMK), etc. Correspondingly, Kr in each formula example provided in this embodiment (including the following) may be replaced with K, PSK, or PMK, etc., which is not exhaustive here.

For example, the first random number is calculated by the second device based on the XOR of the anonymous key and the root key, and may be calculated using the following formula: $RAND = Kr \oplus AK$, where RAND represents the first random number, Kr represents the root key, AK represents the anonymous key, and $\oplus$ represents XOR operation. The verification MAC is calculated by the second device based on the first random number and the root key using the first calculation manner, and may be calculated using the following formula: MAC'=f2(Kr, RAND). The meaning of each parameter in this formula is the same as that in the previous embodiments and will not be repeated.

Optionally, the authentication parameter includes the first random number. Correspondingly, calculating, by the second device, the verification MAC based on the authentication parameter and the root key may include one of: calculating, by the second device using the first calculation manner, the verification MAC based on the first random number and the root key; calculating, by the second device, the anonymous key based on an XOR of the first random number and the root key, and calculating, by the second device using the first calculation manner, the verification MAC based on the anonymous key and the root key.

For example, the verification MAC is calculated by the second device based on the first random number and the root key using the first calculation manner, and may be calculated using the following formula: MAC'=f2(Kr, RAND), where MAC' represents the verification MAC, f2() represents that the first calculation manner is specifically the second authentication function, Kr represents the root key, and RAND represents the first random number.

For example, the anonymous key is calculated by the second device based on the XOR of the first random number and the root key, and may be calculated using the following formula: $AK = Kr \oplus RAND$, where RAND represents the first random number, Kr represents the root key, AK represents the anonymous key, and $\oplus$ represents XOR operation. The verification MAC is calculated by the second device based on the anonymous key and the root key using the first calculation manner, and may be calculated using the following formula: MAC'=f2(Kr, AK). The meaning of each parameter in the formula is the same as that in the previous embodiments, and is not repeated here.

Optionally, the second message further carries service parameters, and the service parameters include at least one of: a type parameter for indicating an AIoT service type, an identifier of a server with an AIoT service function, or a type parameter for indicating an AIoT authentication type.

The type parameter for indicating the AIoT service type may be an identifier, such as a first identifier for indicating the AIoT service type. A specific value or specific content of the first identifier may be set according to actual conditions. For example, the first identifier may include content description information "AIoT service". Alternatively, the first identifier may include a value. For example, in a case where the value is 01, it identifies the AIoT service type. Alternatively, the first identifier may be other value or other content, as long as it is uniquely used to indicate that the current service type is the AIoT service type, it is within the protection scope of this embodiment.

The type parameter for indicating the AIoT authentication type may be another identifier, such as a second identifier for indicating the AIoT authentication type. A specific value or content of the second identifier may be set according to actual conditions. For example, the second identifier may include content description information "AIoT certification". Alternatively, the second identifier may include a value. For example, in a case where the value is 00, it identifies the AIoT certification type. Alternatively, the first identifier may be other value or other content, as long as it is uniquely used to indicate that the current authentication type is the AIoT certification type, it is within the protection scope of this embodiment.

The server with the AIoT service function may refer to a server that provides AIoT-related services, which may be, for example, an application function (AF) network element, a network element with the AIoT service function on the core network side, or other servers, which are not exhaustive here. The above identifier may include a network identifier and/or an ID; and the network identifier may include at least one of an internet protocol (IP) address, a media access control (MAC) address, or the like.

The second message may carry the authentication parameter, the service parameters and the MAC. Alternatively, the second message may carry the authentication parameter and the MAC, and the authentication parameter includes at least one of the anonymous key, the first random number, or the service parameters. For example, the authentication parameter includes the anonymous key; or the authentication parameter includes the first random number; or the authentication parameter includes the anonymous key and the service parameters; or the authentication parameter includes the first random number and the service parameters.

Calculating, by the second device using the first calculation manner, the verification MAC based on the anonymous key and the root key includes: calculating, by the second device using the first calculation manner, the verification MAC based on the service parameters, the anonymous key and the root key; and/or, calculating, by the second device using the first calculation manner, the verification MAC based on the first random number and the root key includes: calculating, by the second device using the first calculation manner, the verification MAC based on the service parameters, the first random number and the root key.

For example, the first calculation manner is still the second authentication function, and the verification MAC is calculated by the second device based on the service parameters, the anonymous key and the root key using the first calculation manner, and may be calculated using the following formula: MAC'=f2(Kr, AK, Service parameters). The meaning of each parameter is the same as that in the previous embodiments, and will not be repeated.

For example, the first calculation manner is still the second authentication function, and the verification MAC is calculated by the second device based on the service parameters, the first random number and the root key using the first calculation manner, and may be calculated using the following formula: MAC'=f2(Kr, RAND, Service parameters). The meaning of each parameter is the same as that in the previous embodiments, and will not be repeated.

It should be noted that in the above examples, only the second authentication function is used as the first calculation manner to illustrate the generation of the verification MAC. In actual processing, any one of the above first calculation manners may be used to calculate the verification MAC, which are not described one by one.

In some possible implementations, the method further includes one of: receiving, by the first network device, the MAC and the authentication parameter from a second network device; or generating, by the first network device, the authentication parameter, and calculating, by the first network device, the MAC based on the root key and the authentication parameter.

A manner in which the first network device generates the authentication parameter is not limited in this embodiment. It should be noted that the authentication parameter may include the anonymous key or the first random number. The anonymous key and the first random number may be pre-generated on the first network device side, and any one of the two may be used as the authentication parameter. A manner in which the first network device generates the first random number is not limited in this embodiment. A relationship between the anonymous key and the first random number may be as follows. The anonymous key is obtained through the XOR of the first random number and the root key.

Calculating, by the first network device, the MAC based on the root key and the authentication parameter includes one of: calculating, by the first network device using the first calculation manner, the MAC based on the anonymous key and the root key; calculating, by the first network device, the anonymous key based on the XOR of the first random number and the root key, and calculating, by the first network device using the first calculation manner, the MAC based on the anonymous key and the root key; calculating, by the second device, the first random number based on the XOR of the anonymous key and the root key, and calculating, by the second device using the first calculation manner, the MAC based on the first random number and the root key; or calculating, by the second device using the first calculation manner, the MAC based on the first random number and the root key. The detailed description of the first calculation manner is the same as that of the above embodiments, and will not be repeated.

Optionally, the authentication parameter includes the anonymous key. Calculating, by the first network device, the MAC based on the authentication parameter and the root key may include one of: calculating, by the first network device using the first calculation manner, the MAC based on the anonymous key and the root key; or calculating, by the first network device, the first random number based on the XOR of the anonymous key and the root key, and calculating, by the first network device using the first calculation manner, the MAC based on the first random number and the root key.

For example, the MAC is calculated by the first network device based on the anonymous key and the root key using the first calculation manner, and may be calculated using the following formula: MAC=f2(Kr, AK), where MAC represents the MAC, f2() represents that the first calculation manner is specifically the second authentication function, Kr represents the root key, and AK represents the anonymous key.

For example, the first network device calculates the first random number based on the XOR of the anonymous key and the root key. The formula used is the same as that in the above embodiments, and will not be repeated. The MAC is calculated by the first network device based on the first random number and the root key using the first calculation manner, and may be calculated using the following formula: MAC=f2(Kr, RAND). The meaning of each parameter in the formula is the same as that in the above embodiments, and will not be repeated.

Optionally, the authentication parameter includes the first random number. Correspondingly, calculating, by the first network device, the MAC based on the authentication parameter and the root key may include one of: calculating, by the first network device using the first calculation manner, the MAC based on the first random number and the root key; calculating, by the first network device, the anonymous key based on the XOR of the first random number and the root key, and calculating, by the first network device using the first calculation manner, the MAC based on the anonymous key and the root key.

The first network device calculates the MAC based on the first random number and the root key using the first calculation manner, and the formula used is the same as that in the above embodiments. The first network device calculates the anonymous key based on the XOR of the first random number and the root key, and the first network device calculates the verification MAC based on the anonymous key and the root key using the first calculation manner. The formulas used are the same as those in the previous embodiments, and thus will not be repeated.

It should be noted that an exemplary description is given only by taking an example in which the first calculation manner is the second authentication function. In actual processing, the first calculation manner may not be limited to the second authentication function. Any one of the hash algorithm, the AES, the ACSON, the SNOW 3G, and the ZUC may be used as the first calculation manner. Other calculation manner may also be used as the first calculation manner, which is not exhaustive in this embodiment.

Optionally, calculating, by the first network device using the first calculation manner, the MAC based on the anonymous key and the root key includes: calculating, by the first network device using the first calculation manner, the MAC based on the service parameters, the anonymous key and the root key; and/or, calculating, by the first network device using the first calculation manner, the MAC based on the first random number and the root key includes: calculating, by the first network device using the first calculation manner, the MAC based on the service parameters, the first random number and the root key.

In this case, the first message further carries the service parameters. The description of the service parameters is the same as that in the above embodiments, and will not be repeated. The first message may carry the authentication parameter, the service parameters and the MAC. Alternatively, the first message may carry the authentication parameter and the MAC, and the authentication parameter includes at least one of the anonymous key, the first random number, or the service parameters. For example, the authentication parameter includes the anonymous key; or the authentication parameter includes the first random number; or the authentication parameter includes the anonymous key and the service parameters; or the authentication parameter includes the first random number and the service parameters. A manner in which the first network device generates the service parameters or obtains the service parameters is not limited in this embodiment.

For example, the first calculation manner is still the second authentication function, and the MAC is calculated by the first network device based on the service parameters, the anonymous key and the root key using the first calculation manner, and may be calculated using the following formula: MAC=f2(Kr, AK, Service parameters). The meaning of each parameter is the same as that in the previous embodiments and will not be repeated.

For example, the first calculation manner is still the second authentication function, and the MAC is calculated by the first network device based on the service parameters, the first random number and the root key using the first calculation manner, and may be calculated using the following formula: MAC=f2(Kr, RAND, Service parameters). The meaning of each parameter is the same as that in the previous embodiments and will not be repeated.

Optionally, the second network device may be a device on the core network side. That is, the second network device may be a second core network device. Since the second network device is the device on the core network side, the second network device stores a root key corresponding to the second device. A manner in which the second network device generates or obtains the root key corresponding to the second device is not limited in this embodiment.

The second network device may also be at least one of the core network side devices. For example, the second network device may include at least one of UDM or ARPF. In addition, a manner in which the second network device obtains the MAC is not limited in this embodiment.

Receiving, by the first network device, the MAC and the authentication parameter from the second network device may further include: receiving, by the first network device, the service parameters, the MAC and the authentication parameter from the second network device. In this case, the first message further carries the service parameters. The description of the service parameters is the same as that in the above embodiments, and will not be repeated. A manner in which the first message may carry the service parameters is also the same as that in the above embodiments, and will not be repeated.

In this example, a manner in which the second network device calculates the MAC is the same as the manner in which the first network device calculates the MAC, and thus will not be repeated.

It should further be noted that the algorithm used by the first network device or the second network device to calculate the MAC should be the same as the algorithm used by the second device to calculate the verification MAC. For example, taking the first network device and the second device as an example, the first network device uses the hash algorithm to calculate the MAC based on the anonymous key and the root key, and the second device also uses the hash algorithm to calculate the verification MAC based on the anonymous key and the root key. Other situations are the same as described above, and will not be repeated.

In some possible implementations, the processing by the second device may further include: completing, by the second device, the authentication of the core network side device in a case where the verification MAC is the same as the MAC.

The second device may further perform the following processing. The second device determines whether the verification MAC is the same as the MAC. In addition, the method may further include that: in a case where the verification MAC is different from the MAC, the second device fails to authenticate the core network side device. Furthermore, if the second device fails to authenticate the core network side device, subsequent processing may not be performed, or the second device may further transmit, to the first device, a message (for example, to the first network device via the first device) indicating that the authentication of the core network side device has failed.

The second device completing the authentication of the core network side device may also be called the second device passing the identity authentication of the core network side device, the second device successfully authenticating the identity of the core network side device, or the second device successfully authenticating the core network side device.

In some possible implementations, the third message may carry at least one of a first RES or a second RES. The first RES is used for the core network side device to authenticate the second device, and the second RES is used for the first device to authenticate the second device.

In some possible examples, the third message carries the first RES.

In this case, the processing by the first device may include transmitting, by the first device, a fourth message to the first network device. The fourth message carries the first RES. Furthermore, the first device may further transmit a response message to the second device. For example, the first device receives a notification from the first network device that the authentication of the second device has passed, and the first device transmits a response message to the second device. The response message responds to the third message, and the response message is used to indicate that the core network side device has authenticated the second device. Correspondingly, the processing by the first network device after receiving the fourth message from the first device may include: determining, by the first network device, that the authentication of the second device succeeds in a case where the first RES is the same as a first verification RES. For example, after determining that the authentication of the second device succeeds, the first network device may further transmit a notification to the first device that the authentication of the second device succeeds. For example, it may further include: determining, by the first network device, that the authentication of the second device fails in a case where the first RES is different from the first verification RES, and then ending the processing or transmitting a notification of an authentication failure to the second device through the first device. Possible subsequent processing is not limited here. Furthermore, the method may further include: in a case where it is determined that the authentication of the second device succeeds, transmitting, by the first network device, a notification to the first device that the authentication of the second device succeeds.

A manner in which the second device calculates the first RES includes one of: calculating, by the second device using the first calculation manner, the first RES based on the first random number and the root key; or calculating, by the second device using the first calculation manner, the first RES based on the anonymous key and the root key.

Optionally, calculating, by the second device using the first calculation manner, the first RES based on the first random number and the root key may mean that: in a case where the second device calculates the verification MAC based on the anonymous key and the root key using the first calculation manner, the second device calculates the first RES based on the first random number and the root key using the first calculation manner. That is, the parameters for calculating the first RES (or the first verification RES) are at least partially different from the parameters for calculating the verification MAC (or the MAC) in the above embodiments. In addition, the specific algorithm for calculating the first RES may be different from the algorithm for calculating the MAC. For example, the hash algorithm may be used to calculate the first RES, and the second authentication function may be used to calculate the MAC.

For example, the verification MAC is calculated by the second device based on the anonymous key and the root key using the first calculation manner, and may be calculated using the following formula: MAC'=f2(Kr,AK). The first RES is calculated by the second device based on the first random number and the root key using the first calculation manner, and may be calculated using the following formula: RES=f2(Kr, RAND), where RES represents the first RES, Kr represents the root key, RAND represents the first random number, AK represents the anonymous key, and the meanings of other contents in the above formula are the same as those in the above embodiments and are not repeated here.

Further, the service parameters may be added to calculate the first RES. Calculating, by the second device using the first calculation manner, the first RES based on the first random number and the root key may include: calculating, by the second device using the first calculation manner, the first RES based on the service parameters, the first random number and the root key. For example, the first RES is calculated by the second device based on the service parameters, the first random number and the root key using the first calculation manner, and may be calculated using the following formula: RES=f2(Kr, RAND, Service parameters). The meaning of each content in the formula is the same as that in the previous embodiments, and is not repeated here.

It should be understood that in a case where the second device calculates the first RES based on the service parameters, the first random number and the root key using the first calculation manner, the second device may use the service parameters, the anonymous key and the root key to calculate the verification MAC, or the second device may also only use the anonymous key and the root key to calculate the verification MAC. In a case where the second device calculates the first RES based on the first random number and the root key using the first calculation manner, the second device may use the service parameters, the anonymous key and the root key to calculate the verification MAC, or the second device may also only use the anonymous key and the root key to calculate the verification MAC. The above processing methods are all within the protection scope of this embodiment.

Optionally, calculating, by the second device using the first calculation manner, the first RES based on the anonymous key and the root key may mean that: in a case where the second device calculates the verification MAC based on the first random number and the root key using the first calculation manner, the second device calculates the first RES based on the anonymous key and the root key using the first calculation manner.

For example, the verification MAC is calculated by the second device based on the first random number and the root key using the first calculation manner, and may be calculated using the following formula: MAC'=f2(Kr,RAND). The first RES is calculated by the second device based on the anonymous key and the root key using the first calculation manner, and may be calculated using the following formula: RES=f2(Kr, AK), where RES represents the first RES, and the meanings of other contents in the formula are the same as those in the previous embodiments and are not repeated here.

Further, the service parameters may be added to calculate the first RES. Calculating, by the second device using the first calculation manner, the first RES based on the anonymous key and the root key may include: calculating, by the second device using the first calculation manner, the first RES based on the service parameters, the anonymous key and the root key. For example, it may be represented using the following formula: RES=f2(Kr, AK, Service parameters). The meaning of each content in the formula is the same as that in the above embodiments, and will not be described in detail.

It should be understood that in a case where the second device calculates the first RES based on the service parameters, the anonymous key and the root key using the first calculation manner, the second device may use the service parameters, the first random number and the root key to calculate the verification MAC, or the second device may also only use the first random number and the root key to calculate the verification MAC. In a case where the second device calculates the first RES based on the anonymous key and the root key using the first calculation manner, the second device may use the service parameters, the first random number and the root key to calculate the verification MAC, or the second device may only use the first random number and the root key to calculate the verification MAC. The above processing methods are all within the protection scope of this embodiment.

On the first network device side, the manner of obtaining the first verification RES may include one of: receiving, by the first network device, the first verification RES from the second network device; or calculating, by the first network device using the first calculation manner, the first verification RES based on the root key and the authentication parameter. Calculating, by the first network device using the first calculation manner, the first verification RES based on the root key and the authentication parameter includes one of: calculating, by the first network device using the first calculation manner, the first verification RES based on the first random number and the root key; or calculating, by the first network device using the first calculation manner, the first verification RES based on the anonymous key and the root key.

The first verification RES may be a first expected response (XRES). In the following text, unless otherwise specified, the first verification RES and the first XRES have the same meaning and are not described repeatedly.

Calculating, by the first network device using the first calculation manner, the first verification RES based on the first random number and the root key may mean that: in a case where the first network device calculates the MAC based on the anonymous key and the root key using the first calculation manner, the first network device calculates the first verification RES based on the first random number and the root key using the first calculation manner.

For example, the MAC is calculate by the first network device based on the anonymous key and the root key using the first calculation manner, and may be calculated using the following formula: MAC=f2(Kr,AK). The first verification RES is calculate by the first network device based on the first random number and the root key using the first calculation manner, and may be calculated using the following formula: XRES=f2(Kr, RAND), where, XRES represents the first verification RES, and the meanings of other contents in the formula are the same as those in the previous embodiments and will not be repeated.

Further, the service parameters may be added to calculate the first verification RES. Calculating, by the first network device using the first calculation manner, the first verification RES based on the first random number and the root key may include: calculating, by the first network device using the first calculation manner, the first verification RES based on the service parameters, the first random number and the root key. For example, the first verification RES is calculated by the second device based on the service parameters, the first random number and the root key using the first calculation manner, and may be calculated using the following formula: XRES=f2(Kr, RAND, Service parameters). The meaning of each content in the formula is the same as that in the previous embodiments, and will not be repeated.

It should be understood that in a case where the first network device (or the second network device) calculates the first verification RES based on the service parameters, the first random number and the root key using the first calculation manner, the first network device (or the second network device) may use the service parameters, the anonymous key and the root key to calculate the MAC, or the first network device may also only use the anonymous key and the root key to calculate the MAC. In a case where the first network device (or the second network device) calculates the first verification RES based on the first random number and the root key using the first calculation manner, the first network device (or the second network device) may use the service parameters, the anonymous key and the root key to calculate the MAC, or the first network device (or the second network device) may only use the anonymous key and the root key to calculate the MAC. The above processing methods are all within the protection scope of this embodiment.

Calculating, by the first network device using the first calculation manner, the first verification RES based on the anonymous key and the root key may mean that: in a case where the first network device calculate the MAC based on the first random number and the root key using the first calculation manner, the first network device calculate the first verification RES based on the anonymous key and the root key using the first calculation manner.

For example, the MAC is calculated by the first network device based on the first random number and the root key using the first calculation manner, and may be calculated using the following formula: MAC=f2(Kr, RAND). The first verification RES is calculated by the first network device based on the anonymous key and the root key using the first calculation manner, and may be calculated using the following formula: XRES=f2(Kr, AK), where, XRES represents the first verification RES, and the meanings of other contents in the formula are the same as those in the previous embodiments and will not be repeated.

Further, the service parameters may be added to calculate the first verification RES. Calculating, by the first network device using the first calculation manner, the first verification RES based on the anonymous key and the root key may include: calculating, by the first network device using the first calculation manner, the first verification RES based on the service parameters, the anonymous key and the root key. For example, it may be represented using the following formula: XRES=f2(Kr, AK, Service parameters). The meaning of each content in the formula is the same as that in the above embodiments and will not be repeated.

It should be understood that in a case where the first network device (or the second network device) calculates the first verify RES based on the service parameters, the anonymous key and the root key using the first calculation manner, the first network device (or the second network device) may use the service parameters, the first random number and the root key to calculate the MAC, or the first network device (or the second network device) may also only use the first random number and the root key to calculate the MAC. In a case where the first network device (or the second network device) calculates the first verify RES based on the anonymous key and the root key using the first calculation manner, the first network device (or the second network device) may use the service parameters, the first random number and the root key to calculate the MAC, or the first network device (or the second network device) may also only use the first random number and the root key to calculate the MAC. The above processing methods are all within the protection scope of this embodiment.

Receiving, by the first network device, the first verification RES from the second network device may refer to: receiving, by the first network device, the first verification RES, the MAC and the authentication parameter from the second network device. In this case, the first network device may further receive the service parameters from the second network device. The description of the service parameters is the same as that in the above embodiments, and will not be repeated.

For example, the first network device may simultaneously receive the first verification RES, the MAC and the authentication parameter that are transmitted by the second network device. However, only the MAC and the authentication parameter are carried in the first message, and the first network device transmits the first message to the first device. Accordingly, after receiving the first message, the first device transmits the second message that carries the MAC and the authentication parameter in the first message to the second device. For another example, the first network device may simultaneously receive the first verification RES, the MAC, the authentication parameter and the service parameters that are transmitted by the second network device. However, only the MAC, the authentication parameter and the service parameters are carried in the first message, and the first network device transmits the first message to the first device. Correspondingly, after receiving the first message, the first device transmits the second message that carries the MAC, the authentication parameter and the service parameters in the first message to the second device. It should further be noted that if the first verification RES is obtained by the second network device, a specific manner in which the second network device calculates the first verification RES should be the same as the manner in which the first network device calculates the first verification RES in the above embodiments, which will not be repeated. In addition, the first message may further carry an identifier of the second device.

The parameters and specific calculation functions that are used by the second device to calculate the first RES should be the same as those used by the first network device (or the second network device) to calculate the first verification RES. For example, if the second device uses the second authentication function to calculate the first RES based on the service parameters, the anonymous key and the root key, the first network device (or the second network device) should also use the second authentication function to calculate the first verification RES based on the service parameters, the anonymous key and the root key. For another example, the second device uses the hash algorithm to calculate the first RES based on the first random number and the root key, and the first network device (or the second network device) should also use the hash algorithm to calculate the first verification RES based on the first random number and the root key.

In some possible examples, the third message carries the first RES, and the first message further carries the first verification RES.

In this case, the first device may, instead of the first network device, authenticate the second device. The processing by the first device after receiving the third message from the second device may include: determining, by the first device, that the authentication of the second device succeeds in a case the first RES is the same as the first verification RES. In this example, the manner in which the first network device obtains the first verification RES and the manner in which the second device obtains the first RES are the same as those in the above examples, and thus will not be repeated. Furthermore, the first device may further transmit a response message to the second device. For example, in a case where the first device determines that the authentication of the second device succeeds, the first device transmits a response message to the second device. The response message responds to the third message, and the response message is used to indicate that the core network side device has authenticated the second device.

In some possible examples, the third message carries the second RES.

In this case, the processing by the first device after receiving the third message from the second device may include: determining, by the first device, that the authentication of the second device succeeds in a case where the second verification RES is the same as the second RES. Furthermore, it may further include transmitting, by the first device, a response message to the second device. The response message is used to indicate that the authentication of the second device has succeeded.

Correspondingly, the processing by the second device may include: receiving, by the second device, a response message from the first device. The response message responds to the third message, and the response message is used to indicate that the authentication of the second device has succeeded.

For example, in an indirect mode, the second device is connected to the core network via a terminal device, and a first access network device corresponding to the terminal device. In this case, the first device is the terminal device. In addition, in a case where the first device is the terminal device, the first device may be a proxy UE or a relay UE, etc. In this example, the terminal device (such as UE) verifies the second RES, and determines that the authentication of the second device succeeds in a case where the second verification RES is the same as the second RES.

For example, in a direct mode, the second device is connected to the core network via a corresponding access network device. In this case, the first device is an access network device (for example, which may be an access network device corresponding to the second device). Alternatively, the first device may be a first core network device. For example, the first device may be at least one of AMF, SEAF, a core network element dedicated to AIoT (or IoT), or the like. In this example, the access network device (such as gNB) or the first core network device (such as the AMF, the SEAF, or the core network element dedicated to the AIoT) verifies the second RES, and determines that the authentication of the second device succeeds in a case where the second verification RES is the same as the second RES.

In addition, it may further include: determining, by the first device, that the authentication of the second device fails in a case where the second verification RES is different from the second RES, and then ending the processing or transmitting, by the first device, a notification of the authentication failure to the second device. The possible subsequent processing is not limited here.

A manner in which the second device calculates the second RES includes one of: calculating, by the second device using the first calculation manner, the second RES based on the anonymous key and the first key, the first key being related to the first device; calculating, by the second device using the first calculation manner, the second RES based on the first random number and the first key; or calculating, by the second device using the first calculation manner, the second RES based on the first RES and the first key.

The first key may be at least one of a first intermediate key calculated based on an identifier of the first device and a second random number, or a physical layer key. The physical layer key is a key shared between the second device and the first device.

The physical layer key may be a shared key that is generated between the second device and the first device through channel source characteristics of an air interface. This embodiment does not limit the specific generation method of the physical layer key. As long as it is the same key shared between the second device and the first device, it is within the protection scope of this embodiment.

The first intermediate key may be calculated in the following manner. The first intermediate key is calculated based on the identifier of the first device and the second random number using the second calculation manner; or the first intermediate key is calculated based on the identifier of the first device, the second random number and the anonymous key using the second calculation manner.

The second calculation manner may at least include a key derivation function (KEF), and further, the second calculation manner may further include one of XOR operation, and concatenation operation. It should be understood that this is only an exemplary description. In actual processing, the second calculation manner may also be other calculation manner, which is not exhaustive in this embodiment.

The first device may be the above terminal device, and correspondingly, the identifier of the first device may be a UE ID. The first device may be the first access network device, and correspondingly, the identifier of the first device may be expressed as a gNB ID (or an eNB ID, or an ID of other possible types of access network devices). The first device may be a first core network device, and correspondingly, the identifier of the first device may be expressed as an identifier of a first core network element, an intermediate network element identifier, or a core network element identifier, etc.

Taking the first device as the first core network device as an example, calculating, using the second calculation manner, the first intermediate key based on the identifier of the first device and the second random number may be expressed as: Km=KDF (Intermediate network element identifier, Second random number). Alternatively, calculating, using the second calculation manner, the first intermediate key based on the identifier of the first device, the second random number and the anonymous key may be expressed as: Km=KDF(AK, Intermediate network element identifier, Second random number), where Km represents the first intermediate key and AK represents the anonymous key. If the first device is a terminal device, the calculation formula for the first intermediate key may be adaptively replaced with Km=KDF(UE ID, Second random number) or Km=KDF(AK, UE ID, Second random number). The first device being a first access network device may also be adaptively replaced, which is not listed one by one here.

In addition, the second random number may be transmitted from the first device to the second device. This embodiment does not limit the generation method and transmitting time of the second random number. For example, the second random number may be carried in the second message. As long as it is before the calculation of the second RES is executed, it is within the protection scope of this embodiment and is not exhaustive here.

For example, the first calculation manner is the second authentication function, and calculating, by the second device using the first calculation manner, the second RES based on the anonymous key and the physical layer key may be expressed as RES'= f2 (Physical layer key, AK), where RES' represents the second RES, and the meanings of other contents in the formula are the same as those in the previous embodiments and will not be repeated. Alternatively, calculating, by the second device using the first calculation manner, the second RES based on the anonymous key and the first intermediate key may be expressed as RES'= f2(Km, AK). The meaning of each content in the formula is the same as that in the previous embodiments and will not be repeated.

For example, the first calculation manner is the second authentication function, and calculating, by the second device using the first calculation manner, the second RES based on the first random number and the physical layer key may be expressed as RES'= f2 (Physical layer key, RAND), where RES' represents the second RES, and the meanings of other contents in the formula are the same as those in the previous embodiments and will not be repeated. Alternatively, calculating, by the second device using the first calculation manner, the second RES based on the anonymous key and the first intermediate key may be expressed as RES'= f2(Km, RAND). The meaning of each content in the formula is the same as that in the previous embodiments and will not be repeated.

For example, the first calculation manner is the second authentication function, and calculating, by the second device using the first calculation manner, the second RES based on the first RES and the physical layer key may be expressed as RES'= f2 (Physical layer key, RES), where RES' represents the second RES, RES represents the first RES, and the meanings of other contents in the formula are the same as those in the previous embodiments and will not be repeated. Alternatively, calculating, by the second device using the first calculation manner, the second RES based on the first RES and the first intermediate key may be expressed as RES'= f2(Km, RES). The meaning of each content in the formula is the same as that in the previous embodiments and is not repeated here.

A manner in which the first device calculates the second verification RES includes one of: calculating, by the first device using the first calculation manner, the second verification RES based on the anonymous key and the first key; calculating, by the first device using the first calculation manner, the second verification RES based on the first random number and the first key; or calculating, by the first device using the first calculation manner, the second verification RES based on the first verification RES and the first key. For example, the second verification RES may also be the second XRES. If there is no special explanation below, the second verification RES and the second XRES have the same meaning and will not be explained repeatedly. The description of the first key is the same as that in the above embodiments and will not be repeated here.

Optionally, the authentication parameter received by the first device may include the anonymous key or the first random number. If the authentication parameter includes the anonymous key, the first device may perform the processing of calculating the second verification RES based on the anonymous key and the first key using the first calculation manner. If the authentication parameter includes the first random number, the first device calculates the second verification RES based on the first random number and the first key using the first calculation manner.

Optionally, the first verification RES may be transmitted from the first network device to the first device. For example, the first message may further carry the first verification RES. If the first message carries the first verification RES, the first device may choose to use the first calculation manner to calculate the second verification RES based on the first verification RES and the first key. Alternatively, if the first message carries the first verification RES, the first device may also use the anonymous key or the first random number included in the authentication parameter to calculate the second verification RES, which are all within the protection scope of this embodiment, and all possible situations are not exhaustive here.

Optionally, the first device may further obtain the root key, and the first device may perform an XOR operation on the anonymous key contained in the authentication parameter and the root key to obtain the first random number; or, the first device may perform an XOR operation on the first random number contained in the authentication parameters and the root key to obtain the anonymous key; or, the first device may generate the first verification RES based on the root key and authentication parameter using the same manner as the second device. In this case, the first device may generate the second verification RES in any of the above methods.

For example, the first calculation manner is the second authentication function, and the first device calculates the second verification RES based on the anonymous key and the first key using the first calculation manner. If the first key is the physical layer key, it may be expressed as XRES'= f2(Physical layer key, AK), where XRES' represents the second verification RES, and the meanings of other contents in the formula are the same as those in the previous embodiments and will not be repeated. If the first key is the first intermediate key, it may be expressed as XRES'= f2(Km, AK).

For example, the first calculation manner is the second authentication function, and the first device calculates the second verification RES based on the first random number and the first key using the first calculation manner. If the first key is the physical layer key, it may be expressed as XRES'= f2(Physical layer key, RAND), where XRES' represents the second verification RES, and the meanings of other contents in the formula are the same as those in the previous embodiments and will not be repeated. If the first key is the first intermediate key, it may be expressed as XRES'= f2(Km, RAND).

For example, the first calculation manner is the second authentication function, and the first device calculates the second verification RES based on the first verification RES and the first key using the first calculation manner. If the first key is the physical layer key, it may be expressed as XRES'= f2(Physical layer key, XRES), where XRES' represents the second verification RES, XRES represents the first verification RES, and the meanings of other contents in the formula are the same as those in the above embodiments and will not be repeated. If the first key is the first intermediate key, it may be expressed as XRES'= f2(Km, XRES).

The parameter (or parameter type) and the specific calculation function used by the second device to calculate the second RES should be the same as those used by the first device to calculate the second verification RES. For example, if the second device uses the second authentication function to calculate the second RES based on the anonymous key and the physical layer key, the first device should also use the second authentication function to calculate the second verification RES based on the anonymous key and the physical layer key. For another example, if the second device uses the hash algorithm to calculate the second RES based on the first RES and the physical layer key, the first device should also use the hash algorithm to calculate the second verification RES based on the first verification RES and the physical layer key.

In some other possible examples, the third message carries the first RES and the second RES.

In this case, the processing of the first device may include: transmitting, by the first device, a fourth message to the first network device, the fourth message carrying the first RES; and determining, by the first device, that authentication of the second device succeeds in a case where the second verification RES is the same as the second RES. In addition, the method may further include: determining, by the first device, that the authentication of the second device does not succeed (or fails) in a case the second verification RES is different from the second RES.

The processing by the first network device may include: determining, by the first network device, that the authentication of the second device succeeds in a case where the first RES is the same as the first verification RES. Furthermore, the method may further include: transmitting, by the first network device, a notification to the first device indicating that the authentication of the second device has succeeded. In addition, the processing by the first network device may further include: determining, by the first network device, that the authentication of the second device does not succeed (or fails) in a case where the first RES is different from the first verification RES. In a case where the first network device determines that the authentication of the second device does not succeed (or fails), the first network device may end the processing, or the first network device transmits, to the first device, a notification that the authentication of the second device does not succeed (or fails). The possible subsequent processing is not limited here.

The processing of the first device may further include one of: in a case where the first device determines that the authentication of the second device succeeds, and the first device receives a notification from the first network device that the authentication of the second device has succeeded (or passed), transmitting a response message to the second device, the response message being used to indicate that the authentication of the second device has succeeded; in a case where the first device determines that the authentication of the second device does not succeeds (or fails), and/or the first device receives a notification from the first network device that the authentication of the second device has not succeeded (or failed), transmitting a response message to the second device, the response message being used to indicate that the authentication of the second device has not succeeded (or failed). Furthermore, the response message may further carry content that the first device fails to authenticate the second device and/or the core network side device fails to authenticate the second device and other contents, which are not limited here.

In this example, the manner in which the second device calculates the first RES and the second RES, the manner in which the first device obtains the second verification RES, and the manner in which the first network device obtains the first verification RES are the same as those in the previous embodiments, and are not described repeatedly.

With respect to the above embodiments, it should be further noted that when the second device, the first device and the first network device perform the above authentication method, only the second device may authenticate the core network side based on the verification MAC and the MAC. After the second device authenticates the core network side based on the verification MAC and MAC, the first network device may further authenticate the second device based on the first RES and the first verification RES, and/or the first device may authenticate the second device based on the second RES and the second verification RES. The above various possible solutions are all within the protection scope of this embodiment.

In addition, since AK needs to be transmitted, the MAC and the XRES cannot be generated using algorithms that may be reversed, such as XOR. Since Kr is a unique and non-repetitive key shared only between each second device and the core network side device, an attacker cannot obtain RAND or Kr even if he intercepts AK. Therefore, the generation and transmission of AK is safe and has characteristics of low power consumption. The transmission of MAC is also safe. Moreover, since the MAC is generated based on Kr, and only the AUSF has Kr, verifying the MAC may enable verification of the identity of the core network side device. Furthermore, since the RES is generated based on Kr, and only the second device and the core network side device have Kr, the core network side device may verify the identity of the second device by verifying the RES. Furthermore, since RES' (i.e., the second RES) and XRES' (i.e., the second verification RES) are generated based on the physical layer key, and only the second device and the first device have the shared physical layer key, the first device may verify the identity of the second device by verifying RES'.

In some possible implementations, the second device and the first device perform key agreement.

The processing of the second device further includes: calculating, by the second device, an integrity protection key and/or an encryption key. The integrity protection key is related to a key generation parameter and a third random number, the encryption key is related to the key generation parameter and a fourth random number, the key generation parameter includes an anonymous key and/or a first random number, the integrity protection key is used to calculate an integrity verification code, and the encryption key is used to encrypt transmitted data and/or decrypt received data.

The processing of the first device may further include: calculating, by the first device, an integrity protection key and/or an encryption key. The integrity protection key is related to a key generation parameter and a third random number, the encryption key is related to the key generation parameter and a fourth random number, the key generation parameter includes an anonymous key and/or a first random number, the integrity protection key is used to calculate an integrity verification code, and the encryption key is used to encrypt transmitted data and/or decrypt received data.

For example, the key generation parameter may be directly extracted from the authentication parameter. For example, if the authentication parameter includes the anonymous key, the key generation parameter is the anonymous key included in the authentication parameter; or if the authentication parameter includes the first random number, the key generation parameter is the first random number included in the authentication parameters.

For example, the key generation parameter is different from the authentication parameter, and the key generation parameter may be obtained when the second device performs any one of the calculation of the verification MAC, the calculation of the first RES, and the calculation of the second RES based on the authentication parameter. For example, the authentication parameter includes the anonymous key, and when the second device performs any one of the calculation of the verification MAC, the calculation of the first RES, and the calculation of the second RES, the first random number is obtained. The second device uses the first random number as the key generation parameter. For another example, the authentication parameter includes the first random number, and when the second device performs any one of the calculation of the verification MAC, the calculation of the first RES, and the calculation of the second RES, the anonymous key is obtained. The second device uses the anonymous key as the key generation parameter.

In some possible examples, the second device and the first device perform agreement on the integrity protection key.

The integrity protection key is used to protect the integrity of the second device and a network entity (such as the first device). The network entity may include but is not limited to at least one of: UE, or other network devices. The other network devices may include: an access point (AP), a small cell, next generation NodeB (gNB), a customer premises equipment (CPE), an AMF, a user plane function (UPF), multi-access edge computing (MEC), etc. Since the second device side and the first device side need to generate their own integrity protection keys for integrity protection processing respectively, the parameters and calculation manners used by the second device and the first device to generate their own integrity protection keys should be the same. Therefore, in this example, the second device and the first device are referred to as electronic devices to describe a method of generating the integrity protection keys. It should be noted that the electronic device in this example may be either the second device or the first device, which will not be repeated.

The calculation of the integrity protection key includes one of, includes one of: calculating, using a second calculation manner, the integrity protection key based on the anonymous key and a third random number; calculating, using the second calculation manner, the integrity protection key based on the first random number and the third random number; calculating, using the second calculation manner, the integrity protection key based on the anonymous key, the first key and the third random number; calculating, using the second calculation manner, the integrity protection key based on the first random number, the first key and the third random number; calculating, using the second calculation manner, the integrity protection key based on a second intermediate key and the third random number, the second intermediate key being related to the key generation parameter; or calculating, using the second calculation manner, the integrity protection key based on a third intermediate key and the third random number, the third intermediate key being related to the root key and the key generation parameter.

The method further includes at least one of: calculating, using a third calculation manner, the second intermediate key based on the anonymous key; calculating, using the third calculation manner, the second intermediate key based on the first random number; calculating, using the third calculation manner, the second intermediate key based on the anonymous key and the first key; calculating, using the third calculation manner, the second intermediate key based on the first random number and the first key; calculating, using the third calculation manner, the third intermediate key based on the root key and the first random number; calculating, using the third calculation manner, a fourth intermediate key based on the root key and the first random number, and calculating, using the second calculation manner, the third intermediate key based on the fourth intermediate key; calculating, using the third calculation manner, the third intermediate key based on the root key, the first key and the first random number; or calculating, using the third calculation manner, the fourth intermediate key based on the root key and the first random number, and calculating, using the second calculation manner, the third intermediate key based on the fourth intermediate key and the first key.

The third calculation manner includes one of a third key generation function, XOR operation, concatenation operation, and KDF.

Optionally, the integrity protection key is calculated based on the anonymous key and the third random number using the second calculation manner. For example, it may be expressed as $KI = AK \oplus NONCE1$ , where KI represents the integrity protection key, NONCE1 represents the third random number, and AK represents the anonymous key. Alternatively, it may be expressed as $K1 = KDF (AK, NONCE1)$ , where KDF() is a key derivation function, and the meanings of other contents in the formula are the same as those in the above embodiments, and will not be repeated. Alternatively, it may be expressed as $K1 = AK \| NONCE1$ , where "$\|$" is concatenation operation, and the meanings of other contents in the formula are the same as those in the above embodiments, and will not be repeated.

Optionally, the second calculation manner is used to calculate the integrity protection key based on the anonymous key, the first key and the third random number.

For example, the first key specifically may be a physical layer key, and the above processing may be expressed as $KI = physical\ layer\ key \oplus AK \oplus NONCE1$, where KI represents the integrity protection key, NONCE1 represents the third random number, AK represents the anonymous key, and the meanings of other contents in the formula are the same as those of the above embodiments and will not be repeated. Alternatively, it may be expressed as $K1 = KDF(Physical\ layer\ key, AK, NONCE1)$, where KDF() is a key derivation function, and the meanings of other contents in the formula are the same as those in the above embodiments and will not be repeated. Alternatively, it may be expressed as $KI = Physical\ layer\ key \| AK \| NONCE1$, where "$\|$" represents concatenation operation, and the meanings of other contents in the formula are the same as those in the above embodiments and will not be repeated.

For example, the first key may specifically be the first intermediate key. The method for generating the first intermediate key has been described in detail in the above embodiments and will not be repeated. Correspondingly, the above processing may be expressed as $KI = Km \oplus AK \oplus NONCE1$ , where KI represents the integrity protection key, NONCE1 represents the third random number, AK represents the anonymous key, and Km is the first intermediate key. Alternatively, it may be expressed as $K1 = KDF(Km, AK, NONCE1)$ , where KDF() is the key derivation function, and the meanings of other contents in the formula are the same as those in the above embodiments and will not be repeated. Alternatively, it may be expressed as $KI = Km \| AK \| NONCE1$, where "$\|$" represents concatenation operation, and the meanings of other contents in the formula are the same as those in the above embodiments and will not be repeated.

Optionally, the second device calculates the integrity protection key based on the first random number and the third random number using the second calculation manner. For example, $KI = RAND \oplus NONCE1$. Other calculation formulas may also be replaced in similar manner, which will not be described here one by one.

Optionally, the second calculation manner is used to calculate the integrity protection key based on the first random number, the first key and the third random number.

For example, the first key is the physical layer key, and the AK in the calculation formulas for KI may be replaced with the first random number RAND. For example, $KI = Physical\ layer\ key \oplus RAND \oplus NONCE1$. Other calculation formulas may also be replaced in a similar manner, which will not be described one by one here.

For example, the first key is the first intermediate key, and the AK in the calculation formulas for KI may be replaced with the first random number RAND. For example, $KI = Km \oplus RAND \oplus NONCE1$. Other calculation formulas may also be replaced in a similar manner, which will not be described one by one here.

Optionally, the second device calculates the integrity protection key based on the second intermediate key and the third random number using the second calculation manner. Here, the second intermediate key is generated in one of the following ways: calculating, using the third calculation manner, the second intermediate key based on the anonymous key; calculating, using the third calculation manner, the second intermediate key based on the first random number; calculating, using the third calculation manner, the second intermediate key based on the anonymous key and the first key; calculating, using the third calculation manner, the second intermediate key based on the first random number and the first key.

It should be understood that, in some possible examples, the second intermediate key may also be referred to as an authentication key.

In a possible example, the second intermediate key is calculated based on the anonymous key using the third calculation manner, which may be calculated using the following formula: $Ka = f3 (AK)$, where Ka represents the second intermediate key (or called the authentication key). In some other possible examples, the second intermediate key is calculated based on the first random number using the third calculation manner, which may be expressed as $Ka = f3 (RAND)$. It should be understood that the above is only an exemplary description. In actual processing, the second intermediate key may also be calculated based on the anonymous key and the first random number using the third calculation manner, such as Ka=AK‖RAND, which is not exhaustive here.

In a possible example, the first key is the physical layer key. The second intermediate key is calculated based on the physical layer key and the anonymous key using the third calculation manner, and may be calculated using the following formula: $Ka = f3 (AK, Physical\ layer\ key)$, where Ka represents the second intermediate key (or the authentication key), f3() represents the third key generation function, and AK represents the anonymous key. f3() in the calculation formula for Ka may also be replaced with XOR operation. For example, it is expressed as $Ka = AK \oplus Physical\ layer\ key$. Alternatively, f3() or XOR operation may be replaced with concatenation operation "‖". For example, the above formula may be expressed as $Ka = AK \parallel Physical\ layer\ key$. Alternatively, the second intermediate key is calculate based on the physical layer key and the first random number using the third calculation manner. The calculation formula in this example may be obtained by replacing the anonymous key (i.e., AK) in the calculation formula of the above example with the first random number (i.e., RAND). For example, $Ka = f3 (RAND, Physical\ layer\ key)$. Other possible calculation manners are the same as those in the above examples and will not be described one by one. Since the physical layer key is a shared key between the second device and the first device, and has Shannon's information theory security, the second intermediate key (or the authentication key) is safe.

In a possible example, the first key is the first intermediate key. The second intermediate key is calculated based on the first intermediate key and the anonymous key using the third calculation manner, and may be calculated using the following formula: $Ka = f3 (AK, Km)$. The second intermediate key is calculated based on the first intermediate key and the first random number using the third calculation manner. The calculation formula of this example may replace the anonymous key (i.e., AK) in the calculation formula of the above example with the first random number (i.e., RAND). For example, $Ka = f3 (RAND, Km)$. Other possible calculation manners are the same as those in the above examples and will not be described one by one.

In each of the above examples of calculating the second intermediate key, a fifth random number may be added. For example, the second intermediate key is calculated based on the physical layer key, the fifth random number and the anonymous key using the third calculation manner. The above processing may be expressed as $Ka = f3 (AK, Physical\ layer\ key, NONOE3)$, where NONOE3 represents the fifth random number. The fifth random number may be configured or transmitted by the first network device for the second device and/or the first device, which in not limited in this embodiment. For another example, the second intermediate key is calculated based on the anonymous key and the fifth random number using the third calculation manner, and may be calculated using the following formula: $Ka = f3 (AK, NONCE3)$. The processing methods after adding the fifth random number in the above examples are not exhaustive here.

The integrity protection key is calculated based on the second intermediate key and the third random number using the second calculation manner, which may be expressed by the following formula: $KI = Ka \oplus NONCE1$, where KI represents the integrity protection key, Ka represents the second intermediate key, and NONCE1 represents the third random number. For example, the XOR operation in the calculation formula for KI may also be replaced with concatenation operation "‖". For example, the above formula may be expressed as $KI = Ka \parallel NONCE1$. For example, the calculation formula of the KI may also use KDF. For example, the above formula may be expressed as $KI = KDF(Ka, NONCE1)$.

Optionally, the second device calculates the integrity protection key based on the third intermediate key and the third random number using the second calculation manner.

In this case, the calculation manner of the third intermediate key may include one of: calculating, using the third calculation manner, the third intermediate key based on the root key and the first random number; calculating, using the third calculation manner, the third intermediate key based on the root key and the anonymous key; calculating, using the third calculation manner, the third intermediate key based on the root key, the first key and the first random number; calculating, using the third calculation manner, the fourth intermediate key based on the root key and the first random number, and calculating, using the second calculation manner, the third intermediate key based on the fourth intermediate key; or calculating, using the third calculation manner, the fourth intermediate key based on the root key and the first random number, and calculating, using the second calculation manner, the third intermediate key based on the fourth intermediate key and the first key.

In the process of calculating the third intermediate key, the difference from the above examples is that the root key is added to calculate the third intermediate key in this example.

In a possible example, the first key is the physical layer key. Correspondingly, the third intermediate key is calculated based on the physical layer key, the root key and the first random number using the third calculation manner, and may be calculated using the following formula: $Ka' = f3\ (Kr, RAND, Physical\ layer\ key)$, where Ka' represents the third intermediate key. The meanings of other contents in the above formula is the same as those in the previous embodiments and will not be repeated. For example, f3() in the calculation formula for the third intermediate key may also be replaced with the XOR operation. For example, it is expressed as $Ka' = Kr \oplus RAND \oplus Physical\ layer\ key.$ Alternatively, f3() or XOR operation in the calculation formula for the third intermediate key may also be replaced with concatenation calculation "∥". For example, the above formula may be expressed as $Ka' = Kr \parallel RAND \parallel Physical\ layer\ key.$

Alternatively, if the first key is the first intermediate key, the third intermediate key is calculated based on the first intermediate key, the root key and the first random number using the third calculation manner, and may be calculated using the following formula: $Ka' = f3\ (Kr, RAND, Km)$. The meaning of each content in the above formula is the same as that in the previous embodiments and will not be repeated. For example, f3() in the calculation formula for the third intermediate key may also be replaced with XOR operation; or, f3() or XOR operation may be replaced with concatenation operation "∥", which is not exhaustive. It should be understood that Ka' is used to represent the third intermediate key in this example in order to distinguish it from Ka that represents the second intermediate key in the above embodiments. In some other possible examples, Ka' in the above formula may also be directly expressed as Ka, which is not exhaustive here.

Alternatively, the third intermediate key is calculated based on the root key and the first random number using the third calculation manner, and may be calculated using the following formula: $Ka' = f3\ (Kr, RAND)$. f3() in the calculation formula for the third intermediate key may also be replaced with other manners such as XOR operation, concatenation operation, which are not exhaustive here.

Alternatively, the third intermediate key is calculated based on the root key and the anonymous key using the third calculation manner, and may be calculated using the following formula: $Ka' = f3\ (Kr, AK)$. The meaning of each content in the above formula is the same as that in the previous embodiments and will not be repeated. For example, f3() in the calculation formula for the third intermediate key may also be replaced with XOR operation; or, f3() or XOR operation may be replaced with concatenation calculation "∥", which is not exhaustive. It should be understood that Ka' is used to represent the third intermediate key in this example in order to distinguish it from Ka that represents the second intermediate key in the above embodiments. In some other possible examples, Ka' in the above formula may also be directly expressed as Ka, which is not exhaustive here.

Correspondingly, the second device calculates the integrity protection key based on the third intermediate key and the third random number using the second calculation manner, which may be expressed as: $KI = Ka' \oplus NONCE1$. Where, KI represents the integrity protection key, NONCE1 represents the third random number, and the meanings of other contents in the formula are the same as those in the above embodiments and are not repeated. The XOR operation in the above formula may also be replaced with concatenation operation or KDF operation, which will not be described here one by one.

In yet another possible example, the fourth intermediate key is calculated based on the root key and the first random number using the third calculation manner.

The fourth intermediate key is calculated based on the root key and the first random number using the third calculation manner, which may be expressed as $Ka'' = Kr \oplus RAND$, where Ka'' represents the fourth intermediate key, and the meanings of other contents in the formula are the same as those of the previous embodiments and will not be repeated. It should be understood that Ka'' is used to represent the fourth intermediate key in this example in order to distinguish it from Ka that represents the second intermediate key and Ka' that represents the third intermediate key in the above embodiments. In some other possible examples, Ka'' in the above formula may also be directly expressed as Ka, which is not exhaustive here. In addition, the XOR operation in the above formula may also be replaced with KDF or concatenation operation, which will not be described here one by one.

For example, the first key is the physical layer key, and the third intermediate key is calculated based on the fourth intermediate key and the physical layer key using the second calculation manner, which may be expressed as $Kb = f2(Physical\ layer\ key,\ Ka'')$, where kb is the third intermediate key. The meanings of other contents in the formula are the same as those in the previous embodiments and will not be repeated.

For example, the first key is the first intermediate key, and the third intermediate key is calculated based on the fourth intermediate key and the physical layer key using the second calculation manner, which may be expressed as $Kb = f2(Km, Ka'')$. The meanings of the contents in this formula are the same as those in the previous embodiments and will not be repeated. f2() may also be replaced with other calculation manners of the second calculation manner, which will not be described one by one here.

The third intermediate key is calculated based on the fourth intermediate key using the second calculation manner, which may be expressed as: $Kb = f2(Ka'')$. f2() in the above examples may also be replaced with other calculation manners of the second calculation manner, which will not be described one by one here.

Correspondingly, the integrity protection key is calculated based on the third intermediate key and the third random number using the second calculation manner, which may be expressed as $KI = Kb \oplus NONCE1$. Where, KI represents the integrity protection key, NONCE1 represents the third random number, and the meanings of other contents in the formula are the same as those in the above embodiments and are not repeated here. The XOR operation in the above formula may also be replaced with concatenation operation or KDF operation, which will not be described here one by one. In addition, kb is used to represent the third intermediate key in this embodiment in order to distinguish it from Ka' that represents the third intermediate key in the above embodiments. In actual processing, $Ka''$ and kb may also be replaced with alternative representations. As long as the calculation manner is the calculation manner provided in this example, it is within the protection scope of this embodiment.

It should be noted that the above is an exemplary description of generating the integrity protection key, with the electronic device as the executing body. In a case where the above electronic device is the second device, any one or more of the processes of generating the integrity protection key may be performed, and details will not be given here. In a case where the electronic device is the first device, if the first device may obtain the root key, the first device may perform the processing of generating the third intermediate key and generating the fourth intermediate key. Furthermore, since the first device has the physical layer key, it is able to perform the process of generating the second intermediate key.

In some possible examples, the first device may further receive at least one of a second intermediate key, a third intermediate key or a fourth intermediate key that are transmitted by the first network device. That is, the first message further carries at least one of the second intermediate key, the third intermediate key or the fourth intermediate key.

The first message further carries at least one of the second intermediate key, the third intermediate key, or the fourth intermediate key. The method further includes one of: receiving, by the first network device, at least one of the second intermediate key, the third intermediate key or the fourth intermediate key that are transmitted by the second network device; calculating, by the first network device using the third calculation manner, the third intermediate key based on a physical layer key, the root key and the first random number, the physical layer key being a key shared between the second device and the first device; calculating, by the first network device using the third calculation manner, the fourth intermediate key based on the root key and the first random number; calculating, by the first network device using the second calculation manner, the third intermediate key based on the fourth intermediate key and the physical layer key; calculating, by the first network device using the third calculation manner, the second intermediate key based on the physical layer key and the anonymous key; or calculating, by the first network device using the third calculation manner, the second intermediate key based on the physical layer key and the first random number.

The specific processing of the first network device generating the second intermediate key, the third intermediate key, and the fourth intermediate key is the same as that in the above embodiments and will not be described repeatedly. It should be noted that the first message may carry only the third intermediate key, only the fourth intermediate key, the third intermediate key and the fourth intermediate key, or all of the above keys, which is not limited in this embodiment.

The first network device receives at least one of the second intermediate key, the third intermediate key, or the fourth intermediate key that are transmitted by the second network device, which may mean that the first network device directly obtains at least one of the second intermediate key, the third intermediate key, or the fourth intermediate key from the second network device. The specific processing of the second network device generating each intermediate key is the same as that in the above embodiments and will not be described repeatedly.

Regarding the processing of generating the integrity protection key, it should further be noted that the second device and the first device need to use the same parameters and the same calculation formula to calculate their respective integrity protection keys. For example, both use the physical layer key, the anonymous key and the third random number to perform the XOR operation to obtain their respective integrity protection keys.

In addition, the above is only an exemplary description. When the integrity protection key is actually generated, other parameters may be added, such as the identifier of the second device. All possible parameters are not exhaustive here.

In the above example, the physical layer key is used. The physical layer key is the shared key that is generated between the second device and the first device through the channel source characteristics of the air interface, and has Shannon's information theory security. Therefore, the third random number (i.e., NONCE1) transmitted is safe, and the integrity protection key generated using the third random number and the physical layer key is also safe. In addition, since the physical layer key does not require cryptographic calculations, it has a characteristic of low power consumption and is more suitable for use in AIoT devices. Since the physical layer key is the shared key between the second device and the first device, only the specific first device may obtain the correct integrity protection key to verify the message integrity. An attacker cannot obtain the integrity protection key even if he obtains the third random number. Therefore, the integrity protection key is safe.

In some possible implementations, the second device and the first device perform an encryption key agreement.

The second device side and the first device side need to generate their own encryption keys respectively to encrypt data transmitted between the two. The parameters and calculation manners used by the second device and the first device to generate their own encryption keys should be the same. Therefore, in this example, the second device and the first device are referred to as electronic devices to describe the method of generating the encryption keys. It should be noted that the electronic device in this example may be either the second device or the first device, which will not be repeated.

In this implementation, the detailed description of the key generation parameter is the same as that in the above embodiments and will not be repeated.

The calculation of the encryption key may include one of: calculating, using the second calculation manner, the encryption key based on the fourth random number and the anonymous key; calculating, using the second calculation manner, the encryption key based on the first random number and the fourth random number; calculating, using the second calculation manner, the encryption key based on the anonymous key, the first key and the fourth random number; calculating, using the second calculation manner, the encryption key based on the first random number, the first key and the fourth random number; calculating, using the second calculation manner, the encryption key based on a second intermediate key and the fourth random number, the second intermediate key being related to the key generation parameter; or calculating, using the second calculation manner, the encryption key based on a third intermediate key and the fourth random number, the third intermediate key being related to the root key and the key generation parameter.

The calculation manners of the second intermediate key and the third intermediate key are the same as those in the above embodiments, and thus will not be repeated in this embodiment.

Optionally, the encryption key is calculated based on the anonymous key and the fourth random number using the second calculation manner. For example, it may be expressed as $Kc = AK \oplus NONCE2$ , where Kc represents the encryption key, NONCE2 represents the fourth random number, and AK represents the anonymous key. Alternatively, it may be expressed as $Kc = KDF(AK,NONCE2)$, where KDF() is the key derivation function, and the meanings of other contents in the formula are the same as those in the above embodiments, and will not be repeated. Alternatively, it may be expressed as $Kc = AK \parallel NONCE2$, where "$\parallel$" is concatenation operation, and the meanings of other contents in the formula are the same as those in the above embodiments, and will not be repeated.

Optionally, the encryption key is calculated based on the anonymous key, the first key and the fourth random number using the second calculation manner.

For example, the first key may specifically be the physical layer key. The encryption key is calculated based on the fourth random number, the physical layer key and the anonymous key using the second calculation manner, which may be expressed as $Kc = Physical\ layer\ key \oplus AK \oplus NONCE2$ , where Kc represents the encryption key, NONCE2 represents the fourth random number, AK represents the anonymous key, and the meanings of other contents in the formula are the same as those in the above embodiments and will not be repeated. For another example, the encryption key is calculated based on the fourth random number, the physical layer key and the anonymous key using the second calculation manner, which may be expressed as $Kc = KDF(Physical\ layer\ key,\ AK,\ NONCE2)$, where KDF() is a key derivation function, and the meanings of other contents in the formula are the same as those in the previous embodiments and will not be repeated. For yet another example, the integrity protection key is calculated based on the physical layer key, the anonymous key and the third random number using the second calculation manner, which may be expressed as $Kc = Physical\ layer\ key \parallel AK \parallel NONCE2$ , where "$\parallel$" is concatenation operation, and the meanings of other contents in the formula are the same as those in the previous embodiments and will not be repeated.

For example, the first key may specifically be the first intermediate key. The encryption key is calculated based on the fourth random number, the first intermediate key and the anonymous key using the second calculation manner, which may be expressed as $Kc = Km \oplus AK \oplus NONCE2$ , where Kc represents the encryption key, NONCE2 represents the fourth random number, AK represents the anonymous key, and Km represents the first intermediate key. Alternatively, it may be expressed as $Kc = KDF(Km,\ AK,\ NONCE2)$, where KDF() is a key derivation function, and the meanings of other contents in the formula are the same as those in the above embodiments and will not be repeated. Alternatively, it may be expressed as $Kc = Km \parallel AK \parallel NONCE2,$ where "$\parallel$" represents concatenation operation, and the meanings of other contents in the formula are the same as those in the above embodiments and will not be repeated.

Optionally, the encryption key is calculated based on the first key, the first random number and the fourth random number using the second calculation manner. That is, AK in the calculation formulas of Kc may be replaced with the first random number RAND, and other calculation formulas may also be replaced in a similar manner, which will not be described one by one here.

Optionally, the encryption key is calculated based on the second intermediate key and the fourth random number using the second calculation manner, and the second intermediate key is related to the physical layer key and the key generation parameter. Here, the method of generating the second intermediate key is the same as that in the above embodiments and will not be described in detail. The second intermediate key may be expressed as Ka.

The second device calculates the encryption key based on the second intermediate key and the fourth random number using the second calculation manner, which may be expressed by the following formula: $Kc = Ka \oplus NONCE2$, where Kc represents the encryption key, Ka represents the second intermediate key, and NONCE2 represents the fourth random number. For example, the XOR operation in the calculation formula may also be replaced with the concatenation operation "$\parallel$", KDF, etc., which will not be repeated here.

Optionally, the second device calculates the encryption key based on the third intermediate key and the fourth random number using the second calculation manner.

In a possible example, the encryption key is calculated based on the third intermediate key and the fourth random number using the second calculation manner, which may be expressed as $Kc = Ka' \oplus NONCE2$. Where, Kc represents the encryption key, NONCE2 represents the fourth random number, and the meanings of other contents in the formula are the same as those in the above embodiments and are not exhaustive herein. The XOR operation in the above formula may also be replaced with the concatenation operation or KDF operation, which will not be described here one by one.

In another possible example, the encryption key is calculated based on the third intermediate key and the fourth random number using the second calculation manner, which may be expressed as $Kc = Kb \oplus NONCE2$. The meaning of each content in this formula is the same as that in the above embodiments and will not be described in detail. The XOR operation in the above formula may also be replaced with the concatenation operation or KDF operation, which will not be described here one by one. In the above examples, the calculation manners and generation parameters of Ka' and Kb are the same as those in the previous embodiment, and thus are not repeated.

Optionally, the encryption key is calculated based on the first key, the third intermediate key and the third random number using the second calculation manner. Here, the third intermediate key may be related to the root key.

For example, the first network device may perform agreement with the second device in advance, generate a pairwise master key (PMK) as the shared key based on the shared root key when the two devices authenticate each other, and use the shared key as the third intermediate key. Then, the first network device may transmit the third intermediate key to the first device via the first message, so that the second device and the first device share the third intermediate key.

For example, the first key is the physical layer key, and the encryption key is calculated based on the first key, the third intermediate key and the third random number using the second calculation manner, which may be expressed as $Ks = Physical\ layer\ key \oplus PMK \oplus NONCE1$, where Ks represents the encryption key, NONCE1 represents the third random number, and PMK represents the third intermediate key. For another example, the following formula may be used for calculation: $Ks = KDF(Physical\ layer\ key, PMK, NONCE1)$, where KDF() is a key derivation function, and the meanings of other contents in the formula are the same as those in the foregoing embodiments and will not be repeated. For yet another example, the following formula is used for calculation: $Ks = Physical\ layer\ key \| PMK \| NONCE1$, where "$\|$" is concatenation operation, and the meanings of other contents in the formula are the same as those in the previous embodiments and will not be repeated.

It should also be noted that in the above processings of generating the integrity protection key, the encryption key, the first RES, the second RES, the MAC, the first verification RES, the second verification RES, and the verification MAC, the identifier of the second device and/or the identifier of the first device may also be added. For example, when the MAC (or the verification MAC) is calculated, the ID of the second device and the ID of the first device may be added. For example, when the encryption key (or the integrity protection key) is calculated, the physical layer key (or the first intermediate key), the root key, the random number, and the ID of the second device (and/or the ID of the first device) are used for XOR operation, etc. All possible situations are not exhaustive here.

In some possible implementations, the second device and the first device may also use their own integrity protection keys and/or encryption keys during the communication process.

Optionally, the third message further carries a first integrity verification code.

Optionally, the third message further carries the third random number and/or the fourth random number.

Optionally, the second device receives a response message from the first device, the response message responds to the third message, and the response message carries at least one of an indication that the integrity verification of the third message has succeeded, a second integrity verification code, the fourth random number, or an encrypted group key.

Optionally, the first device transmits a response message to the second device, the response message responds to the third message, and the response message carries at least one of an indication that the integrity verification of the third message has succeeded, a second integrity verification code, the fourth random number, or an encrypted group key.

Optionally, the second message further carries at least one of the third random number, a third integrity verification code, an encrypted group key, or the fourth random number.

The following is a detailed description of the processings such as transmitting the random numbers used to generate the integrity protection key and/or the encryption key in the above messages and obtaining the integrity verification code.

In some possible examples, transmitting, by the first device, the second message to the second device may include: generating, by the first device, the third random number; generating, by the first device, the integrity protection key based on the key generation parameter and the third random number; calculating, by the first device, the third integrity verification code based on the integrity protection key; and transmitting, by the first device, the second message to the second device, the second message carrying the third random number and the third integrity verification code.

The processing of the second device may include: the second message further carrying the third random number and the third integrity verification code. Calculating, by the second device, the verification MAC based on the authentication parameter and the root key, includes: generating, by the second device, the integrity protection key based on the key generation parameter and the third random number; verifying, by the second device, the third integrity verification code based on the integrity protection key to obtain a second verification result; and in a case where the second verification result indicates that the integrity verification of the second message has succeeded, calculating, by the second device, the verification MAC based on the authentication parameter and the root key.

That is, in this example, the third random number is generated by the first device, and the first device performs integrity protection processing when transmitting the second message. On the second device side, the integrity protection key is first obtained based on the third random number carried in the second message, and then the third integrity verification code carried in the second message is verified. In a case where the integrity verification of the second message succeeds, the second device performs the calculation of the verification MAC and other processings.

The first device calculating the third integrity verification code based on the integrity protection key may mean that the first device calculates, based on the integrity protection key, original content of the second message to obtain the third integrity verification code. The original content of the second message may refer to content that the second message needs to carry originally, such as the first random number, the third random number, the authentication parameter, the MAC, and the like.

The second device verifying the third integrity verification code based on the integrity protection key to obtain a third verification result may mean that the second device calculates, based on the integrity protection key, the original content of the second message to obtain a third code to be verified. In a case where the third code to be verified is the same as the third integrity verification code, the second verification result is used to indicate that the integrity verification of the second message succeeds. In a case where the third code to be verified is different from the third integrity verification code, the second verification result is used to indicate that the integrity verification of the second message does not succeed (or fails).

Furthermore, the third message further carries the first integrity verification code. In a case where the second device completes the calculation of the verification MAC and other processing and transmits the third message to the first device, the second device may calculate, based on the integrity protection key, original content of the third message to obtain the first integrity verification code, and then transmit the third message carrying the first integrity verification code and the original content to the first device. In this example, the original content of the third message may include the content shown in the above embodiments, which will not be repeated here.

Correspondingly, after the first device receives the third message from the second device, the processing by the first device may further include: verifying, by the first device, the first integrity verification code based on the integrity protection key to obtain a third verification result. In a case where the third verification result indicates that the integrity verification of the third message succeeds, the first device transmits a response message to the second device, and the response message responds to the third message, and the response message is further used to indicate that the integrity verification of the third message has succeeded.

The second device calculating, based on the integrity protection key, the original content of the third message to obtain the first integrity verification code may mean that the second device calculates, based on the integrity protection key, the original content of the third message to obtain the first integrity verification code. The original content of the third message may refer to content that the second message needs to carry originally, which is not exhaustive here.

In this example, when determining that the integrity verification of the third message succeeds, the first device may determine that the content carried in the third message has not been tampered with. Similarly, when determining that the integrity verification of the second message succeeds, the second device may determine that the third random number carried in the second message has not been tampered with.

In another example, the third message carries the third random number. Further, the processing on the second device side may include: generating, by the second device, the third random number; generating, by the second device, the integrity protection key based on the key generation parameter and the third random number. Correspondingly, the third message includes the first integrity verification code.

Here, the second device may perform the processing of generating the third random number when determining that authentication of the core network side device succeeds. Further, after generating the integrity protection key, the second device calculates the first integrity verification code based on the original message of the third message and the integrity protection key, and generates the third message carrying the original message and the first integrity verification code. The original message may refer to the information that the third message needs to carry. For example, in this example, the original message may at least carry the third random number. Other contents that may be carried in the original message are the same as those in the previous embodiments and will not be repeated.

The processing after receiving the third message on the first device side includes: generating, by the first device, the integrity protection key based on the key generation parameter and the third random number; verifying, by the first device, the first integrity verification code based on the integrity protection key to obtain a fourth verification result. In a case where the fourth verification result indicates that the integrity verification of the third message succeeds, the first device transmits a response message to the second device, the response message responds to the third message, the response message is used to indicate that the integrity verification of the third message has succeeded, and the response message carries a second verification code calculated based on the integrity protection key.

Here, verifying, by the first device, the first integrity verification code in the third message based on the integrity protection key to obtain a fourth verification result, may include: calculating, by the first device, a first code to be verified based on the integrity protection key and the original message included in the third message; and perform verification based on the first code to be verified and the first integrity verification code to obtain a fourth verification result. Further, the verification being performed based on the first code to be verified and the first integrity verification code to obtain the fourth verification result, may include one of: in a case where the first code to be verified is the same as the first integrity verification code, the fourth verification result indicating that the integrity verification of the third message has succeeded; in a case where the first code to be verified is different from the first integrity verification code, the fourth verification result indicating that the integrity verification of the third message has failed. The specific processing of the first device calculating the first code to be verified based on the integrity protection key and the original message contained in the third message is similar to the processing of the second device calculating the first integrity verification code based on the integrity protection key and the original message of the third message, and will not be repeated.

That is, since the parameters and calculation manners used for the first device and the second device to generate the integrity protection key are the same, the first code to be verified and the first integrity verification code obtained by the first device should be the same. Thus, the first device may determine that the integrity verification has succeeded (or passed or completed).

Processing on the second device side is as follows. The second device receives a response message from the first device, the response message responds to the third message, the response message carries a second integrity verification code and indication information indicating that the integrity verification of the third message has succeeded. Further, the second device verifies the second integrity verification code based on the integrity protection key to obtain a first verification result.

Here, the second device verifies the second integrity verification code based on the integrity protection key to obtain the first verification result may include the following step. The second device calculates a second code to be verified based on original content included in the response message and the integrity protection key, and perform verification based on the second code to be verified and the second integrity verification code to obtain the first verification result. Further, the verification being performed based on the second code to be verified and the second integrity verification code to obtain the first verification result may include one of: in a case where the second code to be verified is the same as the second integrity verification code, the verification result indicating that the integrity verification of the response message succeeds; in a case where the second code to be verified is different from the second integrity verification code, the verification result indicating that the integrity verification of the response message fails. The method for calculating the second code to be verified is similar to the method for the second device to calculate the first integrity verification code, except that the second device uses the original content in the response message to calculate the second code to be verified, which is not repeated here. The original content in the response message is not limited in this embodiment. In this case, the second code to be verified and the second integrity verification code obtained by the second device should be the same, and thus the second device may determine that the integrity verification has succeeded (or passed or completed).

In some possible examples, the third message may also be transmitted directly by the second device to the first network device. Correspondingly, after generating the integrity protection key, the first network device generates its own code to be verified based on the integrity protection key. In a case where the code to be verified generated by itself is the same as the first integrity verification code carried in the third message, the first network device determines that the integrity verification of the third message succeeds, and then obtains the first RES from the third message. In a case where the first RES is the same as the first verification RES saved by itself, the first network device determines that the verification of the second device succeeds. Furthermore, the first network device may transmit a response message to the second device, where the response message responds to the third message, and the response message may carry the second integrity verification code generated based on the integrity protection key. After the second device generates its own second code to be verified, if the second code to be verified is the same as the second integrity verification code, it is determined that agreement of the integrity protection key between the two is completed.

It should be noted that the third message in this example may be forwarded by the first device to the first network device; and the response message may be forwarded by the first device to the second device. The first device simply does not process the third message. The manner in which the first network device generates the third integrity protection key may be the same as the above manner in which the integrity protection key is generated, and thus will not be repeated.

In a possible example, the second device and the first device perform the integrity verification on the received message based on their respective integrity protection keys respectively, and if the verification succeeds, the second device and the first device may perform agreement of the encryption key.

Optionally, the second device may perform integrity protection on the third message when transmitting the third message. Correspondingly, the first device generates an encryption key when the integrity verification of the third message succeeds, and transmits a response message carrying a fourth random number to the second device. The second device generates an encryption key based on the fourth random number carried in the response message. The third message may be used to indicate that the second device has completed authentication of the core network side device.

In the processing performed by the first device, after the first device receives the third message, the method may further include: generating, by the first device, a fourth random number; obtaining, by the first device, an encryption key based on the fourth random number and a key generation parameter; and transmitting, by the first device, a response message to the second device, the response message carrying the fourth random number.

In the processing performed by the second device, the response message further carries the fourth random number; and the method further includes: in a case where the first verification result indicates that the integrity verification of the response message has succeeded, calculating, by the second device, an encryption key based on the fourth random number and the key generation parameter.

For example, the condition for the first device to generate the fourth random number may include at least one of: the integrity verification of the third message succeeding, or the authentication of the second device succeeding.

For example, if the third message does not carry the second RES or the first RES, the first device generating the fourth random number may include: if the integrity verification of the third message succeeds, the first device generating the fourth random number. That is, the first device will generate an encryption key only when the integrity verification of the third message succeeds. In this example, the response message may also be used to indicate that the integrity verification of the third message succeeds. For example, if the third message carries the second RES and/or the first RES, and the third message carries the first verification code, the first device generating the fourth random number may further include: the first device generating the fourth random number in a case where it determines that the authentication of the second device succeeds and the third verification result indicates that the integrity verification of the third message succeeds. Here, determining that the authentication of the second device succeeds may include that the first device receives successful authentication of the second device from the first network device, and/or the first device itself verifies that the second RES is the same as the second verification RES, and determines that the authentication of the second device succeeds.

Optionally, in a case where the integrity verification of the second message by the second device succeeds, the second device may generate the encryption key when transmitting the third message, and the third message carries the fourth random number. Correspondingly, in a case where the integrity verification of the third message succeeds, the first device generates the encryption key according to the fourth random number carried in the third message.

In this example, the processing by the second device is described as follows. The third message carries the fourth random number; and the method further includes that the second device generates the fourth random number; and the second device calculates the encryption key based on the fourth random number and the key generation parameter.

The processing on the first device side is described as follows. The third message carries the fourth random number, and the method further includes that the first device obtains the encryption key based on the fourth random number and the key generation parameter.

For example, the condition for the second device to generate the fourth random number may include at least one of: a success in the integrity verification of the second message, or completion of the authentication of the core network side device. The third message may be used to indicate that the second device has completed the authentication of the core network side device, and the third message may further be used to indicate that the integrity verification of the second message has succeeded.

For example, the condition for the first device to obtain the encryption key based on the fourth random number and the key generation parameter may include at least one of the following: a success in the integrity verification of the third message, or the first device determining that the authentication of the second device succeeds.

For example, if the third message does not carry the second RES or the first RES, the first device obtains the encryption key in a case where the third verification result indicates that the integrity verification of the third message has succeeded. For example, if the third message carries the second RES and/or the first RES, and the third message carries the first verification code, the first device obtains the encryption key in a case where it is determined that the authentication of the second device succeeds and the third verification result indicates that the integrity verification of the third message succeeds.

It should further be noted that after generating the encryption key, the first device may further transmit a response message to the second device. The response message may carry indication information that the integrity verification of the third message has succeeded, and may further carry indication information that the authentication of the second device has succeeded.

In some possible examples, the integrity verification is not required between the second device and the first device, but the second device and the first device may perform encryption key agreement to obtain the encryption key respectively, and the encryption key is used to encrypt data transmitted between the second device and the first device.

Optionally, in the processing performed by the first device, after the first device receives the third message, the method may further include that: the first device generates the fourth random number; the first device obtains the encryption key based on the fourth random number and the key generation parameter; the first device transmits a response message to the second device, and the response message carries the fourth random number. The third message may be used only to indicate that the second device has completed the authentication of the core network side device.

In the processing performed by the second device, the response message further carries the fourth random number; and the method further includes that: the second device receives a response message from the first device, the response message responds to the third message, and the response message carries the fourth random number; and the second device calculates the encryption key based on the fourth random number and the key generation parameter.

For example, if the third message does not carry the second RES, the first RES and the first verification code, the first device may directly generate the fourth random number. For example, if the third message carries the second RES and/or the first RES, the first device generates the fourth random number when determining that the authentication of the second device succeeds. Here, the description on determining that the authentication of the second device succeeds is the same as that in the above embodiments and will not be repeated.

Optionally, the processing by the second device is described as follows. The third message carries the fourth random number; and the method further includes that: the second device generates the fourth random number; and the second device calculates the encryption key based on the fourth random number and the key generation parameter. The processing on the first device side is described as follows. The third message carries the fourth random number, and the method further includes that: the first device obtains the encryption key based on the fourth random number and the key generation parameter.

For example, the condition for the second device to generate the fourth random number may include that the authentication of the core network side device has completed. The third message is used to indicate that the second device has completed the authentication of the core network side device.

For example, if the third message does not carry the second RES and the first RES, the first device directly calculates the encryption key. If the third message carries the second RES and/or the first RES, the first device calculates the encryption key when determining that the authentication of the second device succeeds.

After generating the encryption key, the first device may further transmit a response message to the second device, where the response message may be used to indicate that the authentication of the second device has succeeded.

In some possible implementations, the first device may further transmit one or more keys to a key management function entity (or network element).

For example, the first device may transmit the integrity protection key and/or encryption key to the key management function entity. The key function management entity may save the integrity protection key and/or encryption key. In this way, in a case where the first device and/or the second device moves, the first device and/or the second device or other devices do not need to regenerate their respective integrity protection keys and encryption keys, thereby improving processing efficiency of the system.

For example, the first device may transmit the second intermediate key and/or the third intermediate key to the key management function entity. The key function management entity may save the second intermediate key and/or the third intermediate key. In this way, in a case where the first device and/or the second device moves, the first device and/or the second device or other devices do not need to regenerate the second intermediate key and/or the third intermediate key, and may directly generate respective integrity protection keys and encryption keys based on the second intermediate key and/or the third intermediate key, thereby improving the processing efficiency of the system.

The key management function entity may be any one or more network side devices, such as an AMF, an access network device, a SEAF, an AUSF, etc. The access network device may be at least one of a base station, gNB, eNB, etc., or various possible devices are not exhaustive here. The key management function entity may be a key management service (KMS) entity, or a key management function (KMF) entity.

In some possible implementations, the processing flow of the authentication method may be triggered by the second device.

Before the second device receives the second message transmitted by the first device, the method may further include that: the second device transmits an authentication request to the first device, where the authentication request carries an identifier of the second device.

The processing by the first device may further include that: the first device receives an authentication request from the second device, the authentication request carrying the identifier of the second device; and the first device forwards the authentication request to the first network device.

The processing by the first network device may further include that: the first network device receives an authentication request from the first device, the authentication request carrying the identifier of the second device.

After receiving the authentication request, the first network device performs the process of obtaining the MAC and the authentication parameter, which will not be repeated here. The first network device then transmits a first message to the first device.

After receiving the first message from the first network device, the first device transmits a second message to the second device.

After receiving the second message from the first device, the second device performs the process of calculating the verification MAC, and the process of authenticating the network side device based on the verification MAC and MAC, which will not be repeated here.

After the second device completes the authentication of the core network side device, the method may further include that: the second device transmits a third message to the first device, and the third message is used to indicate that the second device has completed the authentication of the core network side device. Correspondingly, the method of the first device may further include that: the first device receives the third message from the second device, and the third message is used to indicate that the second device has completed the authentication of the core network side device; the first device transmits a fourth message to the first network device, and the fourth message is used to indicate that the second device has completed the authentication of the core network side device. The processing method of the first network device may further include that: the first network device receives the fourth message from the first device, where the fourth message is used to indicate the second device has completed the authentication of the core network side device.

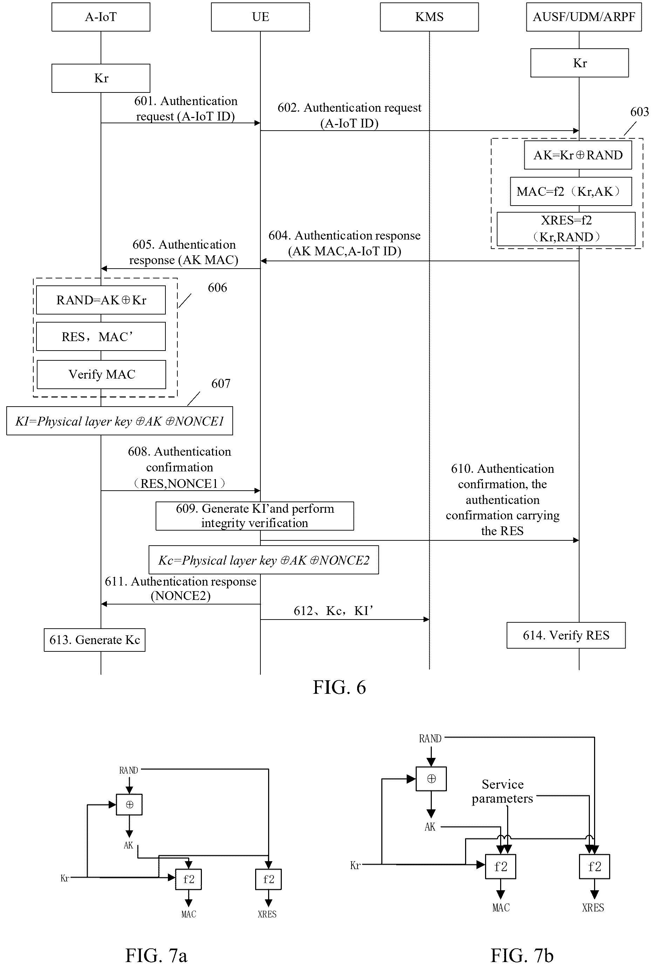

The authentication method provided in the above embodiment is exemplarily described below referring to FIG. 6. For example, in FIG. 6, the second device is an AIoT device (illustrated as AIoT in FIG. 6 for simplicity), the first device is a UE, the first network device is an AUSF, and the second network device is a UDM and/or an ARPF. It should be understood that in FIG. 6, for simplicity, the first network device and the second network device are combined and represented as AUSF/UDM/ARPF. A processing flow of the authentication method in FIG. 6 includes the following steps.

The AIoT device (i.e., AIoT) and the core network side device share a unique and non-repetitive root key Kr as a security credential of the AIoT device. It should be understood that the AIoT here is only one AIoT device. In actual processing, there may be a plurality of AIoT devices. Since processing of each AIoT device is the same, they will not be described one by one.

In step 601, the AIoT device transmits an authentication request carrying an AIoT ID to the UE.

In step 602, the UE forwards the authentication request carrying the AIoT ID to the AUSF.

In step 603, the AUSF forwards the authentication request to the UDM/ARPF, and the UDM/ARPF generates a first random number RAND and then generates an AK, MAC and XRES (i.e., the first verification RES) based on Kr, and transmits the AK, MAC, and RES to the AUSF.

For example, referring to FIG. 7a, generation architectures of the above parameters may include $AK = Kr \oplus RAND$, $MAC = f2 (Kr, AK)$, and $XRES = f2 (Kr, RAND)$. f2 may also be replaced with HMAC-SHA-256, AES, ACSON, SNOW 3G, ZUC or other algorithms. Since AK needs to be transmitted, the MAC and XRES cannot be generated using algorithms that may be reversed, such as XOR. Kr is a unique and non-repetitive key shared only between each AIoT device and the core network. An attacker cannot obtain RAND or Kr even if he intercepts AK. Therefore, the generation and transmission of AK is safe and has a characteristic of low power consumption. The transmission of MAC is also safe. Moreover, since the MAC is generated based on Kr, and only the AUSF has Kr, verifying the MAC may enable verification of the identity of the core network.

For example, referring to FIG. 7b, generation architectures of the above parameters may include $AK = Kr \oplus RAND$, $MAC = f2 (Kr, AK, Service parameters)$, and $XRES = f2 (Kr, RAND, Service parameters)$. f2 may also be replaced with HMAC-SHA-256, AES, ACSON, SNOW 3G, ZUC or other algorithms.

In step 604, the AUSF transmits an authentication response carrying the AK and the MAC to the UE. The authentication response may further carry the AIoT ID. The authentication response is the first message in the above embodiments.

In step 605, the UE forwards the authentication response carrying the AK and the MAC to the AIoT device. The authentication response message in this step is the second message in the above embodiments.

In step 606, the AIoT device calculates MAC' after receiving the authentication response message, determines that an identity of the AUSF is successfully verified after successfully verifying the MAC based on the MAC', and calculates a RES. The RES in this step is the first RES in the above embodiments.

For example, the calculation manners of the AIoT device may include $RAND = Kr \oplus AK$, $MAC'=f2(Kr, AK)$, and $RES=f2(Kr, RAND)$. Since the RES is generated based on Kr, and only the AIoT device has Kr, the core network side device may verify an identity of the AIoT device by verifying the RES.

In step 607, the AIoT device calculates an integrity protection key KI after successfully verifying the identity of the core network.

For example, the processing of this step may include: generating, by the AIoT device, a third random number, (i.e., NONCE1); and then calculating the integrity protection key based on the formula $KI = Physical\ layer\ key \oplus AK \oplus NONCE1$. The XOR ($\oplus$) algorithm used for KI generation may also be a concatenation operation ($\|$), or a KDF algorithm such as HMAC-SHA-256. Other optional KI generation parameters include the AIoT ID, etc. The integrity protection key is used to protect the integrity of the AIoT device and the network entity. The network entity may include but is not limited to at least one of the UE, or other network devices. The other network devices may include an AP, a small cell, gNB, a CPE, an AMF, a UPF, MEC, etc. The physical layer key is the shared key generated between the AIoT device and the UE through the channel source characteristics of the air interface, and has Shannon's information theory security. Therefore, the transmission of NONCE1 is safe and will not leak KI. KI generated using NONCE 1 and the physical layer key is also safe. Furthermore, the physical layer key does not require cryptographic calculations, and thus has a characteristic of low power consumption.

In step 608, the AIoT device transmits an authentication confirmation to the UE. The message carries the RES and NONCE1 (i.e., the third random number in the above embodiments). The AIoT device uses KI to protect the integrity of the authentication confirmation message before transmission. The authentication confirmation message in this step is the third message in the above embodiments.

In step 609, the UE generates *KI'* after receiving the authentication confirmation message, and the UE uses *KI'* to perform integrity verification on the authentication confirmation message.

*KI'* may be an integrity protection key on the UE side, and *KI'* in theory should be the same as the above KI. This example uses different symbols to distinguish integrity protection keys generated by different devices. This example uses the physical layer key to generate the integrity protection key KI. The physical layer key is the shared key generated between the AIoT device and the UE through the channel source characteristics of the air interface, and has Shannon's information theory security. Therefore, only the specific UE may verify the message integrity. Moreover, only the specific UE may obtain the physical layer key. Therefore, even if an attacker obtains the NONCE1, he cannot obtain the KI, and the KI is safe.

In step 610, the UE confirms that the RES has not been tampered with after completing the integrity verification, and transmits an authentication confirmation to the AUSF, the authentication confirmation carrying the RES; and generates a fourth random number (NONCE 2), and uses NONCE2 to generate an encryption key Kc, the encryption key being used for encryption protection of the message between the UE and the AIoT device. The authentication confirmation may be the fourth message in the above embodiments. For example, $Kc = Physical\ layer\ key \oplus AK \oplus NONCE2$.

In step 611, the UE transmits an authentication response to the AIoT device, and uses *KI'* to perform integrity protection of the authentication response before transmission, the authentication response carrying the NONCE2. Here, the authentication response may be the response message in the above embodiments, i.e., a response message in response to the third message. The physical layer key is the shared key between the AIoT device and the UE, and has Shannon's information theory security. Only a specific UE may obtain the physical layer key. Therefore, even if an attacker obtains the NONCE2, the physical layer key cannot be obtained. Kc generated using NONCE2 and the physical layer key is also safe. In addition, since the physical layer key does not require cryptographic calculations, Kc generation has a characteristic of low power consumption.

In step 612, the UE transmits Kc and *KI'* to the KMS entity on the network side.

It should be understood that the processes of step 612 and step 611 may be performed in any order.

In step 613, the AIoT device receives the authentication response, verifies integrity of the authentication response with KI, confirms that NONCE2 has not been tampered with, and generates Kc with NONCE2. The method of generating Kc is the same as that in the above examples and will not be described in detail.

In addition, step 614 may also be performed on the AUSF side to verify the RES. The specific method of AUSF verifying RES is the same as that in the above embodiments and will not be repeated.

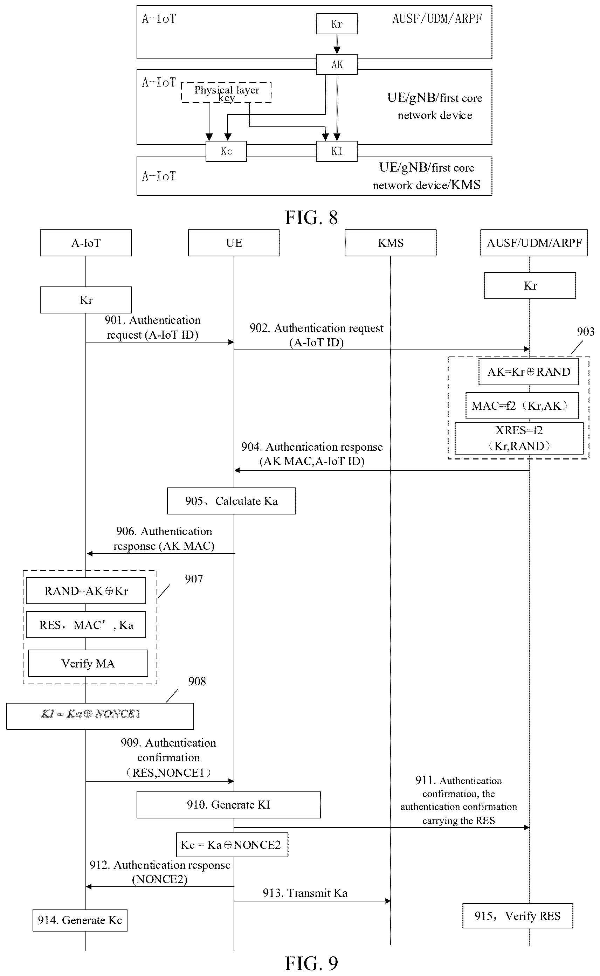

Referring to FIG. 8, an exemplary description is given for a key generation architecture. The root key Kr is shared on the AIoT device side and the AUSF/UDM/ARPF side. In processing of KI and Kc agreement, the AIoT device and the UE side obtain their respective Kc and KI in the same manner. KI is obtained using the physical layer key, the AK and the third random number (i.e., NONCE1), and Kc is obtained using the physical layer key, the AK and the fourth random number. Finally, the UE will transmit Kc and KI to the KMS, so that the UE, AIoT device and KMS share the same Kc and KI. In FIG. 8, the physical layer key is optional and is therefore represented as a dotted box. That is, in some possible examples, KI is obtained using the AK and the third random number (i.e., NONCE1), and Kc is obtained using the AK and the fourth random number. The various possible examples of generating KI and Kc are the same as those in the above embodiments and will not be described in detail. In FIG. 8, there is no distinction between KI and KI', and there is no distinction between Kcs generated by different devices. The reason is that KI and KI' should be the same in theory, and Kcs obtained by different devices using the same method and algorithm should also be the same. Therefore, no distinction is made in FIG. 8.

Referring to FIG. 8, another exemplary illustration is given for the key generation architecture. The root key Kr is shared on the AIoT device side and the AUSF/UDM/ARPF side. In the process of KI and Kc agreement, the AIoT device and an access network device (such as gNB in FIG. 8) obtain their respective Kc and KI in the same manner. KI is obtained using the physical layer key (optionally), AK and the third random number (i.e., NONCE1), and Kc is obtained using the physical layer key (optionally), AK and the fourth random number. Finally, the access network device will transmit Kc and KI to the KMS, so that the access network device, the AIoT device and the KMS share the same Kc and KI.

Referring to FIG. 8, yet another exemplary description is given for the key generation architecture. The root key Kr is shared on the AIoT device side and the AUSF/UDM/ARPF side. In the processing of KI and Kc agreement, the AIoT device and the first core network device (such as any one of the various first core network devices in the above embodiments, which is not exhaustive here) obtain their respective Kc and KI in the same manner. KI is obtained using the physical layer key (optionally), AK and the third random number (i.e., NONCE1), and Kc is obtained using the physical layer key (optionally), AK and the fourth random number. Finally, the first core network device will transmit Kc and KI to the KMS, so that the first core network device, the AIoT device and the KMS share the same Kc and KI.

The processing flow of the above authentication method is simpler than an authentication and key agreement (AKA) process in the prior art. The AIoT device may obtain the RES and MAC through simple operations such as XOR and f2, thereby completing mutual authentication with the network. In addition, the key agreement process is also simplified. In the authentication method, the AIoT device and the UE (or other authentication agent devices, such as an AP, a small cell, a CPE, etc.) obtain the shared key (including the encryption key and the integrity protection key) based on the physical layer key and the XOR operation. If necessary, the UE shares a session key with the KMS for mobility or to generate other keys. In addition, in the above examples, the UE may also be replaced with the access network device, so that both the indirect mode and the direct mode may be supported, and the UE or AUSF may verify the AIoT device. For example, the AUSF may transmits XRES to the UE, and the UE performs RES verification. The above examples have certain requirements on computing power and power consumption of the AIoT device. The AUSF may need to perform simplified MAC calculations. The UE does not need to know the root key Kr of the AIoT device, which has strong security. The AIoT device does not need to use complex calculation manners, such as KDF for generating a key. The UE may act as an authentication agent to complete the authentication.

Referring to FIG. 9, another exemplary description is given for the authentication method provided in the above embodiment. For example, in FIG. 9, the second device is an AIoT device (illustrated as AIoT for simplicity), the first device is a UE, the first network device is an AUSF, and the second network device is a UDM and/or ARPF. It should be understood that in FIG. 9, for simplicity, the first network device and the second network device are combined and represented as AUSF/UDM/ARPF. A processing flow of the authentication method of FIG. 9 includes the following steps.

Processes of step 901 to step 904 is the same as the processes of step 601 to step 604 in the example of FIG. 6, and will not be described in detail.

In step 905, the UE receives the authentication response and calculates an authentication key Ka.

For example, Ka = f3 (AK, Physical layer key), where Ka is the second intermediate key in the above embodiments. Since the physical layer key is the shared key generated between the AIoT device and the UE through the channel source characteristics of the air interface, and has Shannon's information theory security, Ka is safe. The authentication response received by the UE may be the first message in the above embodiments.

For example, *Ka* = f3 (*AK*, *NONCE*3). That is, the physical layer key may not be used to obtain Ka, but a fifth random number NONCE3 may be used to calculate the authentication key.

For example, *Ka* = f3 (*AK*, *Physical layer key*, NONCE3). That is, the authentication key may be calculated using the AK, the physical layer key and the fifth random number.

In step 906, the UE forwards the authentication response carrying the AK and the MAC to the AIoT device. The authentication response transmitted by the UE to the AIoT device may be the second message in the above embodiments.

In step 907, the AIoT device calculates MAC' after receiving the authentication response, determines that an identity of the AUSF is successfully verified after successfully verifying MAC based on the MAC', calculates a RES, and calculates the authentication key Ka.

For example, *RAND* = $Kr \oplus AK$, *MAC'* = f2(Kr, AK), RES = f2(Kr, RAND), Ka = f3 (AK, Physical layer key), where MAC' is the verification MAC. Because f3 function is required, the power consumption is high. The authentication key Ka may be shared with other network entities (the UE, or other network devices such as an AP, a small cell, gNB, a CPE, an AMF, a UPF, MEC, etc.). Kc and KI may be generated based on Ka, and keys between the AIoT device and other devices may further be generated, thereby providing great flexible.

In step 908, the AIoT device calculates KI after successfully verifying the identity of the AUSF.

For example, the AIoT device generates a random number NONCE1 (i.e., the third random number), and calculates KI using the formula $KI = Ka \oplus NONCE1$. The XOR algorithm used for KI generation may also be the concatenation algorithm ||, or the KDF algorithm such as HMAC-SHA-256. Other optional KI generation parameters may further include the AIoT ID, etc.

In step 909, the AIoT device transmits an authentication confirmation carrying the RES and the NONCE1 to the UE. In this step, the AIoT device uses KI to perform integrity protect of the authentication confirmation message before transmission. The authentication confirmation may be the third message in the above embodiments.

In step 910, after receiving the authentication confirmation, the UE generates KI and performs an integrity verification on the authentication confirmation message based on KI.

In this step, $KI = Ka \oplus NONCE1$. In this example, there is no distinction between an integrity protection key generated by the UE and an integrity protection key generated by the AIoT device.

In step 911, the UE confirms that the RES has not been tampered with after completing the integrity verification, and transmits an authentication confirmation to the AUSF, the authentication confirmation carrying the RES; and generates a fourth random number (NONCE 2), and uses NONCE2 to generate an encryption key Kc, the encryption key being used for encryption protection of the message between the UE and the AIoT device. The authentication confirmation may be the fourth message in the above embodiments. For example, Kc = Ka ⊕ NONCE2.

In step 912, the UE transmits an authentication response to the AIoT device, and uses KI to perform integrity protection of the authentication response message before transmission. The authentication response message carries NONCE2.

In step 913, the UE transmits Ka to a KMF entity on the network side. The processes of step 912 and step 913 may be performed in any order.

In step 914, the AIoT device receives the authentication response, verifies integrity of the authentication response with KI, confirms that NONCE2 has not been tampered with, and generates Kc with NONCE2. The generation method of Kc is the same as step 911 and will not be repeated here.

In addition, the step 915 may further be performed on the AUSF side to verify the RES. The specific method of the AUSF verifying the RES is the same as that in the above embodiments and will not be repeated.

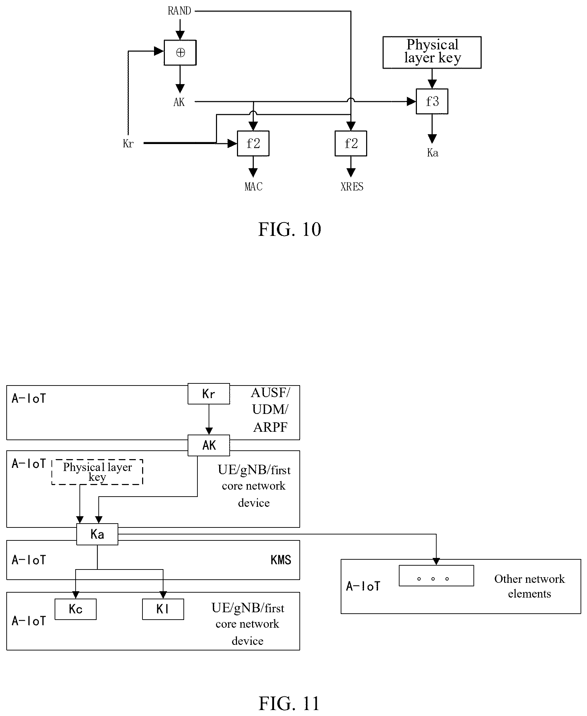

For example, referring to FIG. 10, generation architectures of the above parameters may include $AK = Kr \oplus RAND$, MAC=f2 (Kr, AK), and XRES=f2 (Kr, RAND). f2 may also be replaced with HMAC-SHA-256, AES, ACSON, SNOW 3G, ZUC or other algorithms. Since AK needs to be transmitted, MAC and XRES cannot be generated using algorithms that may be reversed, such as XOR. Since Kr is a unique key shared only between each AIoT device and the core network, an attacker cannot obtain RAND or Kr even if he intercepts AK. Therefore, the generation and transmission of AK is safe, and has the characteristic of low power consumption. The transmission of MAC is also safe. Moreover, since the MAC is generated based on Kr, and only the AUSF has Kr, verifying the MAC may enable verification of the identity of the core network. Furthermore, an authentication key Ka is added, where Ka = f3 (AK, Physical layer key).

Referring to FIG. 11, an exemplary description is given for generation architectures of the above keys. The root key Kr is shared on the AIoT device side and the AUSF/UDM/ARPF side. In processing of KI and Kc agreement, the authentication key Ka is first obtained based on the AK and the physical layer key, and Ka is obtained by the UE and the AIoT device in the same manner. Ka may be transmitted to the KMS, so that other AIoTs and other network elements share Ka, and the key Ka may be used to share with other network elements (the UE, or other network devices such as an AP, a small cell, gNB, a CPE, an AMF, a UPF, MEC, etc.). Kc and KI may be generated based on Ka, and keys between the AIoT device and other devices may further be generated, thereby providing great flexible. Furthermore, the UE and the AIoT device calculate Kc and KI in the same manner. Kc is obtained using Ka and the third random number (i.e., NONCE1), and Kc is obtained using Ka and the fourth random number. In FIG. 11, the physical layer key is optional and is therefore represented as a dotted box. That is, in some possible examples, Ka may be obtained using AK and a fifth random number instead of the physical layer key, which will not be repeated.

Referring to FIG. 11, another exemplary description of the key generation architectures is given. The root key Kr is shared on the AIoT device side and the AUSF/UDM/ARPF side. In the process of KI and Kc agreement, the authentication key Ka is first obtained based on the AK and the physical layer key (optionally), and the Ka is obtained by the gNB and the AIoT device in the same manner. Ka may be transmitted to the KMS, so that other AIoTs and other network elements share Ka, and the key Ka may be used to share with other network elements (the UE, or other network devices such as an AP, a small cell, gNB, a CPE, an AMF, a UPF, MEC, etc.). Kc and KI may be generated based on Ka, and keys between the AIoT device and other devices may also be generated, thereby providing great flexible. Furthermore, the gNB and the AIoT device calculate Kc and KI in the same manner. Kc is obtained using Ka and the third random number (i.e., NONCE1), and Kc is obtained using Ka and the fourth random number.

Referring to FIG. 11, yet another exemplary description of the key generation architectures is given. The root key Kr is shared on the AIoT device side and the AUSF/UDM/ARPF side. In the processing of KI and Kc agreement, the authentication key Ka is first obtained based on AK and the physical layer key (optionally), and Ka is obtained by the first core network device and the AIoT device in the same manner. Ka may be transmitted to the KMS, so that other AIoTs and other network elements share Ka, and the key Ka may be used to share with other network elements (the UE, or other network devices such as an AP, a small cell, gNB, a CPE, an AMF, a UPF, MEC, etc.). Kc and KI may be generated based on Ka, and keys between the AIoT device and other devices may further be generated, thereby providing great flexible. Furthermore, the first core network device and the AIoT device calculate Kc and KI in the same manner. Kc is obtained using Ka and the third random number (i.e., NONCE1), and Kc is obtained using Ka and the fourth random number.

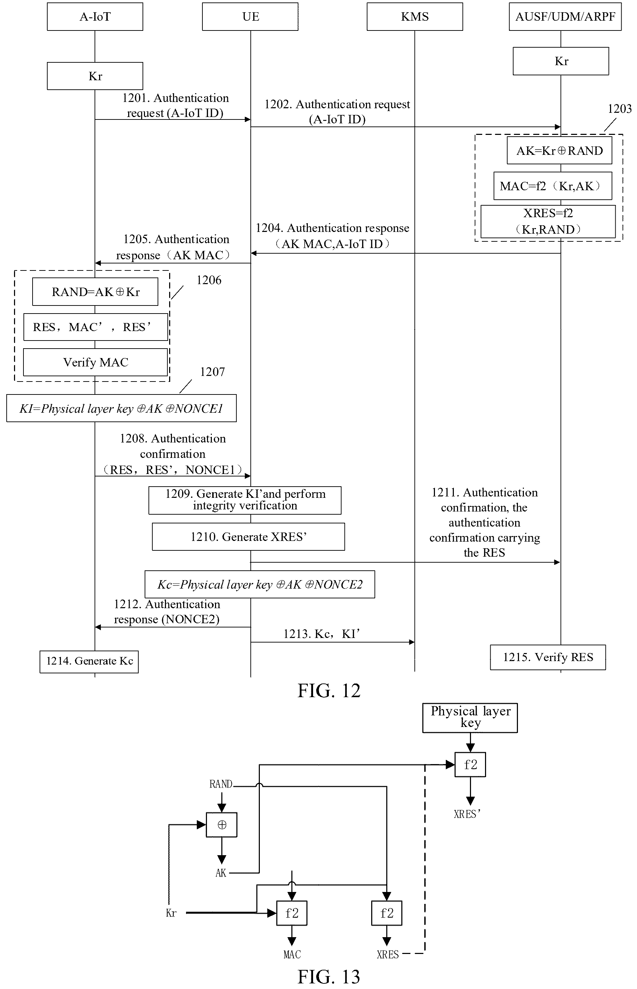

Referring to FIG. 12, another exemplary description is given for the authentication method provided in the above embodiment. For example, in FIG. 12, the second device is an AIoT device (illustrated as AIoT for simplicity), the first device is a UE, the first network device is an AUSF, and the second network device is a UDM and/or ARPF. It should be understood that in FIG. 12, for simplicity, the first network device and the second network device are combined and represented as AUSF/UDM/ARPF. A processing flow of the authentication method of FIG. 12 includes the following steps.

The processes of step 1201 to step 1205 is the same as the processes of step 601 to step 605 in the example of FIG. 6, and will not be described in detail.

In step 1206, the AIoT device calculates the MAC' after receiving the authentication response message, and determines that the identity of the AUSF is successfully verified after successfully verifying the MAC based on the MAC', and calculates RES (i.e., the first RES) and RES' (i.e., the second RES).

For example, $RAND = Kr \oplus AK$, MAC' = f2(Kr, AK), RES = f2(Kr, RAND).

RES' may be calculated in one of: RES'= f2(Physical layer key, AK), RES'= f2(Physical layer key, RAND), RES'= f2(Physical layer key, RES).

It should be noted that the description in FIG. 12 is given by taking an example in which the first device is the UE. In actual scenarios, the UE in FIG. 12 may also be replaced with a core network element (that is, a scenario in which the first device may be a first core network device). In a case where the first device is the first core network device, the calculation manner of RES' may also be replaced by using a first intermediate key (Km). For example, as in the above embodiments, the calculation manner of Km may include Km=KDF (intermediate network element identifier, second random number), or Km=KDF (AK, intermediate network element identifier, second random number), which is not repeated here. Correspondingly, the calculation manner of RES' may be replaced with one of: RES'= f2(Km, RAND), RES'= f2(Km, RAND), RES'= f2(Km, RES).

Step 1207 is the same as step 607 in FIG. 6, and is not described in detail.

In step 1208, the AIoT device transmits an authentication confirmation message carrying RES, RES' and NONCE1 to the UE. In this step, the AIoT device uses KI to perform integrity protection of the authentication confirmation message before transmission. In FIG. 11, for simplicity, the authentication confirmation message is represented as authentication confirmation.

In step 1209, after receiving the authentication confirmation message, the UE generates *KI'* and uses *KI'* to perform integrity verification on the authentication confirmation message.

In step 1210, in a case where the UE successfully verifies the integrity of the authentication confirmation message, the UE generates XRES' and verifies whether the received RES' is the same as the calculated XRES'.

The generation manner of XRES' may be one of: XRES'= f2 (Physical layer key, AK), XRES'= f2 (Physical layer key, RAND), XRES'= f2 (Physical layer key, RES). Since RES' is generated based on the physical layer key, and only the AIoT device has the physical layer key, verifying RES' may enable verification of the identity of the AIoT device.

In a case where the received RES' is the same as the calculated XRES', subsequent steps 1211 to 1215 are performed. The specific descriptions of steps 1211 to 1215 are the same as those of steps 610 to 614 in the example of FIG. 6, and are not repeated.

It should be noted that FIGS. 6, 9 and 12 are exemplary illustrations of the scenarios in which the first device is the UE in an indirect mode. In some possible examples, in a direct mode, the UE in FIGS. 6, 9, and 12 may also be replaced with the access network device, such as gNB. Alternatively, the UE in FIGS. 6, 9, and 12 may also be replaced with the first core network device, such as AMF, SEAF, a core network element dedicated to the AIoT (or IoT), etc. All possible examples are not exhaustive here.

For example, referring to FIG. 13, generation architectures of the parameters in the processing flow of the authentication method illustrated in FIG. 12 are described, which may include $AK = Kr \oplus RAND$, MAC = f2 (Kr, AK), XRES = f2 (Kr, RAND), XRES'= f2 (Physical layer key, AK). Alternatively, XRES' may also be obtained based on XRES. f2 may also be replaced with HMAC-SHA-256, AES, ACSON, SNOW 3G, ZUC or other algorithms. The example provided in FIG. 13 uses XRES' (which may be understood as the above RES') to improve the authentication between the AIoT device and the UE. Since the UE does not have Kr but only has AK and RES, the generation of RES' (or XRES') cannot be based on Kr, but on AK and/or RES.

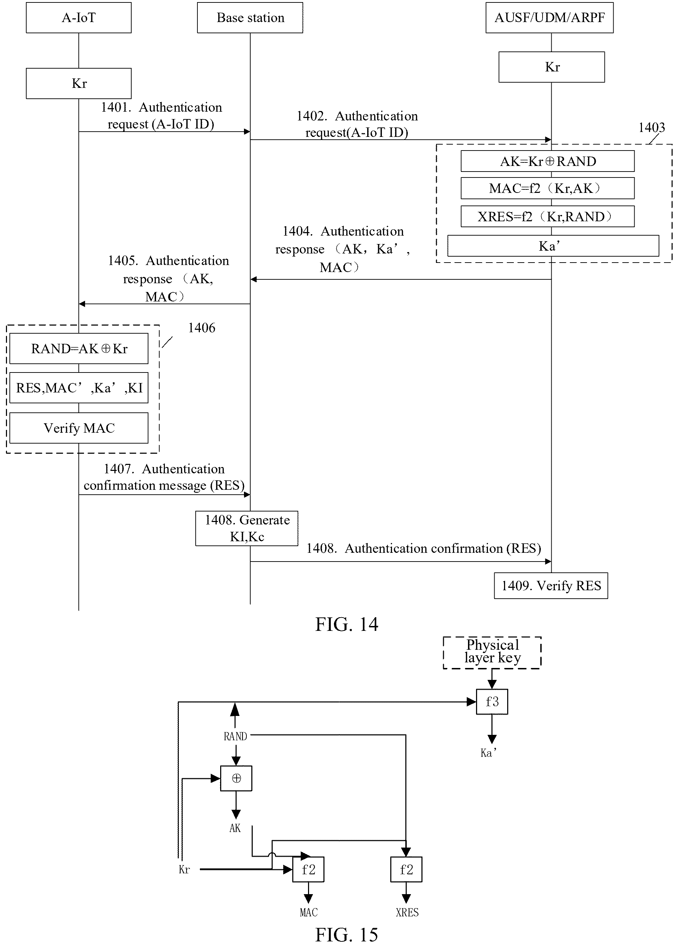

Referring to FIG. 14, yet another exemplary illustration is given for the authentication method provided in the above embodiment. For example, in FIG. 14, the second device is an AIoT device (illustrated as AIoT for simplicity), the first device is a base station (the first device may be a base station or a UE), the first network device is an AUSF, and the second network device is a UDM and/or ARPF. It should be understood that in FIG. 14, for simplicity, the first network device and the second network device are combined and represented as AUSF/UDM/ARPF. A processing flow of the authentication method in FIG. 14 includes the following steps.

Step 1401 to step 1402 are the same as step 601 to step 602 in the example of FIG. 6, and are not described in detail.

In step 1403, the AUSF forwards the authentication request to the UDM/ARPF, and the UDM/ARPF generates a first random number RAND and then generates an anonymous key (AK), a MAC, an XRES (i.e., the above first verification RES), and Ka' based on Kr, and transmits the AK, MAC, XRES, and Ka' to the AUSF.

For example, this example uses the third intermediate key in the above embodiments, and represents the third intermediate key as Ka'. For example, $AK = Kr \oplus RAND$, MAC = f2(Kr, AK), XRES = f2(Kr, RAND). For example, this example uses the third intermediate key in the above embodiments, and represents the third intermediate key as Ka'. For example, $Ka' = f3 (Kr, RAND, Physical layer key)$.

In addition, the third intermediate key may not be calculated using the physical layer key. For example, $Ka' = f3 (Kr, RAND)$. For another example, the third intermediate key may be calculated by replacing the physical layer key with the first intermediate key. For example, $Ka' = f3 (Kr, RAND, Km)$. Various exemplary calculation manners for the third intermediate key have been described in detail in the above embodiments and will not be repeated here.

In step 1404, the AUSF transmits an authentication response to the base station, the authentication response carrying the MAC, AK, and Ka'. The authentication response may be the second message in the above embodiments.

In step 1405, the base station transmits the authentication response to the AIoT device, the authentication response carrying the MAC, AK, but not Ka'.

In step 1406, the AIoT device calculates MAC', and determines that an identity of the AUSF is successfully verified after successfully verifying MAC based on MAC', calculates Ka' and calculates an integrity protection key KI. In addition, in this step, the AIoT device may further generate a RES (i.e., the first RES).

The key Ka' or KI is used to share between the AIoT device and the network entity (the UE, or other network devices such as an AP, a small cell, gNB, a CPE, an AMF, a UPF, MEC, etc.).

For example, the calculation performed by the AIoT device may include at least one of $RAND = Kr \oplus AK$ MAC'=f2(Kr, AK), RES=f2(Kr, RAND), or $Ka' = f3$ (*Kr*, *RAND*, *Physical layer key*).

Furthermore, the AIoT device generates a random number NONCE1 (i.e., the third random number). After Ka' is generated, a manner of generating KI is $KI = Ka' \oplus NONCE1$.

For example, the step 1403 may calculate the fourth intermediate key *Ka"*. That is, $Ka" = Kr \oplus RAND$. Furthermore, both the base station and the AIoT may use the following formula to generate Kb based on the fourth intermediate key: $Kb = f2(Physical\ layer\ key, Ka")$. Both the base station and the AIoT may generate KI based on Kb. For example, it is expressed as $KI = Kb \oplus NONCE1$

In the above examples, alternatively, Ka' and *Ka"* may be generated using the XOR $\oplus$ algorithm, the concatenation algorithm ‖, or the KDF algorithm such as HMAC-SHA-256, or f3(). In addition, other optional Ka' generation parameters include AIoT ID, NONCE, etc.

In step 1407, the AIoT device transmits an authentication confirmation message to the base station, the message carrying RES. AIoT devices may use KI to perform integrity protection of the authentication confirmation message before transmission.

In step 1408, after receiving the authentication confirmation message, the base station generates KI and uses KI to perform an integrity verification on the authentication confirmation message, and transmits the authentication confirmation to the AUSF, the authentication confirmation carrying RES. In this step, the base station may further generate Kc. For example, the base station uses Ka' to generate Kc. The specific processing method is the same as that in the above embodiments, and the steps are not repeated.

In step 1409, after successfully verifying RES, the AUSF completes the verification of the AIoT device.

For example, in the step 1407, the AIoT device may transmit the authentication confirmation message directly to the AUSF, and the AUSF generates KI based on Ka', then confirms that RES has not been tampered with after successfully verifying an integrity verification of KI, and verifies RES in the authentication confirmation message. If successfully verified, it may be determined that the verification of the AIoT device is completed.

For example, the AUSF may share Ka' with a server or KMS, and the KMS and the server may further generate other keys based on Ka'.

For example, in step 1404, the base station generates KI after receiving the authentication response from the AUSF. In step 1405, the base station performs, based on KI, the integrity protection on the authentication response message forwarded to the AIoT device. In step 1406, after receiving the authentication response message, the AIoT device also generates KI, performs the integrity verification on the authentication response message, thereby completing the KI agreement and performing integrity protection on the authentication response message. In step 1406, the AIoT device may generate Kc. When performing step 1407, the AIoT device performs integrity protection on and encrypts the authentication confirmation message before transmitting the message, and the authentication confirmation message carries the fourth random number. In step 1408, after receiving the authentication confirmation message, the base station generates Kc according to the fourth random number, decrypts the authentication confirmation message, and performs integrity verification based on KI, thereby completing the key agreement.

In the example of FIG. 14, unlike the previous embodiments, the third intermediate key Ka' is generated by the network side and transmitted to the base station or UE, and then the base station or UE uses the physical layer key to generate KI and Kc. The AUSF may share Ka with the server or KMS, and the KMS and the server may further generate other keys based on Ka.

It should be noted that FIG. 14 is an exemplary illustration of a scenario in which the first device is a base station in a direct mode. In some possible examples, in the direct mode, the base station in FIG. 14 may also be replaced with a first core network device, such as an AMF, a SEAF, a core network element dedicated to the AIoT (or IoT), or the like. In some possible examples, in an indirect mode, the base station in FIG. 14 may also be replaced with a UE. All possible examples are not exhaustive here.

For example, with reference to FIG. 15, generation architectures of the parameters in the processing flow of the authentication method illustrated in FIG. 14 may include $AK = Kr \oplus RAND$, MAC = f2 (Kr, AK), XRES = f2 (Kr, RAND), $Ka' = $ f3 (*Kr*, *RAND*, *Physical layer key*).

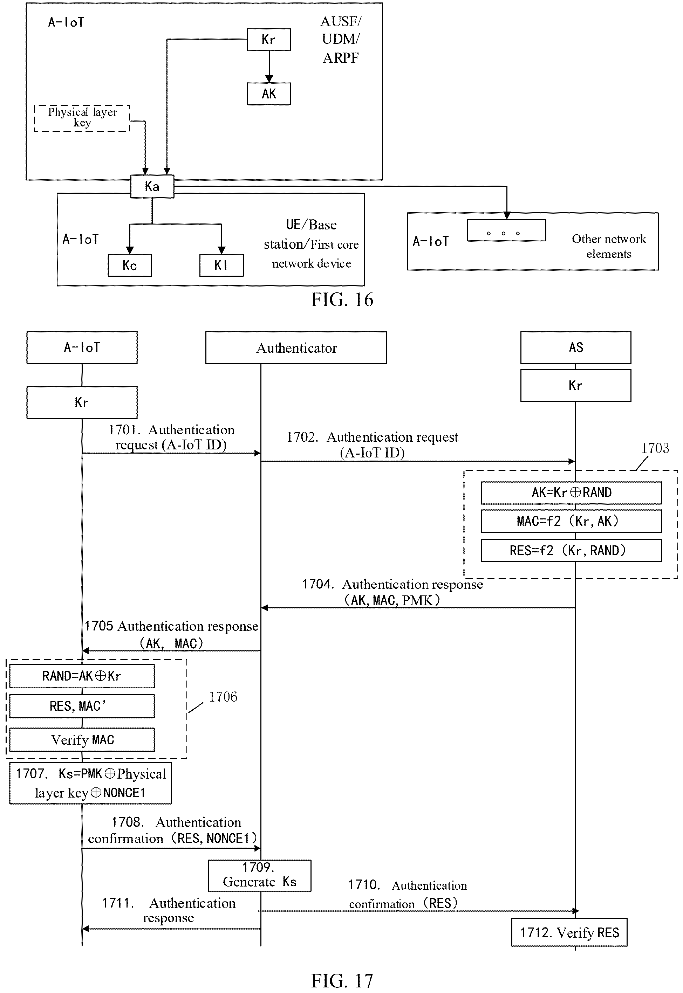

Referring to FIG. 16, exemplary illustration is given for generation architectures of the above keys. The root key Kr is shared on the AIoT device side and the AUSF/UDM/ARPF side, and AK may be obtained based on the root key. On the AIoT device side and the AUSF/UDM/ARPF side, Ka (i.e., Ka' in the above examples) may be generated based on Kr and the physical layer key. In the processing of KI and Kc agreement between the AIoT device side and the base station side, the AIoT device and the base station obtain their respective Kc and KI based on Ka in the same manner. In addition, the base station will transmit Ka to KMS, so that the base station, AIoT device, KMS and other network elements (which are the same as those in the above examples will not be repeated here) share the same Ka. In FIG. 16, the physical layer key is optional and is therefore represented as a dotted box. That is, in some possible examples, Ka may not be calculated using the physical layer key. The various calculation manners are the same as those in the above embodiments and are not repeated. Referring to FIG. 16, another exemplary illustration is given for the generation architectures of the above keys. The root key Kr is shared on the AIoT device side and the AUSF/UDM/ARPF side, and AK may be obtained based on the root key. On the AIoT device side and the AUSF/UDM/ARPF side, Ka (i.e., Ka' in the above examples) may be generated based on Kr and the physical layer key (optionally). In the processing of KI and Kc agreement between the AIoT device side and the UE, the AIoT device and the UE obtain their respective Kc and KI based on Ka in the same manner. In addition, the UE will transmit Ka to the KMS, so that the UE, AIoT device, KMS and other network elements (which are the same as those in the above examples will not be repeated here) share the same Ka. Referring to FIG. 16, another exemplary illustration is given for the generation architectures of the above keys. The root key Kr is shared on the AIoT device side and the AUSF/UDM/ARPF side, and AK may be obtained based on the root key. On the AIoT device side and the AUSF/UDM/ARPF side, Ka (i.e., Ka' in the above examples) may be generated based on Kr and the physical layer key (optionally). In the processing of KI and Kc agreement between the AIoT device and the first core network device, the AIoT device and the first core network device obtain their respective Kc and KI based on Ka in the same manner. In addition, the first core network device will transmit Ka to the KMS, so that the first core network device, AIoT device, KMS and other network elements (which are the same as those in the above examples and will not be repeated) share the same Ka.

Referring to FIG. 17, another exemplary illustration is given for the authentication method provided in the above embodiment. For example, in FIG. 17, the second device is an AIoT device (illustrated as AIoT for simplicity), the first device is an authenticator, and the first network device is an AS. The processing flow includes the following steps.

The AIoT device (i.e., AIoT) and the AS share a unique and non-repetitive root key Kr. For example, the AS and AIoT may generate a pairwise master key (PMK) after mutual authentication. The AS transmits the PMK to the authenticator in the authentication response message. The AIoT and the authenticator share the PMK (in the above embodiments, the PMK is referred to as the third intermediate key).

In step 1701, the AIoT device transmits an authentication request to the authenticator, the authentication request carrying an AIoT ID.

In step 1702, the authenticator forwards the authentication request to the AS, the authentication request carrying the AIoT ID.

In step 1703, the AS generates a first random number RAND, and then generates an anonymous key (AK), MAC, and XRES (i.e., the first verification RES) based on Kr.

For example, referring to FIG. 17, the generation manners of the above parameters include $AK = Kr \oplus RAND$, MAC = f2 (Kr, AK), XRES = f2 (Kr, RAND). f2 may also be replaced with HMAC-SHA-256, AES, ACSON, SNOW 3G, ZUC or other algorithms.

In step 1704, the AS transmits an authentication response to the authenticator, the authentication response carrying the AK, MAC, and PMK. The authentication response may further carry the AIoT ID. The authentication response is the first message in the above embodiments.

In step 1705, the authenticator forwards an authentication response to the AIoT device, the the authentication response carrying the AK and MAC. The authentication response message in this step is the second message in the above embodiments.

In step 1706, the AIoT device calculates MAC' after receiving the authentication response message, and determines that an identity of the AS is successfully verified after successfully verifying MAC based on MAC', and calculates RES. The RES in this step is the first RES in the above embodiments.

For example, the calculation manner of the AIOT device may include $RAND = Kr \oplus AK$, MAC'=f2(Kr, AK), RES=f2(Kr, RAND).

In step 1707, the AIoT device calculates an encryption key Ks.

For example, the processing of this step may include: generating, by the AIoT device, a third random number, i.e., NONCE1; and then calculating an integrity protection key based on the formula $Ks = Physical\ layer\ key \oplus PMK \oplus NONCE1$. The XOR $\oplus$ algorithm used to generate Ks may also be a concatenation algorithm $\|$, or a KDF algorithm such as HMAC-SHA-256, etc. Other optional Ks generation parameters include the AIoT ID, etc.

In step 1708, the AIoT device transmits an authentication confirmation to the authenticator, the message carrying RES and NONCE1 (i.e., the third random number in the above embodiments). The authentication confirmation message in this step is the third message in the above embodiments.

In step 1709, the authenticator generates Ks as the encryption key after receiving the authentication confirmation message.

In step 1710, the authenticator transmits an authentication confirmation to the AS, the authentication confirmation carrying RES.

In step 1711, the authenticator transmits an authentication response to the AIoT device. The authentication response may be the response message in the above embodiments, i.e., the response message in response to the third message.

In addition, step 1712 may also be performed on the AS side to verify the RES. The specific method of the AS verifying RES is the same as that in the above embodiments and will not be repeated here.

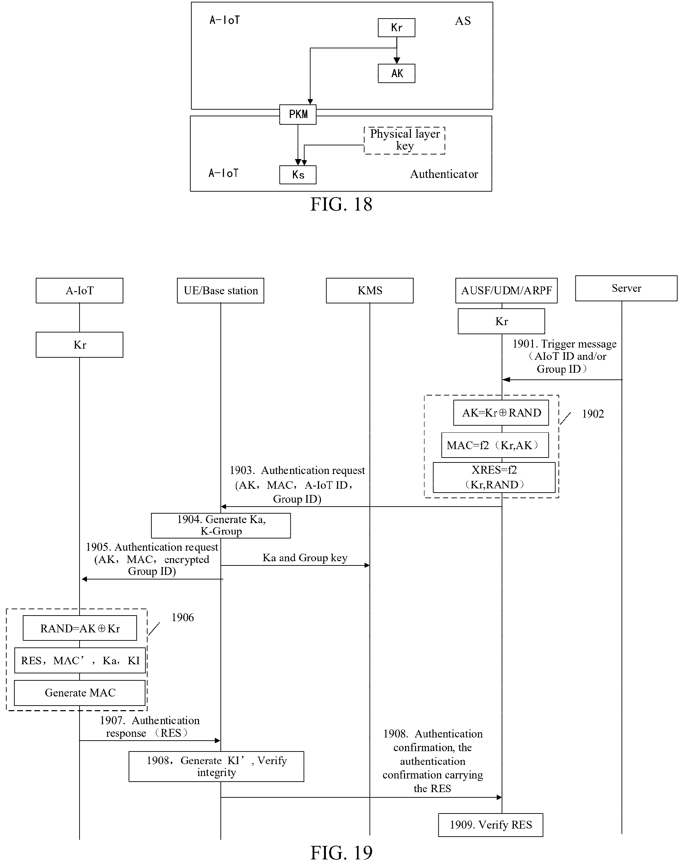

Referring to FIG. 18, an exemplary illustration is given for generation architectures of various keys in FIG. 17. The root key Kr is shared on the AIoT device side and the AS side; and AK may be obtained based on Kr. In the processing of Ks agreement, the AIoT device and the authenticator side obtain their respective Ks based on the physical layer key and PMK using the same manner. In FIG. 18, the physical layer key is optional and is therefore represented as a dotted box. That is, in some possible examples, Ks may not be calculated using the physical layer key and will not be described in detail.

In some possible implementations, the authentication method provided in this embodiment may also be triggered and performed by the first device or the network side.

Optionally, the authentication processing may be triggered by a server.

The processing by the first network device may include: receiving, by the first network device, a trigger message from the server, where the trigger message carries an identifier of the second device and/or an identifier of a device group to which the second device belongs.

The server may be a server with an AIoT service function (which is called an AIoT network element), such as an AF, or other servers, which are not limited here.

After receiving the trigger message from the server, the first network device may perform the processing of transmitting the first message in the above embodiments.

Optionally, the trigger message carries only the identifier of the second device, and correspondingly, the first message carries only the identifier of the second device. The first message may also be referred to as an authentication request (or an authentication request message). Subsequently, the second device and the first device may perform processing such as interacting with the second message and the third message in the above embodiments, which will not be repeated here.

Optionally, the trigger message carries the identifier of the device group to which the second device belongs. That is, the trigger message may carry the group ID. In this case, the first message carries the identifier of the device group to which the second device belongs. In this case, the first message may also be referred to as an authentication request (or authentication request message).

Furthermore, the first message further carries the identifier of the device group to which the second device belongs, and the second message is used to request authentication. After receiving the first message, the first device transmits the second message to the second device. Transmitting, by the first device, the second message to the second device may include: generating, by the first device, a fourth random number; obtaining, by the first device, an encryption key based on the fourth random number, the physical layer key and the key generation parameter; encrypting, by the first device, the group key based on the encryption key to obtain the encrypted group key; transmitting, by the first device, the second message to the second device, the second message further carrying the encrypted group key and the fourth random number.

The manner for generating the encryption key is the same as that in the above embodiments and will not be repeated.

Optionally, the first device may further generate the group key, and the generation manner of the group key may include one of: calculating, by the first device using a third calculation manner, the group key based on an identifier of the first device, an anonymous key of each device in the group to which the second device belongs, an identifier of each device, and a third random number;

calculating, by the first device using the third calculation manner, the group key based on the identifier of the first device, the anonymous key of each device in the group to which the second device belongs, an intermediate key of each device, the identifier of each device, and the third random number;

calculating, by the first device using the third calculation manner, the group key based on the identifier of the first device, the intermediate key of each device in the group to which the second device belongs, the identifier of each device, and the third random number;

calculating, by the first device using the third calculation manner, the group key based on the identifier of the first device, the anonymous key of each device in the group to which the second device belongs, the intermediate key of each device, the identifier of each device, and the third random number;

calculating, by the first device using the third calculation manner, the group key based on the identifier of the first device, the anonymous key of each device in the group to which the second device belongs, a first key of each device, the identifier of each device, and the third random number;

calculating, by the first device using the third calculation manner, the group key based on the identifier of the first device, the intermediate key of each device in the group to which the second device belongs, the first key of each device, the identifier of each device, and the third random number; or

calculating, by the first device using the third calculation manner, the group key based on the identifier of the first device, the anonymous key of each device in the group to which the second device belongs, the intermediate key of each device, the first key of each device, the identifier of each device, and the third random number.

The third calculation manner is the same as that in the above embodiments and will not be described repeatedly. In the following examples, the third calculation manner is taken as KDF for illustration, and other manners of calculating the group key that may be included in the third calculation manner are not exhaustive. The third random number may be generated by the first device, and the generation manner thereof is not limited.

For example, the intermediate key of each device may be a second intermediate key of each device, a third intermediate key of each device, or a fourth intermediate key of each device. The calculation manners of the second intermediate key, the third intermediate key and the fourth intermediate key of each device are the same as those described above, and thus will not repeated in this embodiment.

For example, the intermediate key of each device may also be the fourth intermediate key of each device, i.e., an intermediate key obtained in a manner different from the above embodiments. The fourth intermediate key may be calculated based on the key generation parameter and the identifier of the device using the third calculation manner, and the key generation parameter include an anonymous key and a first random number. For example, a fourth intermediate key of any of the above devices may be calculated using the following formula: Ka=f3(AK, RAND, AIOT ID), where AIoT ID is the identifier of the device. It should be understood that the above is only an exemplary description, and the generation manner of the intermediate key of each device is not exhaustive here.

Optionally, for example, the first key of each device is a physical layer key of each device. The first device calculates the group key using the third calculation manner based on the identifier of the first device, the anonymous key of each device in the group to which the second device belongs, the physical layer key of each device, the identifier of each device, and the third random number, and the following formula may be used for calculation:

$$K - Group = KDF(AK_{A-IoT-1} \oplus \ldots \oplus AK_{A-IoT-i} \parallel PK_{A-IoT-1} \oplus \ldots \oplus PK_{A-IoT-i}.$$
$$(A - IoTID - 1, \ldots, A - IoTID - i), UEID / \text{Base station } ID, NONCE1)$$ ;

where, K-Group represents the group key; KDF() represents a KDF calculation function; $AK_{A-IoT-1} \sim AK_{A-IoT-i}$ represents the anonymous key of each device, and an XOR operation is performed on the anonymous key of each device, where i represents the i-th device in the device group, and i is a positive integer; "$\parallel$" represents a concatenation operation; $PK_{A-IoT-1} \sim PK_{A-IoT-i}$ represents the physical layer key of each device, and an XOR operation is performed on the physical layer key of each device; ($A-IoTID$-1,..., $A-IoTID$-i ) represents the identifier of each device; UEID is the identifier of the UE in a case where the first device is the UE; the base station ID is the identifier of the base station in a case where the first device is the base station (in some possible examples, the base station ID may also be represented as a base station IE); and NONCE1 represents the third random number. Optionally, in the above formula, the XOR operation may be replaced with the concatenation operation, and the concatenation operation may be replaced with the XOR operation. Optionally, ($A-IoTID$-1,..., $A-IoTID$-i ) may be replaced by performing the XOR operation or the concatenation operation on the identifier of each device. The above various possible calculation manners are all within the protection scope of this embodiment and are not exhaustive.

Optionally, for example, the first key of each device is the first intermediate key of each device. The first device calculates the group key using the third calculation manner based on the identifier of the first device, the anonymous key of each device in the group to which the second device belongs, the first intermediate key of each device, the identifier of each device, and the third random number, and the following formula may be used for calculation:

$$K - Group = KDF(AK_{A-IoT-1} \oplus \ldots \oplus AK_{A-IoT-i} \parallel Km_{A-IoT-1} \oplus \ldots \oplus Km_{A-IoT-i}.$$
$$(A - IoTID - 1, \ldots, A - IoTID - i), UEID / \text{Base station } ID, NONCE1)$$ ;

where, $Km_{A-IoT-1} \sim Km_{A-IoT-i}$ represents the first intermediate key of each device, and the meanings of the remaining parameters are the same as those in the above examples and are not exhaustive.

Optionally, for example, the group key is calculated using the third calculation manner based on the identifier of the first device, the anonymous key of each device in the group to which the second device belongs, the identifier of each device, and the third random number, that is, the group key is calculated without using the first key, which may be expressed by the following formula:

$$K - Group = KDF(AK_{A-IoT-1} \oplus ... \oplus AK_{A-IoT-i}. (A - IoTID - 1...... A - IoTID - i).$$

UEID / Base station *ID, NONCE*1)

The meaning of each parameter in the formula is the same as that in the above examples and will not be repeated here.

Optionally, the first device calculates the group key using the third calculation manner based on the identifier of the first device, the anonymous key of each device in the group to which the second device belongs, the intermediate key of each device, the identifier of each device, and the third random number, and the following formula may be used for calculation:

$$K - Group = KDF (AK_{A-IoT-1} \oplus ... \oplus AK_{A-IoT-i}, \parallel Ka_{A-IoT-1} \oplus ... \oplus Ka_{A-IoT-i},$$

$$(A - IoT\ ID - 1,..., A - IoT\ ID - i), UE\ ID / Base\ station\ ID, nonce1)$$

where, K-Group represents the group key; KDF() represents a KDF calculation function; $AK_{A-IoT-1} \sim AK_{A-IoT-i}$ represents the anonymous key of each device, and an XOR operation is performed on the anonymous key of each of the above devices, where i represents the i-th device in the device group, and i is a positive integer; " $\parallel$ " represents a concatenation operation; $Ka_{A-IoT-1} \sim Ka_{A-IoT-i}$ represents the intermediate key of each device, and an XOR operation is performed on the intermediate key of each device. The meanings of other contents in the formula is the same as those in the above embodiments and will not be repeated.

Optionally, for example, the first key of each device is the physical layer key of each device. The first device calculates the group key using the third calculation manner based on the identifier of the first device, the intermediate key of each device in the group to which the second device belongs, the physical layer key of each device, the identifier of each device and the third random number, and the following formula may be used for calculation:

$$K - Group = KDF (Ka_{A-IoT-1} \oplus ... \oplus Ka_{A-IoT-i}, \parallel PK_{A-IoT-1} \oplus ... \oplus PK_{A-IoT-1},$$

$$(A - IoT\ ID - 1,..., A - IoT\ ID - i), UE\ ID / Base\ station\ ID, nonce1)$$

where, K-Group represents the group key; KDF() represents a KDF calculation function; $PK_{A-IoT-1} \sim PK_{A-IoT-i}$ represents the physical layer key of each device, and an XOR operation is performed on the physical layer key of each device, where i represents the i-th device in the device group, and i is a positive integer; "$\parallel$" represents a concatenation operation; $Ka_{A-IoT-1} \sim Ka_{A-IoT-i}$ represents the intermediate key of each device, and an XOR operation is performed on the intermediate key of each device. The meanings of other contents in the formula is the same as those in the above embodiments and will not be repeated.

Optionally, for example, the first key of each device is the first intermediate key of each device. The first device calculates the group key using the third calculation manner based on the identifier of the first device, the intermediate key of each device in the group to which the second device belongs, the first intermediate key of each device, the identifier of each device and the third random number, and the following formula may be used for calculation:

$$K - Group = KDF (Ka_{A-IoT-1} \oplus ... \oplus Ka_{A-IoT-i}, \parallel Km_{A-IoT-1} \oplus ... \oplus Km_{A-IoT-1},$$

$$(A - IoT\ ID - 1,..., A - IoT\ ID - i), UE\ ID / Base\ station\ ID, nonce1)$$

where, the meanings of the various contents of the formula are the same as those in the above embodiments and will not be repeated.

Optionally, for example, the first key of each device is the physical layer key of each device. The first device calculates the group key using the third calculation manner based on the identifier of the first device, the anonymous key of each device in the group to which the second device belongs, the intermediate key of each device, the physical layer key of each device, the identifier of each device, and the third random number, and the following formula may be used for calculation:

$$K - Group = KDF \ (AK_{A-IoT-1} \oplus \ldots \oplus AK_{A-IoT-i}, \| Ka_{A-IoT-1} \oplus \ldots \oplus Ka_{A-IoT-i}, \ \| PK_{A-IoT-1} \oplus \ldots \oplus PK_{A-IoT-1},$$

$$(A - IoT \ ID - 1, \ldots, \ A - IoT \ ID - i), UE \ ID / Base \ station \ ID, \ nonce)$$

where, the meaning of each content in the formula is the same as that in the above embodiments and will not be repeated.

In the above formula, the XOR operation may be replaced with the concatenation operation, and the concatenation operation may also be replaced with the XOR operation. Optionally, ($A$-$IoTID$-1,..., $A$-$IoTID$-i ) may be replaced by performing the XOR operation or concatenation operation on the identifier of each device. The above various possible calculation manners are all within the protection scope of this embodiment and are not exhaustive.

Optionally, for example, the first key of each device is the first intermediate key of each device. The first device calculates the group key using the third calculation manner based on the identifier of the first device, the anonymous key of each device in the group to which the second device belongs, the intermediate key of each device, the first intermediate key of each device, the identifier of each device, and the third random number, and the following formula may be used for calculation:

$$K - Group = KDF \ (AK_{A-IoT-1} \oplus \ldots \oplus AK_{A-IoT-i}, \| Ka_{A-IoT-1} \oplus \ldots \oplus Ka_{A-IoT-i}, \ \| Km_{A-IoT-1} \oplus \ldots \oplus Km_{A-IoT-1},$$

$$(A - IoT \ ID - 1, \ldots, \ A - IoT \ ID - i), UE \ ID / Base \ station \ ID, \ nonce)$$

where, the meaning of each content in the formula is the same as that in the above embodiments and will not be repeated.

Optionally, the manner in which the first device calculates the group key may include one of: calculating, by the first device using the third calculation manner, the group key based on an identifier of the device group, an identifier of the first device, an anonymous key of each device in a group to which the second device belongs, an identifier of each device, and a third random number;

calculating, by the first device using the third calculation manner, the group key based on the identifier of the device group, the identifier of the first device, the anonymous key of each device in the group to which the second device belongs, an intermediate key of each device, the identifier of each device, and the third random number;
calculating, by the first device using the third calculation manner, the group key based on the identifier of the device group, the identifier of the first device, the intermediate key of each device in the group to which the second device belongs, a physical layer key of each device, the identifier of each device and the third random number;
calculating, by the first device using the third calculation manner, the group key by based on the identifier of the device group, the identifier of the first device, the anonymous key of each device in the group to which the second device belongs, the intermediate key of each device, the identifier of each device, and the third random number;
calculating, by the first device using the third calculation manner, the group key based on the identifier of the device group, the identifier of the first device, the anonymous key of each device in the group to which the second device belongs, a first key of each device, the identifier of each device, and the third random number;
calculating, by the first device using the third calculation manner, the group key based on the identifier of the device group, the identifier of the first device, the anonymous key of each device in the group to which the second device belongs, the intermediate key of each device, the identifier of each device, and the third random number;
calculating, by the first device using the third calculation manner, the group key based on the identifier of the device group, the identifier of the first device, the intermediate key of each device in the group to which the second device belongs, the first key of each device, the identifier of each device, and the third random number; or
calculating, by the first device using the third calculation manner, the group key based on the identifier of the device group, the identifier of the first device, the anonymous key of each device in the group to which the second device belongs, the intermediate key of each device, the first key of each device, the identifier of each device, and the third random number.

This example mainly adds the device group key to the calculation of the aforementioned group key generation. The following only uses variations of some formulas as an example for illustration, and the above formulas will not be exhausted one by one.

Optionally, for example, the first key is the physical layer key. The first device calculates the group key using the third calculation manner based on the identifier of the device group, the identifier of the first device, the anonymous key of each device in the group to which the second device belongs, the physical layer key of each device, the identifier of each device, and the third random number, and the following formula may be used for calculation:

$$K-Group = KDF \ (\text{Anonymous key}_{A-IoT-1} \oplus \ldots \oplus \text{Anonymous key}_{A-IoT-i}, \ \| PK_{A-IoT-1} \oplus \ldots \oplus PK_{A-IoT-1}, \ .$$

$$(A-IoT \ ID-1, \ldots, \ A-IoT \ ID-i \ ), UE \ ID / \text{Base station ID}, \ \textbf{Group ID, nonce} 1)$$

where, K-Group represents a group key; KDF() represents a KDF calculation function; Anonymous key$_{A-IoT-1}$ ~ Anonymous key$_{A-IoT-i}$ represents an anonymous key of each device, and an XOR operation is performed on the anonymous key of each device, where i represents the i-th device in the device group, and i is a positive integer; "‖" represents a concatenation operation; $PK_{A-IoT-1}$ ~ $PK_{A-IoT-i}$ represents the physical layer key of each device, and an XOR operation is performed on the physical layer key of each device; (A-IoTID-1,..., A-IoTID-i ) represents the identifier of each device; UEID is the identifier of the UE in a case where the first device is the UE; the base station ID is the identifier of the base station in a case where the first device is the base station (in some possible examples, the base station ID may also be expressed as a base station IE); Group ID is the identifier of the device group; and NONCE 1 represents the third random number. Optionally, in the above formula, the XOR operation may be replaced with the concatenation operation, and the concatenation operation may be replaced with the XOR operation. Optionally, (A-IoTID-1,..., A-IoTID-i ) may be replaced by performing the XOR operation or concatenation operation on the identifier of each device. The above various possible calculation manners are all within the protection scope of this embodiment and are not exhaustive.

Optionally, for example, the first key is the first intermediate key. The first device calculates the group key using the third calculation manner based on the identifier of the device group, the identifier of the first device, the anonymous key of each device in the group to which the second device belongs, the first intermediate key of each device, the identifier of each device, and the third random number, and the following formula may be used for calculation:

$$K-Group = KDF \ (\text{Anonymous key}_{A-IoT-1} \oplus \ldots \oplus \text{Anonymous key}_{A-IoT-i}, \ \| Km_{A-IoT-1} \oplus \ldots \oplus Km_{A-IoT-1}, \ .$$

$$(A-IoT \ ID-1, \ldots, \ A-IoT \ ID-i \ ), UE \ ID / \text{Base station ID}, \ \textbf{Group ID, nonce} 1)$$

where, the meaning of each content in the formula is the same as that in the above embodiment and will not be repeated here.

Optionally, the first device calculates the group key using the third calculation manner based on the identifier of the device group, the identifier of the first device, the anonymous key of each device in the group to which the second device belongs, the intermediate key of each device, the identifier of each device, and the third random number, and the following formula may be used for calculation:

$$K-Group = KDF \ (\text{Anonymous key}_{A-IoT-1} \oplus \ldots \oplus \text{Anonymous key}_{A-IoT-i}, \ \| Ka_{A-IoT-1} \oplus \ldots \oplus Ka_{A-IoT-i}, \ :$$

$$(A-IoT \ ID-1, \ldots, \ A-IoT \ ID-i \ ), UE \ ID / \text{Base station IE}, \ \textbf{Group ID, nonce} 1)$$

where, K-Group represents the group key; KDF() represents a KDF calculation function; Anonymous key$_{A-IoT-1}$ ~ Anonymous key$_{A-IoT-i}$ represents the anonymous key of each device, and an XOR operation is performed on the anonymous key of each device, where i represents the i-th device in the device group, and i is a positive integer; "‖" represents a concatenation operation; and $Ka_{A-IoT-1}$ ~ $Ka_{A-IoT-i}$ represents the intermediate key of each device, and an XOR operation is performed on the intermediate key of each device. The meanings of other contents in the formula are the same as those in the above embodiments and will not be repeated.

The processing by the second device is described as follows. The second device decrypts the encrypted group key based on the encryption key to obtain the group key, and the group key is used to encrypt data transmitted between the second device and the first device.

Furthermore, the second message is used to request authentication, and the second message further carries the encrypted group key and the fourth random number. Transmitting, by the second device, the third message to the first device, includes: obtaining, by the second device, the encryption key based on the fourth random number and the key generation parameter; decrypting, by the second device, the encrypted group key based on the encryption key to obtain the group key; transmitting, by the second device, the third message to the first device, the third message being a message encrypted based on the group key.

It should be noted that after receiving the second message, the second device will still perform the above processing such as calculating the verification MAC, and the specific processing manner is the same as that in the above embodiments.

Optionally, the second device may further generate an integrity protection key and perform integrity protection processing on the third message. The processing manner is the same as that in the above embodiments and will not be repeated here. It should be noted that, in this embodiment, the integrity protection key may also be generated using the fourth intermediate key, and then the integrity protection key is calculated based on the second intermediate key, the third random number and the physical layer key using the second calculation manner. The same processing manner is also used on the first device side to generate the integrity protection key, which is not repeated here.

Optionally, the first device may transmit the intermediate key of each device and the group key to a key management function entity, so that the key management function entity uses them for mobility management.

Referring to FIG. 19, an exemplary illustration is given for the authentication method provided in the above embodiment. For example, in FIG. 19, the second device is an AIoT device (illustrated as AIoT for simplicity), the first device is a UE/base station, and the first network device and the second network device are combined to represent AUSF/UDM/ARPF. A processing flow of the authentication method in FIG. 19 includes the following steps.

In step 1901, the server transmits a trigger message, and the trigger message may carry an AIoT ID and/or a Group ID.

In step 1902, the AUSF requests an authentication vector from the UDM/ARPF after receiving the trigger message, the UDM/ARPF generates an authentication vector, and the UDM/ARPF transmits the authentication vector to the AUSF. The authentication vector may include a MAC, AK, and XRES.

In step 1903, the AUSF transmits an authentication request to the UE/base station, the authentication request carrying the MAC, AK, AIoT ID, and Group ID.

In step 1904, the UE/base station generates Ka for each device in the device group and then generates a group key (K-Group).

Ka may refer to the intermediate key of each device in the above embodiments. The detailed description of the intermediate key is the same as that in the above embodiments, and the generation of the group key is also the same as that in the above embodiments, which will not be repeated.

Optionally, the UE/base station transmits Ka of each device and the group key to the KMS.

In step 1905, UE/base station transmits an authentication request (which may carry the AK, MAC, and encrypted K-Group).

In step 1906, the AIoT device calculates MAC' after receiving the authentication response, and determines that an identity of the AUSF is successfully verified after successfully verifying the MAC based on the MAC', calculates RES, and calculates Ka and KI. For example, $RAND = Kr \oplus AK,$ MAC' = f2(Kr, AK), RES = f2(Kr, RAND), Ka=f3(AK, RAND, AIOT ID), $KI = KDF(Ka, NONCE1, Physical\ layer\ key)$, where MAC' is the verification MAC, Ka is the intermediate key of the above device, and KI is the integrity protection key generated by the AIoT device.

In the step 1905, the authentication request may further carry a fourth random number. In step 1906, the AIoT device may also obtain the encryption key based on the fourth random number, the physical layer key and the key generation parameter. The second device decrypts the encrypted group key based on the encryption key to obtain the group key.

In step 1907, the AIoT device transmits an authentication response (carrying RES), and KI may be used for the integrity protection of the authentication response.

In this step, the authentication response may also be a message encrypted based on the group key.

In step 1908, the UE/base station verifies the integrity protection of the authentication response after generating KI, and if the verification succeeds, transmits an authentication confirmation to the AUSF. The authentication confirmation carries RES. KI generated by the UE/base station may be called the integrity protection key. The manner in which the UE/base station generates KI is the same as that of the AIoT device and will not be repeated. In this step, if the authentication response is also a message encrypted based on the group key, the UE/base station may also use the group key to decrypt the authentication response and perform verification and other processing, which will not be repeated.

In addition, step 1909 may also be performed on the AUSF side to verify RES. The specific method of the AUSF verifying RES is the same as that in the above embodiments and will not be repeated.

Optionally, the authentication processing may be triggered by the first device.

The processing by the first device may include: transmitting, by the first device, an authentication request to the first network device, the authentication request carrying an identifier of the second device and/or an identifier of a device group to which the second device belongs. Correspondingly, the processing by the first network device may include: receiving, by the first network device, the authentication request from the first device, the authentication request carrying the identifier of the second device and/or the identifier of the device group to which the second device belongs.

Further, after obtaining the authentication request, the first network device may perform the processing of transmitting the first message in the above embodiments. The difference from the above embodiment is that, in this embodiment, the first message may further carry the identifier of the device group to which the second device belongs. In addition, before transmitting the authentication request to the first network device, the first device may also transmit a trigger message to the second device (or each device in the device group to which the second device belongs), and the trigger message may carry the identifier of the second device and/or the identifier of the device group to which the second device belongs.

In this case, after receiving the first message, the first device transmits a second message for requesting authentication to the second device. The processing of the second device based on the second message may be the same as that of the above embodiments, and the processing of the second device transmitting the third message to the first device may also be the same as that of the above embodiments, which will not be exhaustive.

The processing by the first device after receiving the third message may further include: generating, by the first device, a fourth random number; obtaining, by the first device, the encryption key based on the fourth random number, the physical layer key and the key generation parameter; encrypting, by the first device, the group key based on the encryption key to obtain the encrypted group key; transmitting, by the first device, a response message to the second device, where the response message responds to the third message, the response message carries the fourth random number and the encrypted group key, and the group key is used to encrypt data transmitted between the second device and the first device.

The generation manner of the encryption key and the generation manner of the group key are the same as those in the above embodiments and will not be described in detail.

The processing by the second device may include: receiving, by the second device, the response message from the first device, the response message responding to the third message; verifying, by the second device, the response message based on the integrity protection key to obtain a verification result; obtaining, by the second device, a fourth random number from the response message in a case where the verification result indicates that the integrity verification of the response message has succeeded; obtaining, by the second device, the encryption key based on the fourth random number, the physical layer key and the key generation parameter; obtaining, by the second device, the encrypted group key from the response message; decrypting, by the second device, the encrypted group key based on the encryption key to obtain the group key, the group key being used to encrypt data transmitted between the second device and the first device.

The manner in which the second device obtains the encryption key is the same as that in the above embodiments. After the second device obtains the group key, the group key may be used to encrypt the transmitted data and decrypt the received data, which is not limited here.

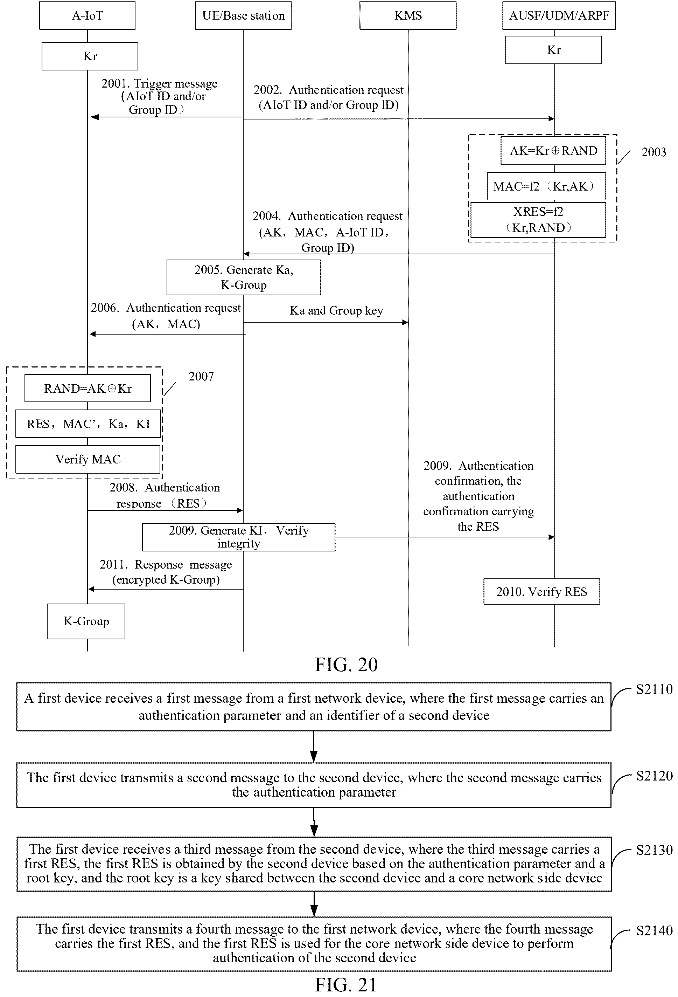

Referring to FIG. 20, an exemplary illustration is given for the authentication method provided in the above embodiment. For example, in FIG. 20, the second device is an AIoT device (illustrated as AIoT for simplicity), the first device is a UE/base station, and the first network device and the second network device are combined and represented as AUSF/UDM/ARPF. A processing flow of the authentication method in FIG. 20 includes the following steps.

In step 2001, the UE/base station transmits a trigger message to the AIoT device. The trigger message may carry an AIoT ID and/or a Group ID.

In step 2002, the UE/base station transmits an authentication request to the AUSF, and the authentication request may carry the AIoT ID and/or Group ID.

The processing of step 2003 to step 2005 is the same as that of step 1902 to step 1904 in FIG. 19, and will not be repeated.

In step 2006, the UE/base station transmits an authentication request (which may carry AK, MAC).

In step 2007, the AIoT device calculates MAC' after receiving the authentication response, and determines that an identity of the AUSF is successfully verified after successfully verifying the MAC based on the MAC', calculates RES, and calculates Ka and KI. For example, $RAND = Kr \oplus AK$, MAC' = f2(Kr, AK), RES = f2(Kr, RAND), Ka=f3(AK, RAND, AIOT ID), $K1 = KDF(Ka, NONCE1, Physical\ layer\ key)$, where MAC' is the verification MAC, Ka is the intermediate key of the above device, and KI is the integrity protection key generated by the AIoT device.

In step 2008, the AIoT device transmits an authentication response (carrying RES), where KI may be used for the integrity protection of the authentication response.

In step 2009, the UE/base station verifies the integrity protection of the authentication response after generating KI, and if the verification succeeds, transmits an authentication confirmation to the AUSF. The authentication confirmation carries RES. KI generated by the UE/base station may be called the integrity protection key. The manner in which the UE/base station generates the KI is the same as that of the AIoT device and will not be repeated.

In addition, step 2010 may also be performed on the AUSF side to verify RES. The specific method of the AUSF verifying RES is the same as that in the above embodiments and will not be repeated.

In step 2011, the UE/base station transmits a response message to the AIoT device, where the response message may carry an encrypted group key (K-Group). Specifically, the UE/base station may also obtain the encryption key based on the fourth random number, the physical layer key and the key generation parameter; and encrypt the group key based on the encryption key to obtain the encrypted group key. In addition, the response message may further carry a fourth random number.

Correspondingly, the AIoT device may also obtain the encryption key based on the fourth random number, the physical layer key and the key generation parameter. The second device decrypts the encrypted group key based on the encryption key to obtain the group key.

It should be noted that FIGS. 19 and 20 are exemplary illustrations of the scenarios in which the first device is the UE or base station in an indirect mode or a direct mode, respectively. In some possible examples, in the direct mode, the UE/base station in FIGS. 19 and 20 may also be replaced with the first core network device, such as an AMF, a SEAF, a core network element dedicated to the AIoT (or IoT), etc., and all possible examples are not exhaustive here.

It may be seen that through the above authentication method, the second device may receive the authentication parameter, then directly calculate the verification MAC based on the authentication parameter and the root key shared with the core network side device, and perform the authentication of the core network device based on the verification MAC and the received MAC. In this way, the second device side is prevented from performing complex calculations while ensuring security of the authentication process between the second device and the core network side device, thereby improving processing efficiency of the second device, which is particularly suitable for devices with low computing power.

FIG. 21 is a schematic flowchart of an authentication method according to an embodiment of the present application. The method includes at least part of the following.

**In** S2110, a first device receives a first message from a first network device, where the first message carries an authentication parameter and an identifier of a second device.

**In** S2120, the first device transmits a second message to the second device, where the second message carries the authentication parameter.

**In** S2130, the first device receives a third message from the second device, where the third message carries a first RES, the first RES is obtained by the second device based on the authentication parameter and a root key, and the root key is a key shared between the second device and a core network side device.

**In** S2140, the first device transmits a fourth message to the first network device, where the fourth message carries the first RES, and the first RES is used for the core network side device to perform authentication of the second device.

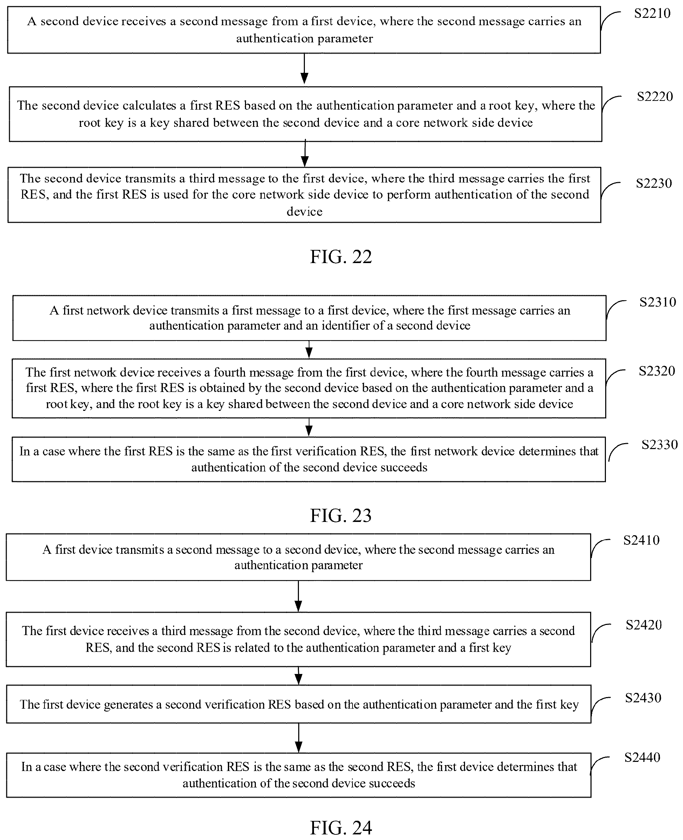

FIG. 22 is a schematic flowchart of an authentication method according to another embodiment of the present application. The method includes at least part of the following.

**In** S2210, a second device receives a second message from a first device, where the second message carries an authentication parameter.

**In** S2220, the second device calculates a first RES based on the authentication parameter and a root key, where the root key is a key shared between the second device and a core network side device.

**In** S2230, the second device transmits a third message to the first device, where the third message carries the first RES, and the first RES is used for the core network side device to perform authentication of the second device.

FIG. 23 is a schematic flowchart of an authentication method according to yet another embodiment of the present application. The method includes at least part of the following.

**In** S2310, a first network device transmits a first message to a first device, where the first message carries an authentication parameter and an identifier of a second device.

**In** S2320, the first network device receives a fourth message from the first device, where the fourth message carries a first RES, where the first RES is obtained by the second device based on the authentication parameter and a root key, and the root key is a key shared between the second device and a core network side device.

In S2330, in a case where the first RES is the same as the first verification RES, the first network device determines that authentication of the second device succeeds.

The definitions of the core network side device, the first device, the one or more core network devices, the first network device and the second network device are the same as those in the above embodiments, and thus will not be repeated.

Optionally, the authentication parameter include one of an anonymous key and a first random number. Calculating, by the second device, the first RES based on the authentication parameter and the root key includes one of: calculating, by the second device using a first calculation manner, the first RES based on the first random number and the root key; calculating, by the second device using the first calculation manner, the first RES based on the anonymous key and the root key.

Correspondingly, the processing by the first network device further includes one of: receiving, by the first network device, the authentication parameter and the first verification RES that are transmitted by the second network device; or calculating, by the first network device using the first calculation manner, the first verification RES based on the root key and the authentication parameter.

In this embodiment, the manners of generating the first RES and the first verification RES are the same as those in the above embodiments and are not described in detail.

Optionally, the method further includes one of: receiving, by the first network device, the authentication parameter and the first verification RES that are transmitted by the second network device; or calculating, by the first network device using the first calculation manner, the first verification RES based on the root key and the authentication parameter.

Optionally, the third message further carries a second RES, and the second RES is used for the first device to perform authentication of the second device. The method further includes one of: calculating, by the second device using the first calculation manner, the second RES based on the anonymous key and a physical layer key, the physical layer key being a key shared between the second device and the first device; calculating, by the second device using the first calculation manner, the second RES based on the first random number and the physical layer key; or calculating, by the second device using the first calculation manner, the second RES based on the first RES and the physical layer key.

The processing by the first device further includes: in a case where the second verification RES is the same as the second RES, the first device determines that the authentication of the second device succeeds.

The method further includes one of: calculating, by the first device using the first calculation manner, the second verification RES based on the anonymous key and a physical layer key, the physical layer key being a key shared between the second device and the first device; calculating, by the first device using the first calculation manner, the second verification RES based on the first random number and the physical layer key; or calculating, by the first device using the first calculation manner, the second verification RES based on the first verification RES and the physical layer key. The first message further carries the first verification RES.

In this embodiment, the methods of generating the second RES and the second verification RES are the same as those in the above embodiments and are not described in detail.

The authentication method provided in this embodiment differs from that of the above embodiment in that the verification of the MAC is not performed. For the authentication method provided in this embodiment, except that calculations of the MAC and the verification MAC are not performed, the detailed description of the second message, the third message, the first message and the fourth message, as well as the agreement of the integrity protection key, the agreement of the encryption key, and the generation and transmission of the group key between the second device and the first device, may all be the same as those in the above embodiments, and therefore will not be repeated.

It may be seen that through the above authentication method, the first device may transmit the authentication parameter to the second device, so that the second device may directly calculate the first RES based on the authentication parameter and the root key that is shared with the core network side device; and the first device may transmit the first RES to the first network device via the first device, so that the core network side perform the authentication of the second device. In this way, the second device side is prevented from performing complex calculations while ensuring security, thereby improving processing efficiency of the second device, which is particularly suitable for devices with low computing power.

FIG. 24 is a schematic flowchart of an authentication method according to an embodiment of the present application. The method includes at least part of the following.

In S2410, a first device transmits a second message to a second device, where the second message carries an authentication parameter.

In S2420, the first device receives a third message from the second device, where the third message carries a second RES, and the second RES is related to the authentication parameter and a first key.

In S2430, the first device generates a second verification RES based on the authentication parameter and the first key;

In S2440, in a case where the second verification RES is the same as the second RES, the first device determines that authentication of the second device succeeds.

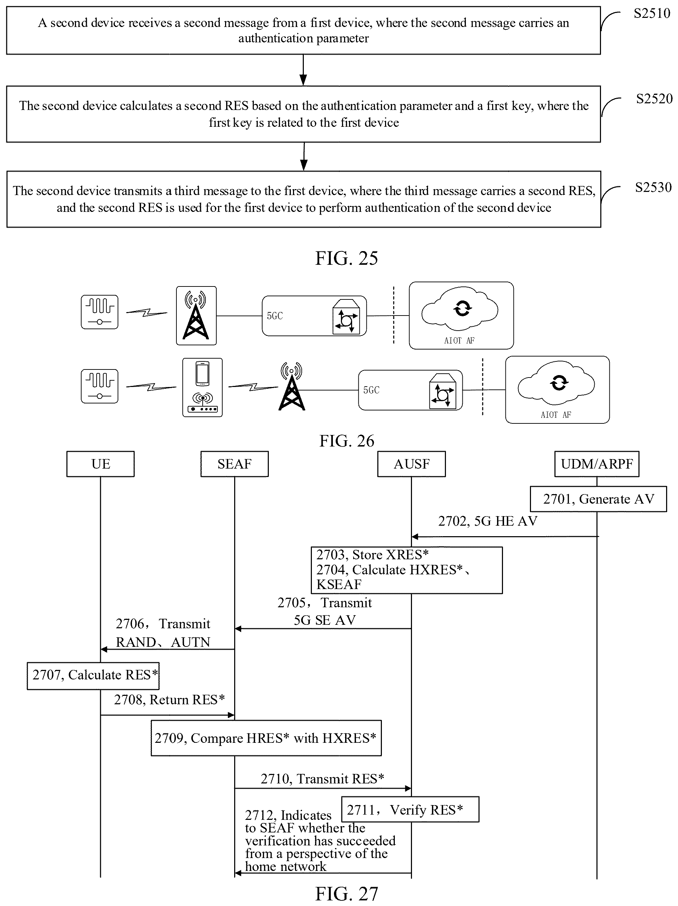

FIG. 25 is a schematic flowchart of an authentication method according to another embodiment of the present application. The method includes at least part of the following.

In S25 10, a second device receives a second message from a first device, where the second message carries an authentication parameter.

In S2520, the second device calculates a second RES based on the authentication parameter and a first key, where the first key is related to the first device.

In S2530, the second device transmits a third message to the first device, where the third message carries a second RES, and the second RES is used for the first device to perform authentication of the second device.

The definitions of the core network side device, the first device, the one or more core network devices, the first network device and the second network device are the same as those in the above embodiments, and thus will not be repeated.

Optionally, calculating, by the second device, the second RES based on the authentication parameter and the physical layer key, includes one of: calculating, by the second device using the first calculation manner, the second RES based on the anonymous key and a physical layer key, the physical layer key being a key shared between the second device and the first device; calculating, by the second device using the first calculation manner, the second RES based on the first random number and the physical layer key; or calculating, by the second device using the first calculation manner, the second RES based on the first RES and the physical layer key.

Generating, by the first device, the second verification RES, includes one of: calculating, by the second device using the first calculation manner, the second RES based on the anonymous key and the physical layer key, the physical layer key being a key shared between the second device and the first device; or calculating, by the second device using the first calculation manner, the second RES based on the first random number and the physical layer key; or calculating, by the second device using the first calculation manner, the second RES based on the first RES and the physical layer key.

In this embodiment, the manners of generating the second RES and the second verification RES are the same as those in the above embodiments and are not described in detail.

The authentication method provided in this embodiment differs from that of the above embodiment in that the verification of the MAC and the verification of the first RES are not performed. In addition, the detailed description of the second message, the third message, the first message and the fourth message, as well as the agreement of the integrity protection key, the agreement of the encryption key, the generation and transmission of the group key between the second device and the first device, etc., may all be the same as those in the above embodiments, and therefore will not be repeated.

It may be seen that through the above authentication method, the second device may receive the authentication parameter, then directly calculate the first RES based on the authentication parameter and the root key that is shared with the core network side device, and transmit the first RES to the first network device via the first device, so that the core network side authenticates the second device. In this way, the second device side is prevented from performing complex calculations while ensuring security, thereby improving processing efficiency of the second device, which is particularly suitable for devices with low computing power.

Finally, the beneficial effects of the solution provided by this embodiment are described in combination with the related art.

Ambient IoT is a new type of IoT terminal studied in 3GPP R19. It is an IoT device powered by energy harvesting, with no battery or limited energy storage capacity. The device has extremely low cost and extremely limited computing power. Currently, there are two types of network architectures in the industry, which may be summarized as direct mode and indirect mode. For example, referring to FIG. 26, the upper part of FIG. 26 shows the direct mode. That is, the AIoT device is directly connected to an access network device (such as a base station) on a network side, and the base station is connected to a core network and then connected to an AIoT AF. The lower part of FIG. 26 shows the indirect mode. That is, the AIoT device accesses the base station via other terminal device (such as a relay UE or proxy UE), and then accesses a 5G core network and the AIoT AF via the base station.

In related art, when a UE accesses a 5G network, it must undergo authentication and key agreement in order to successfully access the 5G network and use network resources. The network authorizes the UE to use network resources and services based on the authentication result. 3GPP security family of standards define the 5G AKA process and the cryptographic algorithms used. The authentication and authorization credentials used in the UE's AKA process are a symmetric root key K, which is stored in a centralized manner by a UDM/ARPF network element of the core network on the network side. Each authorization requires the acquisition of the authorization credential in the UDM, and corresponding authentication calculation is completed by the core network.

As shown in FIG. 27, the AKA process may include the following step.

In S2701, in response to a received authentication request, UDM/ARPF generates an authentication vector (AV). That is, the UDM/ARPF creates a 5G home environment (HE) AV where a separation bit of an authentication management field (AMF) is set to "1". Then, the UDM/ARPF should derive a key authentication server function (KAUSF) and calculate an expected response XRES*. Finally, the UDM/ARPF shall create the 5G HE AV from a random number RAND, an authentication token AUTN, XRES* and KAUSF. In S2702, the UDM shall return the 5G HE AV to the AUSF. In S2703, the AUSF shall temporarily store XRES* together with the received SUCI or SUPI. In S2704, the AUSF shall generate 5G AV based on the 5G HE AV received from the UDM/ARPF, calculate HXRES* from XRES* and KSEAF from KAUSF, replace XRES* in the 5G HE AV with HXRES*, and replace KAUSF with KSEAF. In S2705, the AUSF removes KSEAF and returns the 5G SE AV to SEAF. In S2706, SEAF transmits RAND and AUTN to the UE. In S2707, the USIM calculates a response RES. The USIM shall return RES, CK, IK to ME. The ME shall then calculate RES* from RES. In S2708, the UE returns RES* to SEAF. In S2709, the SEAF calculates HRES* from RES* and compares HRES* with HXRES*. If they agree, SEAF shall consider that authentication succeeds from a serving network's perspective. Otherwise SEAF shall consider that the authentication fails and indicate the failure to AUSF. In S2710, the SEAF transmits RES* received from UE to AUSF. In S2711, the AUSF compares the received RES* with the stored XRES*. If RES* matches XRES*, the AUSF shall consider that authentication succeeds. The AUSF shall notify UDM of the certification result. In S2712, the AUSF indicates to SEAF whether the verification has succeeded from a perspective of the home network.

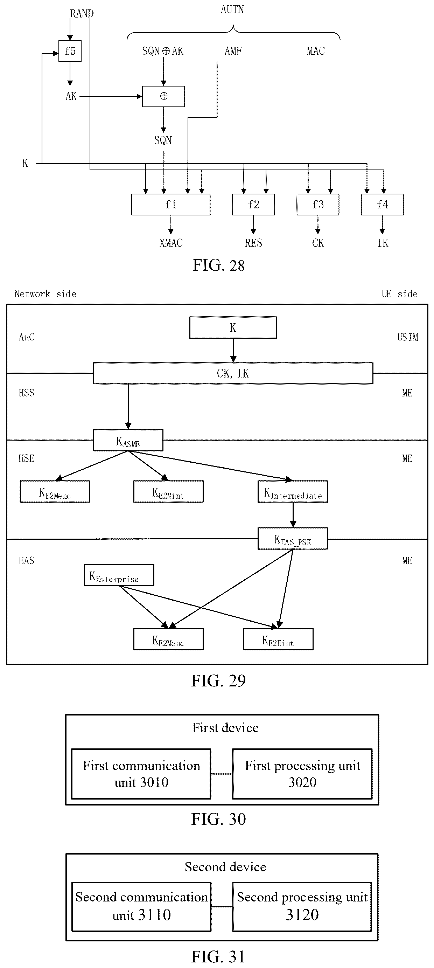

FIG. 28 is authentication architectures corresponding to the above processing flow. Referring to FIG. 28, it may be seen that calculation manners of various parameters in the above processing flow may include: anonymous key $AK = f5K (RAND)$, retrieval serial number $SQN = (SQN * AK) * AK$, $XMAC = f1K (SQN \parallel RAND \parallel AMF)$, $RES = f2K (RAND)$, $CK = f3K (RAND)$, $IK = f4K (RAND)$, $AK = f5K (RAND)$; functions f1 to f5 are MILENAGE cryptographic algorithms defined by the ETSI SAGE group. For example, the method of generating KAUSF used in the above process may use the following parameters to form an input of the KDF and calculate KAUSF: $FC = 0x6A$, $P0 =$ serving network name, $L0 =$ length of the serving network name, $P1 = SQN \, AK$. $L1 =$ length of $SQN \, AK$ (i.e. 0x00 0x06). An input key KEY should be equal to the concatenation $CK \parallel CK$. It may be seen that the parameter calculation in the above process is relatively complex.

With reference to FIG. 29, in the above processing flow, the UE and the network side need to perform 8 KDF calculations to obtain the final encryption key KE2Menc and integrity protection key KE2Eint. Therefore, the 5G AKA and key architecture are relatively complex and are not suitable for the security authentication of the AIoT device. They also do not support the authentication and key agreement between the AIoT device and the UE.

In related art, a radio frequency identification (RFID) system is usually composed of a reader and a tag, and may operate in different frequency bands. Tags may be divided into passive tags, active tags, and semi-active tags according to power supply manners. Coupling manners of the passive tags with the reader are divided into near-field coupling and far-field coupling. The near-field coupling relies on induction. That is, mutual inductance between the reader and the tag causes a change in a tag coil current to be detected by the reader. The far-field coupling relies on backscatter communication.

In the related art, mutual authentication between the reader and the tag may include the following steps. One, the reader generates a random number $RN_r$ and transmits $RN_r$ to the tag. Two, after receiving $RN_r$, the tag also generates a random number RNt locally. The tag calculates $RN_r \| RN_t$ using a hash function and PSK to obtain a message integrity verification code $MIC_1$. Finally, The tag transmits $RN_r$, $RN_t$, $MIC_1$ to the reader. Three, the reader compares the received $RN_r$ with local $RN_r$. If they are not equal, it is ignored. If they are equal, the reader calculates $RN_r \| RN_t$ using the hash function and PSK to obtain $MIC_1'$, and compares $MIC_1$ and $MIC_1'$. If they are not equal, it is ignored. If they are equal, the reader authenticates that the tag is legal, and the reader continues to calculate RNt using the hash function and PSK to obtain $MIC_2$, and finally transmits RNt and $MIC_2$ to the tag. Four, the tag compares the received RNt with the local RNt. If they are not equal, it is ignored. If they are equal, the tag calculates RNt using the hash function and PSK to obtain $MIC_2'$, and compares the received $MIC_2$ with the local calculated $MIC_2'$. If they are not equal, it is ignored. If they are equal, the tag authenticates that the tag is legal and returns the authentication result to the reader. Five, if the tag and reader need to communicate securely, they each derive a session key through KDH(PSK, TID$\|$RID$\|RN_r\|RN_t$). KDH() is a key derivation algorithm.

Through the above analysis, it may be seen that the f1 to f5 functions and KDF function used in the AKA authentication process and key agreement process in the related art have high calculation complexity and complex key architecture, which are not suitable for the security authentication of the AIoT device, and do not support the authentication and key agreement between the AIoT device and the UE. Authentication and key agreement are performed between the tag and the reader, but the authentication and the key agreement cannot be supported between the AIoT devices and the network. Compared with the related art, the various embodiments provided by the present application may realize mutual authentication between the second device and the core network side device, as well as mutual authentication between the second device and the first device, and the second device may directly use the authentication parameter transmitted by the network side and its own root key to implement the authentication processing. In this way, computing power requirements on the second device side are reduced while ensuring security. In addition, in the various embodiments provided by the present application, the processing of agreement of integrity protection key and encryption key does not require multiple complex calculations, and it may be implemented based only on the physical layer key, the anonymous key, the random numbers, etc., which is more suitable for devices with lower computing power.

FIG. 30 is a schematic diagram of a composition structure of a first device according to an embodiment of the present application, and the first device includes a first communication unit 3010.

The first communication unit 3010 is configured to receive a first message from a first network device, the first message carrying a MAC, an authentication parameter and an identifier of a second device; and transmit a second message to the second device, the second message carrying the MAC and the authentication parameter, where the authentication parameter is used for the second device to obtain a verification MAC based on a root key, the verification MAC is used for the second device to perform authentication of a core network side device in combination with the MAC, and the root key is a key shared between the second device and the core network side device.

FIG. 31 is a schematic diagram of a composition structure of a second device according to an embodiment of the present application, and the second device includes a second communication unit 3110 and a second processing unit 3120.

The second communication unit 3110 is configured to receive a second message from a first device, the second message carrying a MAC and an authentication parameter;

The second processing unit 3120 is configured to calculate a verification MAC based on the authentication parameters and a root key, where the root key is a key shared between the second device and the core network side device. In a case where the verification MAC is the same as the MAC, the second device completes authentication of the core network side device.

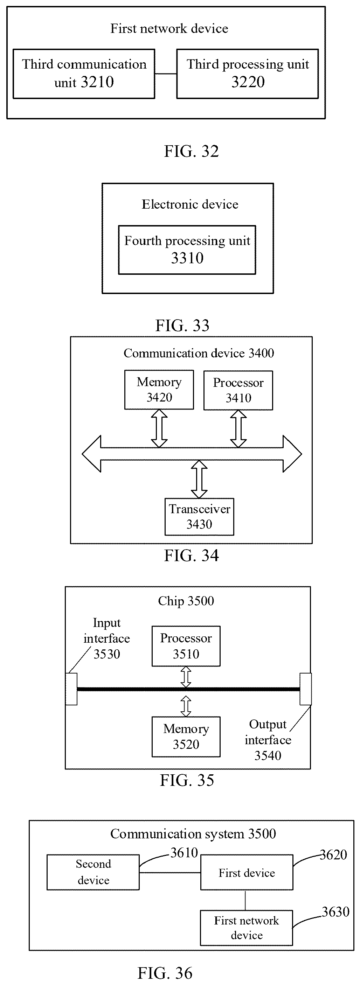

FIG. 32 is a schematic diagram of a composition structure of a first network device according to an embodiment of the present application, and the first network device includes a third communication unit 3210.

The third communication unit 3210 is configured to transmit a first message to a first device, where the first message carries a MAC, an authentication parameter and an identifier of a second device, the authentication parameter is used for the second device to obtain a verification MAC based on a root key, the verification MAC is used for the second device to perform authentication of a core network side device in combination with the MAC, and the root key is a key shared between the second device and the core network side device.

FIG. 33 is a schematic diagram of a composition structure of an electronic device according to an embodiment of the present application, and the electronic device includes fourth processing unit 3310.

The fourth processing unit 3310 is configured to calculate an integrity protection key and/or an encryption key, where the integrity protection key is related to a key generation parameter and a third random number, the encryption key is related to the key generation parameter and a fourth random number, the key generation parameter includes an anonymous key and/or a first random number, the integrity protection key is used to calculate an integrity verification code, and the encryption key is used to encrypt transmitted data and/or decrypt received data.

The present application provides a first device, and the first device includes a first communication unit.

The first communication unit is configured to receive a first message from a first network device, the first message carrying an authentication parameter and an identifier of a second device; transmit a second message to the second device, the second message carrying the authentication parameter; receive a third message from the second device, the third message carrying a first RES, where the first RES is obtained by the second device based on the authentication parameter and a root key, the root key is a key shared between the second device and a core network side device; and transmit a fourth message to the first network device, the fourth message carrying the first RES, and the first RES being used for the core network side device to perform authentication of the second device.

An embodiment of the present application provides a second device, and the second device includes a second communication unit and a second processing unit.

The second communication unit is configured to receive a second message from a first device, the second message carrying an authentication parameter; and transmit a third message to the first device, the third message carrying a first RES, and the first RES being used for a core network side device to perform authentication of the second device.

The second processing unit is configured to calculate the first RES based on the authentication parameter and a root key, the root key being a key shared between the second device and the core network side device.

FIG. 32 is a schematic diagram of a composition structure of a first network device according to an embodiment of the present application, and the first network device includes a third communication unit 3210 and a third processing unit 3220.

The third communication unit 3210 is configured to transmit a first message to a first device, the first message carrying an authentication parameter and an identifier of a second device; receive a fourth message from the first device, the fourth message carrying a first RES, where the first RES is obtained by the second device based on the authentication parameter and a root key, and the root key is a key shared between the second device and a core network side device.

The third processing unit 3220 is configured to determine that authentication of the second device succeeds in a case where the first RES is the same as the first verification RES.

FIG. 30 is a schematic diagram of a composition structure of a first device according to an embodiment of the present application, and the first device includes a first communication unit 3010 and a first processing unit 3020.

The first communication unit 3010 is configured to transmit a second message to a second device, the second message carrying an authentication parameter; and receive a third message from the second device, the third message carrying a second RES, and the second RES being related to the authentication parameter and a first key.

The first processing unit 3020 is configured to generate a second verification RES based on the authentication parameter and the first key; and determine that authentication of the second device succeeds in a case where the second verification RES is the same as the second RES.

An embodiment of the present application provides a second device, and the second device includes a second communication unit and a second processing unit.

The second communication unit is configured to receive a second message from a first device, the second message carrying an authentication parameter; and transmit a third message to the first device, the third message carrying a second RES, and the second RES being used for the first device to perform authentication of the second device.

The second processing unit is configured to calculate the second RES based on the authentication parameter and a first key, the first key being related to the first device.

Each device in the embodiment of the present application may implement corresponding functions of the device in the authentication method embodiments. The processes, functions, implementations and beneficial effects corresponding to the second device, the first device, the first network device, or each module (sub-module, unit, component, etc.) in the electronic device may be found in the corresponding description in the above method embodiments, and will not be repeated here. It should be noted that in the embodiments of the application, the described functions of the second device, the first device, the first network device, or each module (sub-module, unit, component, etc.) in the electronic device may be implemented by either different modules (sub-modules, units, components, etc.) or the same module (sub-module, unit, component, etc.).

FIG. 34 is a schematic diagram showing a structure of a communication device 3400 according to an embodiment of the present application. The communication device 3400 includes a processor 3410. The processor 3410 may call and run a computer program from a memory to cause the communication device 3400 to implement the method in the embodiment of the present application.

In a possible implementation, the communication device 3400 may further include a memory 3420. The processor 3410 may call and run a computer program from the memory 3420 to cause the communication device 3400 to implement the method in the embodiment of the present application.

The memory 3420 may be a separate device independent of the processor 3410, or may be integrated into the processor 3410.

In a possible implementation, the communication device 3400 may further include a transceiver 3430, and the processor 3410 may control the transceiver 3430 to communicate with other devices, specifically, to transmit information or data to other devices, or receive information or data transmitted by other devices.

The transceiver 3430 may include a transmitter and a receiver. The transceiver 3430 may further include antenna(s), and the number of the antennas may be one or more.

In a possible implementation, the communication device 3400 may be the first device, the second device, or the first network device in the embodiments of the present application. The communication device 3400 may implement the corresponding processes implemented by the first device, the second device, or the first network device in the various methods of the embodiments of the present application. For the sake of brevity, they will not be repeated here.

FIG. 35 is a schematic diagram showing a structure of a chip 3500 according to an embodiment of the present application. The chip 3500 includes a processor 3510. The processor 3510 may call and run a computer program from a memory to implement the method in the embodiment of the present application.

In a possible implementation, the chip 3500 may further include a memory 3520. The processor 3510 may call and run a computer program from the memory 3520 to implement the method performed by the access network device or the first core network device in the embodiment of the present application. The memory 3520 may be a separate device independent of the processor 3510, or may be integrated into the processor 3510.

In a possible implementation, the chip 3500 may further include an input interface 3530. The processor 3510 may control the input interface 3530 to communicate with other devices or chips, and specifically, to obtain information or data transmitted by other devices or chips. In a possible implementation, the chip 3500 may further include an output interface 3540. The processor 3510 may control the output interface 3540 to communicate with other devices or chips, and specifically, to output information or data to other devices or chips.

In a possible implementation, the chip may be applied to the first device, the second device, the first network device, or the electronic device in the embodiments of the present application. The chip may implement the corresponding processes implemented by the first device, the second device, the first network device, or the electronic device in the various methods of the embodiments of the present application. For the sake of brevity, they will not be repeated here.

It should be understood that the chip in the embodiments of the present application may also be called a system-level chip, a system chip, a chip system, a system-on-chip chip, etc.

The processor may be a general purpose processor, a digital signal processor (DSP), a field programmable gate array (FPGA), an application specific integrated circuit (ASIC) or other programmable logic devices, a transistor logic device, a discrete hardware component, etc. The general purpose processor may be a microprocessor or any conventional processor.

The memory may be a volatile memory or a nonvolatile memory, or may include the volatile memory and the nonvolatile memory. The non-volatile memory may be a read-only memory (ROM), a programmable ROM (PROM), an erasable PROM (EPROM), an electrically EPROM (EEPROM), or a flash memory. The volatile memory may be a random access memory (RAM).

It should be understood that the above memory is exemplary but not restrictive. For example, the memory in the embodiments of the present application may also be a static RAM (SRAM), a dynamic RAM (DRAM), a synchronous DRAM (SDRAM), a double data rate SDRAM (DDR SDRAM), an enhanced SDRAM (ESDRAM), a synch link DRAM (SLDRAM), a direct rambus RAM (DR RAM), etc. That is, the memory in the embodiments of the present application is intended to include but is not limited to these and any other suitable types of memory.

FIG. 36 is a schematic block diagram of a communication system 3600 according to an embodiment of the present application. The communication system 3600 includes a second device 3610, a first device 3620, and a first network device 3630. The second device 3610, the first device 3620, and the first network device 3630 may be used to implement the corresponding functions implemented by the second device, the first device, and the first network device in the above method respectively.

The above embodiments may be implemented in whole or in part through software, hardware, firmware, or any combination thereof. When implemented by using a software program, the embodiments may be implemented in a form of a computer program product in whole or in part. The computer program product includes one or more computer instructions. When the computer program instructions are loaded on and executed by a computer, processes or functions described in the embodiments of the present application are generated in whole or in part. The computer may be a general-purpose computer, a dedicated computer, a computer network, or any other programmable device. The computer instructions may be stored in a computer-readable storage medium or transmitted from a computer-readable storage medium to another computer-readable storage medium. For example, the computer instructions may be transmitted from a website, computer, server or data center to another website, computer, server or data center via a wired manner (such as coaxial cable, optical fiber, or digital subscriber line (DSL)) or a wireless manner (such as infrared, radio or microwave). The computer-readable storage medium may be any available medium able to be accessed by the computer, or may be a data storage device, such as a server or a data center, integrated by one or more available media. The available medium may be a magnetic medium (e.g., a floppy disk, a hard disk or a magnetic tape), an optical medium (e.g., a DVD), a semiconductor medium (e.g., a solid state drive (SSD)), or the like.

It may be understood that, in the various embodiments of the present application, the magnitude of the serial numbers of the above-mentioned processes does not mean the order of execution. The execution order of each process should be determined by its function and internal logic, and should not constitute any limitation on the implementation process of the embodiments of the present application.

It may be clearly understood by those skilled in the art that, for convenience and brevity of the description, the specific working procedures of the system, the apparatus and the unit described above may refer to the corresponding procedures in the above method embodiments, which will not be repeated here.

The above description is only specific implementation of the present application, but the protection scope of the present application is not limited thereto. Any person skilled in the art may readily conceive of variations or substitutions within the technical scope disclosed in the present application, which should be included within the protection scope of the present application. Therefore, the protection scope of the present application shall be subject to the protection scope of the claims.

**Claims**

1. An authentication method, comprising:

   receiving, by a first device, a first message from a first network device, the first message carrying a MAC, an authentication parameter and an identifier of a second device;
   transmitting, by the first device, a second message to the second device, the second message carrying the MAC and the authentication parameter, wherein the authentication parameter is used for the second device to obtain a verification MAC based on a root key, the verification MAC is used for the second device to perform authentication of a core network side device in combination with the MAC, and the root key is a key shared between the second device and the core network side device.

2. The method according to claim 1, wherein the authentication parameter comprises one of an anonymous key and a first random number.

3. The method according to claim 2, wherein the method further comprises:

   receiving, by the first device, a third message from the second device, the third message being used to indicate that the second device has completed the authentication of the core network side device; and
   transmitting, by the first device, a fourth message to the first network device, the fourth message being used to indicate that the second device has completed the authentication of the core network side device.

4. The method according to claim 3, wherein the third message carries at least one of:

   a first RES, the first RES being used for the core network side device to perform authentication of the second device; or
   a second RES, the second RES being used for the first device to perform authentication of the second device.

5. The method according to claim 4, wherein the fourth message carries the first RES.

6. The method according to claim 5, wherein the second message further carries service parameters, and the service parameters comprise at least one of: a type parameter for indicating an ambient Internet of Things (AIoT) service type, an identifier of a server with an AIoT service function, or a type parameter for indicating an AIoT authentication type.

7. The method according to claim 5, wherein the method further comprises:
   determining, by the first device, that the authentication of the second device succeeds in a case where a second verification RES is the same as the second RES.

8. The method according to claim 7, wherein the method further comprises one of:

   calculating, by the first device using a first calculation manner, the second verification RES based on the anonymous key and a first key, the first key being related to the first device; calculating, by the first device using the first calculation manner, the second verification RES based on the first random number and the first key; or calculating, by the first device using the first calculation manner, the second verification RES based on a first verification RES and the first key.

9. The method according to claim 8, wherein the first key is at least one of: a first intermediate key calculated based on an identifier of the first device and a second random number, or a physical layer key, the physical layer key being a key shared between the second device and the first device.

10. The method according to claim 8, wherein the first message further carries the first verification RES.

11. The method according to any one of claims 3 to 10, wherein the method further comprises: calculating, by the first device, an integrity protection key and/or an encryption key, wherein the integrity protection key is related to a key generation parameter and a third random number, the encryption key is related to the key generation parameter and a fourth random number, the key generation parameter comprises the anonymous key and/or the first random number, the integrity protection key is used to calculate integrity verification codes, and the encryption key is used to encrypt transmitted data and/or decrypt received data.

12. The method according to claim 11, wherein the third message further carries a first integrity verification code.

13. The method according to claim 11 or 12, wherein the third message further carries the third random number and/or the fourth random number.

14. The method according to claim 11 or 12, wherein the method further comprises: transmitting, by the first device, a response message to the second device, wherein the response message responds to the third message, and the response message carries at least one of: indication information that integrity verification of the third message has succeeded, a second integrity verification code, the fourth random number, or an encrypted group key.

15. The method according to claim 11 or 12, wherein the second message further carries at least one of: the third random number, a third integrity verification code, an encrypted group key, or the fourth random number.

16. The method according to any one of claims 1 to 15, wherein the method further comprises:

   receiving, by the first device, an authentication request from the second device, the authentication request carrying the identifier of the second device; forwarding, by the first device, the authentication request to the first network device.

17. The method according to any one of claims 1 to 15, wherein the method further comprises: transmitting, by the first device, an authentication request to the first network device, the authentication request carrying the identifier of the second device and/or an identifier of a device group to which the second device belongs.

18. The method according to any one of claims 1 to 17, wherein the core network side device comprises a core network, or a verification server; the first network device is an authentication server function (AUSF) or an authentication server (AS); the second device is an AIoT device; the first device comprises at least one of: a terminal device, an access network device, an authenticator, or a first core network device.

19. An authentication method, comprising:

   receiving, by a second device, a second message from a first device, the second message carrying a MAC and an authentication parameter; calculating, by the second device, a verification MAC based on the authentication parameter and a root key, the root key being a key shared between the second device and a core network side device; completing, by the second device, authentication of the core network side device in a case where the verification MAC is the same as the MAC.

20. The method according to claim 19, wherein the authentication parameter comprises one of an anonymous key and a first random number.

21. The method according to claim 20, wherein calculating, by the second device, the verification MAC based on the authentication parameter and the root key, comprises one of:

calculating, by the second device using a first calculation manner, the verification MAC based on the anonymous key and the root key;
calculating, by the second device, the anonymous key based on an exclusive OR (XOR) of the first random number and the root key, and calculating, by the second device using the first calculation manner, the verification MAC based on the anonymous key and the root key;
calculating, by the second device, the first random number based on an XOR of the anonymous key and the root key, and calculating, by the second device using the first calculation manner, the verification MAC based on the first random number and the root key; or
calculating, by the second device using the first calculation manner, the verification MAC based on the first random number and the root key.

22. The method according to claim 21, wherein calculating, by the second device using the first calculation manner, the verification MAC based on the anonymous key and the root key, comprises: calculating, by the second device using the first calculation manner, the verification MAC based on service parameters, the anonymous key and the root key; and/or,
calculating, by the second device using the first calculation manner, the verification MAC based on the first random number and the root key, comprises: calculating, by the second device using the first calculation manner, the verification MAC based on the service parameters, the first random number and the root key.

23. The method according to claim 21 or 22, wherein the method further comprises:
transmitting, by the second device, a third message to the first device, the third message being used to indicate the second device has completed the authentication of the core network side device.

24. The method according to claim 23, wherein the third message carries at least one of:

a first RES, the first RES being used for the core network side device to perform authentication of the second device; or
a second RES, the second RES being used for the first device to perform authentication of the second device.

25. The method according to claim 24, wherein the method further comprises one of:

calculating, by the second device using the first calculation manner, the first RES based on the first random number and the root key; or
calculating, by the second device using the first calculation manner, the first RES based on the anonymous key and the root key.

26. The method according to claim 25, wherein calculating, by the second device using the first calculation manner, the first RES based on the first random number and the root key, comprises: calculating, by the second device using the first calculation manner, the first RES based on service parameters, the first random number and the root key; and/or, calculating, by the second device using the first calculation manner, the first RES based on the anonymous key and the root key, comprises: calculating, by the second device using the first calculation manner, the first RES based on the service parameters, the anonymous key and the root key.

27. The method according to any one of claims 24 to 26, wherein the method further comprises one of:

calculating, by the second device using the first calculation manner, the second RES based on the anonymous key and a first key, the first key being related to the first device;
calculating, by the second device using the first calculation manner, the second RES based on the first random number and the first key; or
calculating, by the second device using the first calculation manner, the second RES based on the first RES and the first key.

28. The method according to claim 27, wherein the first key is at least one of: a first intermediate key calculated based on an identifier of the first device and a second random number, or a physical layer key, the physical layer key being a key shared between the second device and the first device.

29. The method according to claim 22 or 26, wherein the second message further carries the service parameters, and the service parameters comprise at least one of: a type parameter for indicating an ambient Internet of Things (AIoT) service type, an identifier of a server with an AIoT service function, or a type parameter for indicating an AIoT authentication type.

30. The method according to any one of claims 23 to 28, wherein the method further comprises:
calculating, by the second device, an integrity protection key and/or an encryption key, wherein the integrity protection key is related to a key generation parameter and a third random number, the encryption key is related to the key generation parameter and a fourth random number, the key generation parameter comprises the anonymous key and/or the first random number, the integrity protection key is used to calculate integrity verification codes, and the encryption key is used to encrypt transmitted data and/or decrypt received data.

31. The method according to claim 30, wherein the third message further carries a first integrity verification code.

32. The method according to claim 30 or 31, wherein the third message further carries the third random number and/or the fourth random number.

33. The method according to claim 30 or 31, wherein the method further comprises:
receiving, by the second device, a response message from the first device, wherein the response message responds to the third message, and the response message carries at least one of: indication information that integrity verification of the third message has passed, a second integrity verification code, the fourth random number, or an encrypted group key.

34. The method according to claim 30 or 31, wherein the second message further carries at least one of: the third random number, a third integrity verification code, an encrypted group key, or the fourth random number.

35. The method according to claim 33 or 34, wherein the second message is used to request the authentication, and the method further comprises:
decrypting, by the second device, the encrypted group key based on the encryption key to obtain a group key, wherein the group key is used to encrypt data transmitted between the second device and the first device.

36. The method according to any one of claims 19 to 35, wherein the method further comprises:
transmitting, by the second device, an authentication request to the first device, the authentication request carrying an identifier of the second device.

37. The method according to any one of claims 21, 22 and 25-27, wherein the first calculation manner comprises one of a second authentication function, a hash algorithm, an advanced encryption standard (AES), ACSON, snow third generation (SNOW 3G), and ZUChongzhi (ZUC).

38. The method according to any one of claims 19 to 37, wherein the core network side device comprises one or more core network devices or authentication servers; the second device is an AIoT device; the first device comprises at least one of a terminal device, an access network device, an authenticator, or a first core network device.

39. An authentication method, comprising:
transmitting, by a first network device, a first message to a first device, wherein the first message carries a MAC, an authentication parameter and an identifier of a second device, the authentication parameter is used for the second device to obtain a verification MAC based on a root key, the verification MAC is used for the second device to perform authentication of a core network side device in combination with the MAC, and the root key is a key shared between the second device and the core network side device.

40. The method according to claim 39, wherein the authentication parameter comprises one of an anonymous key and a first random number.

**41.** The method according to claim 40, wherein the method further comprises one of:

receiving, by the first network device, the MAC and the authentication parameter from a second network device; or
generating, by the first network device, the authentication parameter, and calculating, by the first network device, the MAC based on the root key and the authentication parameter.

**42.** The method according to claim 41, wherein calculating, by the first network device, the MAC based on the root key and the authentication parameter, comprises one of:

calculating, by the first network device using a first calculation manner, the MAC based on the anonymous key and the root key;
calculating, by the first network device, the anonymous key based on an exclusive OR (XOR) of the first random number and the root key, and calculating, by the first network device using the first calculation manner, the MAC based on the anonymous key and the root key;
calculating, by the first network device, the first random number based on an XOR of the anonymous key and the root key, and calculating, by the first network device using the first calculation manner, the MAC based on the first random number and the root key; or
calculating, by the first network device using the first calculation manner, the MAC based on the first random number and the root key.

**43.** The method according to claim 42, wherein calculating, by the first network device using the first calculation manner, the MAC based on the anonymous key and the root key, comprises: calculating, by the first network device using the first calculation manner, the MAC based on service parameters, the anonymous key and the root key; and/or, calculating, by the first network device using the first calculation manner, the MAC based on the first random number and the root key, comprises: calculating, by the first network device using the first calculation manner, the MAC based on the service parameters, the first random number and the root key.

**44.** The method according to claim 43, wherein the method further comprises:
receiving, by the first network device, a fourth message from the first device, wherein the fourth message is used to indicate that the second device has completed the authentication of the core network side device.

**45.** The method according to claim 44, wherein the fourth message carries a first RES; and the method further comprises: determining, by the first network device, that authentication of the second device succeeds in a case where the first RES is the same as a first verification RES.

**46.** The method according to claim 45, wherein the first message further carries the first verification RES.

**47.** The method according to claim 45 or 46, wherein the method further comprises one of:

receiving, by the first network device, the first verification RES from the second network device; or
calculating, by the first network device using the first calculation manner, the first verification RES based on the root key and the authentication parameter.

**48.** The method according to claim 47, wherein calculating, by the first network device using the first calculation manner, the first verification RES based on the root key and the authentication parameter, comprises one of:

calculating, by the first network device using the first calculation manner, the first verification RES based on the first random number and the root key; or
calculating, by the first network device using the first calculation manner, the first verification RES based on the anonymous key and the root key.

**49.** The method according to claim 48, wherein calculating, by the first network device using the first calculation manner, the first verification RES based on the first random number and the root key, comprises: calculating, by the first network device using the first calculation manner, the first verification RES based on the service parameters, the first random number and the root key; and/or, calculating, by the first network device using the first calculation manner, the first verification RES based on the anonymous key and the root key, comprises: calculating, by the first network device using the first calculation manner, the first verification RES based on the service parameters, the anonymous key and the root key.

50. The method according to claim 43 or 49, wherein the first message further carries the service parameters, and the service parameters comprise at least one of: a type parameter for indicating an ambient Internet of Things (AIoT) service type, an identifier of a server with an AIoT service function, or a type parameter for indicating an AIoT authentication type.

51. The method according to any one of claims 39 to 50, wherein the first message further carries at least one of a second intermediate key, a third intermediate key or a fourth intermediate key; and the method further comprises one of:

   receiving, by the first network device, at least one of the second intermediate key, the third intermediate key or the fourth intermediate key that are transmitted by a second network device;
   calculating, by the first network device using a third calculation manner, the second intermediate key based on an anonymous key;
   calculating, by the first network device using the third calculation manner, the second intermediate key based on a first random number;
   calculating, by the first network device using the third calculation manner, the second intermediate key based on the anonymous key and a first key;
   calculating, by the first network device using the third calculation manner, the second intermediate key based on the first random number and the first key;
   calculating, by the first network device using the third calculation manner, the third intermediate key based on the root key and the first random number;
   calculating, by the first network device using the third calculation manner, the third intermediate key based on the root key and the anonymous key;
   calculating, by the first network device, using the third calculation manner the third intermediate key based on the root key, the first key and the first random number;
   calculating, by the first network device using the third calculation manner, the fourth intermediate key based on the root key and the first random number, and calculating, using a second calculation manner, the third intermediate key based on the fourth intermediate key; or
   calculating, by the first network device using the third calculation manner, the fourth intermediate key based on the root key and the first random number, and calculating, using the second calculation manner, the third intermediate key based on the fourth intermediate key and the first key.

52. The method according to any one of claims 39 to 51, wherein the first message further carries an identifier of a device group to which the second device belongs; and the method further comprises one of:

   receiving, by the first network device, an authentication request from the first device, the authentication request carrying the identifier of the second device and/or the identifier of the device group to which the second device belongs; or
   receiving, by the first network device, a trigger message from a server, the trigger message carrying the identifier of the second device and/or the identifier of the device group to which the second device belongs.

53. The method according to any one of claims 39 to 52, wherein the core network side device comprises one or more core network devices or authentication servers; the second device is an AIoT device; the first device comprises at least one of a terminal device, an access network device, an authenticator, or a first core network device; the first network device is an authentication server function (AUSF) or an authentication server; the second network device comprises at least one of a user data management (UDM), or an authentication credential repository and processing function (ARPF).

54. A key generation method, comprising:
   calculating, by an electronic device, an integrity protection key and/or an encryption key, wherein the integrity protection key is related to a key generation parameter and a third random number, the encryption key is related to the key generation parameter and a fourth random number, the key generation parameter comprises an anonymous key and/or a first random number, the integrity protection key is used to calculate an integrity verification code, and the encryption key is used to encrypt transmitted data and/or decrypt received data.

55. The method according to claim 54, wherein the electronic device is a first device or a second device; the second device is an ambient Internet of Things (AIoT) device, and the first device comprises at least one of a terminal device, an access network device, an authenticator or a first core network device.

56. The method according to claim 55, wherein calculating the integrity protection key comprises one of:

calculating, using a second calculation manner, the integrity protection key based on the anonymous key and the third random number;

calculating, using the second calculation manner, the integrity protection key based on the first random number and the third random number;

calculating, using the second calculation manner, the integrity protection key based on the anonymous key, a first key and the third random number;

calculating, using the second calculation manner, the integrity protection key based on the first random number, the first key and the third random number;

calculating, using the second calculation manner, the integrity protection key based on a second intermediate key and the third random number, the second intermediate key being related to the key generation parameter; or

calculating, using the second calculation manner, the integrity protection key based on a third intermediate key and the third random number, the third intermediate key being related to a root key and the key generation parameter.

57. The method according to claim 55, wherein calculating the encryption key comprises one of:

calculating, using a second calculation manner, the encryption key based on the fourth random number and the anonymous key;

calculating, using the second calculation manner, the encryption key based on the first random number and the fourth random number;

calculating, using the second calculation manner, the encryption key based on the anonymous key, a first key and the fourth random number;

calculating, using the second calculation manner, the encryption key based on the first random number, the first key and the fourth random number;

calculating, using the second calculation manner, the encryption key based on a second intermediate key and the fourth random number, the second intermediate key being related to the key generation parameter; or

calculating, using the second calculation manner, the encryption key based on a third intermediate key and the fourth random number, the third intermediate key being related to a root key and the key generation parameter.

58. The method according to claim 56 or 57, wherein the method further comprises at least one of:

calculating, using a third calculation manner, the second intermediate key based on the anonymous key;

calculating, using the third calculation manner, the second intermediate key based on the first random number;

calculating, using the third calculation manner, the second intermediate key based on the anonymous key and the first key;

calculating, using the third calculation manner, the second intermediate key based on the first random number and the first key;

calculating, using the third calculation manner, the third intermediate key based on the root key and the first random number;

calculating, using the third calculation manner, the third intermediate key based on the root key and the anonymous key;

calculating, using the third calculation manner, the third intermediate key based on the root key, the first key and the first random number;

calculating, using the third calculation manner, a fourth intermediate key based on the root key and the first random number, and calculating, using the second calculation manner, the third intermediate key based on the fourth intermediate key; or

calculating, using the third calculation manner, the fourth intermediate key based on the root key and the first random number, and calculating, using the second calculation manner, the third intermediate key based on the fourth intermediate key and the first key.

59. The method according to claim 55, wherein the electronic device is the second device, and the method further comprises:

decrypting, by the second device, an encrypted group key based on the encryption key to obtain a group key, wherein the group key is used to encrypt data transmitted between the second device and the first device.

60. The method according to claim 55, wherein the electronic device is the first device, and the method further comprises:

encrypting, by the first device, a group key based on the encryption key to obtain an encrypted group key.

61. The method according to claim 60, wherein the method further comprises one of:

calculating, by the first device using a third calculation manner, the group key based on an identifier of the first device, an anonymous key of each device in a group to which the second device belongs, an identifier of each device, and the third random number;
calculating, by the first device using the third calculation manner, the group key based on the identifier of the first device, the anonymous key of each device in the group to which the second device belongs, an intermediate key of each device, the identifier of each device, and the third random number;
calculating, by the first device using the third calculation manner, the group key based on the identifier of the first device, an intermediate key of each device in the group to which the second device belongs, the identifier of each device, and the third random number;
calculating, by the first device using the third calculation manner, the group key based on the identifier of the first device, the anonymous key of each device in the group to which the second device belongs, the intermediate key of each device, the identifier of each device, and the third random number;
calculating, by the first device using the third calculation manner, the group key based on the identifier of the first device, the anonymous key of each device in the group to which the second device belongs, a first key of each device, the identifier of each device, and the third random number;
calculating, by the first device using the third calculation manner, the group key based on the identifier of the first device, the intermediate key of each device in the group to which the second device belongs, the first key of each device, the identifier of each device, and the third random number; or
calculating, by the first device using the third calculation manner, the group key based on the identifier of the first device, the anonymous key of each device in the group to which the second device belongs, the intermediate key of each device, the first key of each device, the identifier of each device, and the third random number.

62. The method according to claim 60, wherein the method further comprises one of:

calculating, by the first device using a third calculation manner, the group key based on an identifier of the device group, an identifier of the first device, an anonymous key of each device in a group to which the second device belongs, an identifier of each device, and the third random number;
calculating, by the first device using the third calculation manner, the group key based on the identifier of the device group, the identifier of the first device, the anonymous key of each device in the group to which the second device belongs, an intermediate key of each device, the identifier of each device, and the third random number;
calculating, by the first device using the third calculation manner, the group key based on the identifier of the device group, the identifier of the first device, the intermediate key of each device in the group to which the second device belongs, a physical layer key of each device, the identifier of each device and the third random number;
calculating, by the first device using the third calculation manner, the group key based on the identifier of the device group, the identifier of the first device, the anonymous key of each device in the group to which the second device belongs, the intermediate key of each device, the identifier of each device, and the third random number;
calculating, by the first device using the third calculation manner, the group key based on the identifier of the device group, the identifier of the first device, the anonymous key of each device in the group to which the second device belongs, a first key of each device, the identifier of each device, and the third random number;
calculating, by the first device using the third calculation manner, the group key based on the identifier of the device group, the identifier of the first device, the anonymous key of each device in the group to which the second device belongs, the intermediate key of each device, the identifier of each device, and the third random number;
calculating, by the first device using the third calculation manner, the group key based on the identifier of the device group, the identifier of the first device, the intermediate key of each device in the group to which the second device belongs, the first key of each device, the identifier of each device, and the third random number; or
calculating, by the first device using the third calculation manner, the group key based on the identifier of the device group, the identifier of the first device, the anonymous key of each device in the group to which the second device belongs, the intermediate key of each device, the first key of each device, the identifier of each device, and the third random number.

63. The method according to any one of claims 56 to 58, 61 and 62, wherein the first key is at least one of: a first intermediate key calculated based on an identifier of the first device and a second random number, or a physical layer key, the physical layer key being a key shared between the second device and the first device.

64. An authentication method, comprising:

receiving, by the first device, a first message from a first network device, the first message carrying an authentication parameter and an identifier of a second device;

transmitting, by the first device, a second message to the second device, the second message carrying the authentication parameter;

receiving, by the first device, a third message from the second device, the third message carrying a first RES, wherein the first RES is obtained by the second device based on the authentication parameter and a root key, and the root key is a key shared between the second device and a core network side device; and

transmitting, by the first device, a fourth message to the first network device, the fourth message carrying the first RES, and the first RES being used for the core network side device to perform authentication of the second device.

65. The method according to claim 64, wherein the third message further carries a second RES, and the method further comprises:

determining, by the first device, that authentication of the second device succeeds in a case where a second verification RES is the same as the second RES.

66. The method of claim 65, wherein the method further comprises one of:

calculating, by the first device using a first calculation manner, the second verification RES based on an anonymous key and a first key, the first key being related to the first device;

calculating, by the first device using the first calculation manner, the second verification RES based on a first random number and the first key; or

calculating, by the first device using the first calculation manner, the second verification RES based on a first verification RES and the first key.

67. The method according to claim 66, wherein the first key is at least one of: a first intermediate key calculated based on an identifier of the first device and a second random number, or a physical layer key, the physical layer key being a key shared between the second device and the first device.

68. The method according to claim 66, wherein the first message further carries the first verification RES.

69. The method according to any one of claims 64 to 68, wherein the core network side device comprises one or more core network devices or authentication servers; the second device is an ambient Internet of Things (AIoT) device; the first device comprises at least one of a terminal device, an access network device, an authenticator, or a first core network device.

70. An authentication method, comprising:

receiving, by a second device, a second message from a first device, the second message carrying an authentication parameter;

calculating, by the second device, a first RES based on the authentication parameter and a root key, the root key being a key shared between the second device and a core network side device;

transmitting, by the second device, a third message to the first device, the third message carrying the first RES, and the first RES being used for the core network side device to perform authentication of the second device.

71. The method according to claim 70, wherein the authentication parameter comprises one of an anonymous key and a first random number; and calculating, by the second device, the first RES based on the authentication parameter and the root key, comprises one of:

calculating, by the second device using a first calculation manner, the first RES based on the first random number and the root key; or

calculating, by the second device using the first calculation manner, the first RES based on the anonymous key and the root key.

72. The method according to claim 71, wherein calculating, by the second device using the first calculation manner, the first RES based on the first random number and the root key, comprises: calculating, by the second device using the first calculation manner, the first RES based on service parameters, the first random number and the root key; and/or, calculating, by the second device using the first calculation manner, the first RES based on the anonymous key and the root key, comprises: calculating, by the second device using the first calculation manner, the first RES based on the service parameters, the anonymous key and the root key.

73. The method according to claim 72, the second message further carries the service parameters, and the service parameters comprise at least one of: a type parameter for indicating an ambient Internet of Things (AIoT) service type, an identifier of a server with an AIoT service function, or a type parameter for indicating an AIoT authentication type.

74. The method according to any one of claims 70 to 73, wherein the third message further carries a second RES, and the second RES is used for the first device to perform authentication of the second device; and the method further comprises one of:

calculating, by the second device using a first calculation manner, the second RES based on an anonymous key and a first key, the first key being related to the first device;
calculating, by the second device using the first calculation manner, the second RES based on a first random number and the first key; or
calculating, by the second device using the first calculation manner, the second RES based on the first RES and the first key.

75. The method according to claim 74, wherein the first key is at least one of: a first intermediate key calculated based on an identifier of the first device and a second random number, or a physical layer key, the physical layer key being a key shared between the second device and the first device.

76. The method according to claim 75, wherein the first key is at least one of: the first intermediate key calculated based on the identifier of the first device and the second random number, or the physical layer key, and the physical layer key is the key shared between the second device and the first device.

77. The method according to any one of claims 70 to 76, wherein the core network side device comprises one or more core network devices or authentication servers; the second device is an AIoT device; the first device comprises at least one of a terminal device, an access network device, an authenticator, or a first core network device.

78. An authentication method, comprising:

transmitting, by a first network device, a first message to a first device, the first message carrying an authentication parameter and an identifier of a second device;
receiving, by the first network device, a fourth message from the first device, the fourth message carrying a first RES, wherein the first RES is obtained by the second device based on the authentication parameter and a root key, and the root key is a key shared between the second device and a core network side device; and
determining, by the first network device, that authentication of the second device succeeds in a case where the first RES is the same as a first verification RES.

79. The method according to claim 78, wherein the authentication parameter comprises one of an anonymous key and a first random number.

80. The method according to claim 79, wherein the method further comprises one of:

receiving, by the first network device, the authentication parameter and the first verification RES that are transmitted by a second network device; or
calculating, by the first network device using a first calculation manner, the first verification RES based on the root key and the authentication parameter.

81. The method according to claim 80, wherein the core network side device comprises one or more core network devices or authentication servers; the second device is an ambient Internet of Things (AIoT) device; the first device comprises at least one of a terminal device, an access network device, an authenticator, or a first core network device; the first network device is an authentication server function (AUSF) or an authentication server; the second network device comprises at least one of a user data management (UDM), or an authentication credential repository and processing function (ARPF).

82. An authentication method, comprising:

transmitting, by a first device, a second message to a second device, the second message carrying an authentication parameter;

receiving, by the first device, a third message from the second device, the third message carrying a second RES, and the second RES being related to the authentication parameter and a first key;

generating, by the first device, a second verification RES based on the authentication parameter and the first key; and

determining, by the first device, that authentication of the second device succeeds in a case where the second verification RES is the same as the second RES.

83. The method according to claim 82, wherein the method further comprises: receiving, by the first device, a first message from a first network device, the first message carrying the authentication parameter and an identifier of the second device.

84. The method according to claim 83, wherein generating, by the first device, the second verification RES based on the authentication parameter and the first key, comprises one of:

calculating, by the first device using a first calculation manner, the second verification RES based on an anonymous key and the first key, the first key being related to the first device;

calculating, by the first device using the first calculation manner, the second verification RES based on a first random number and the first key; or

calculating, by the first device using the first calculation manner, the second verification RES based on a first verification RES and the first key.

85. The method according to claim 84, wherein the first key is at least one of: a first intermediate key calculated based on an identifier of the first device and a second random number, or a physical layer key, the physical layer key being a key shared between the second device and the first device.

86. The method according to claim 84, wherein the first message further carries the first verification RES.

87. The method according to any one of claims 82 to 86, wherein the second device is an ambient Internet of Things (AIoT) device; and the first device comprises at least one of a terminal device, an access network device, an authenticator, or a first core network device.

88. An authentication method, comprising:

receiving, by a second device, a second message from a first device, the second message carrying an authentication parameter;

calculating, by the second device, a second RES based on the authentication parameter and a first key, the first key being related to the first device; and

transmitting, by the second device, a third message to the first device, the third message carrying the second RES, and the second RES being used for the first device to perform authentication of the second device.

89. The method according to claim 88, wherein the authentication parameter comprises one of an anonymous key and a first random number; and calculating, by the second device, the second RES based on the authentication parameter and the first key, comprises one of:

calculating, by the second device using a first calculation manner, the second RES based on the anonymous key and the first key;

calculating, by the second device using the first calculation manner, the second RES based on the first random number and the first key; or

calculating, by the second device using the first calculation manner, the second RES based on a first RES and the first key.

90. The method according to claim 89, wherein the first key is at least one of: a first intermediate key calculated based on an identifier of the first device and a second random number, or a physical layer key, the physical layer key being a key shared between the second device and the first device.

91. The method according to any one of claims 88 to 90, wherein the first device comprises at least one of a terminal device, an access network device, or an authenticator; and the second device is an ambient Internet of Things (AIoT) device.

92. A first device, comprising:

a first communication unit configured to receive a first message from a first network device, the first message carrying a MAC, an authentication parameter, and an identifier of a second device; and transmit a second message to the second device, the second message carrying the MAC and the authentication parameter, wherein the authentication parameter is used for the second device to obtain a verification MAC based on a root key, the verification MAC is used for the second device to perform authentication of a core network side device in combination with the MAC, and the root key is a key shared between the second device and the core network side device.

93. A second device, comprising:

a second communication unit configured to receive a second message from a first device, the second message carrying a MAC and an authentication parameter;
a second processing unit configured to calculate a verification MAC based on the authentication parameter and a root key, the root key being a key shared between the second device and a core network side device; in a case where the verification MAC is the same as the MAC, the second device completing authentication of the core network side device.

94. A first network device, comprising:

a third communication unit configured to transmit a first message to a first device, wherein the first message carries a MAC, an authentication parameter and an identifier of a second device, the authentication parameter is used for the second device to obtain a verification MAC based on a root key, the verification MAC is used for the second device to perform authentication of a core network side device in combination with the MAC, and the root key is a key shared between the second device and the core network side device.

95. An electronic device, comprising:

a fourth processing unit configured to calculate an integrity protection key and/or an encryption key, wherein the integrity protection key is related to a key generation parameter and a third random number, the encryption key is related to the key generation parameter and a fourth random number, the key generation parameter comprises an anonymous key and/or a first random number, the integrity protection key is used to calculate an integrity verification code, and the encryption key is used to encrypt transmitted data and/or decrypt received data.

96. A first device, comprising:

a first communication unit configured to receive a first message from a first network device, the first message carrying an authentication parameter and an identifier of a second device; transmit a second message to the second device, the second message carrying the authentication parameter; receive a third message from the second device, the third message carrying a first RES, the first RES being obtained by the second device based on the authentication parameter and a root key, and the root key being a key shared between the second device and a core network side device; and transmit a fourth message to the first network device, the fourth message carrying the first RES, and the first RES being used for the core network side device to perform authentication of the second device.

97. A second device, comprising:

a second communication unit configured to receive a second message from a first device, the second message carrying an authentication parameter; and transmit a third message to the first device, the third message carrying a first RES, and the first RES being used for a core network side device to perform authentication of the second device; and
a second processing unit configured to calculate the first RES based on the authentication parameter and a root key, the root key being a key shared between the second device and the core network side device.

98. A first network device, comprising:

a third communication unit configured to transmit a first message to a first device, the first message carrying an authentication parameter and an identifier of a second device; receive a fourth message from the first device, the fourth message carrying a first RES, the first RES being obtained by the second device based on the authentication parameter and a root key, and the root key being a key shared between the second device and a core network side device; and

a third processing unit configured to determine that authentication of the second device succeeds in a case where the first RES is the same as a first verification RES.

**99.** A first device, comprising:

a first communication unit configured to transmit a second message to a second device, the second message carrying an authentication parameter; and receive a third message from the second device, the third message carrying a second RES, and the second RES being related to the authentication parameter and a first key; and

a first processing unit configured to generate a second verification RES based on the authentication parameter and the first key; and determine that authentication of the second device succeeds in a case where the second verification RES is the same as the second RES.

**100.**

A second device, comprising:

a second communication unit configured to receive a second message from a first device, the second message carrying an authentication parameter; and transmit a third message to the first device, the third message carrying a second RES, and the second RES being used for the first device to perform authentication of the second device; and

a second processing unit configured to calculate the second RES based on the authentication parameter and a first key, the first key being related to the first device.

**101.**

A first device, comprising: a transceiver, a processor and a memory, wherein the memory is configured to store a computer program, and the processor is configured to call and run the computer program stored in the memory, so that the first device performs the method according to any one of claims 1 to 18, claims 64 to 69, or claims 82 to 87.

**102.**

A second device, comprising: a transceiver, a processor and a memory, wherein the memory is configured to store a computer program, and the processor is configured to call and run the computer program stored in the memory, so that the second device performs the method according to any one of claims 19 to 38, claims 70 to 77, or claims 88 to 91.

**103.**

A first network device, comprising: a transceiver, a processor and a memory, wherein the memory is configured to store a computer program, and the processor is configured to call and run the computer program stored in the memory, so that the first network device performs the method according to any one of claims 39 to 53 or claims 78 to 81.

**104.**

An electronic device, comprising: a transceiver, a processor and a memory, wherein the memory is configured to store a computer program, and the processor is configured to call and run the computer program stored in the memory, so that the electronic device performs the method according to any one of claims 54 to 63.

**105.**

A chip, comprising: a processor, wherein the processor is configured to call and run a computer program from a memory, so that a device equipped with the chip performs the method according to any one of claims 1 to 18, claims 19 to 38, claims 39 to 53, claims 54 to 63, claims 64 to 69, claims 70 to 77, claims 78 to 81, claims 82 to 87, or claims 88 to 91.

**106.**

A computer-readable storage medium configured to store a computer program, wherein the computer program, when executed by a device, causes the device to perform the method according to any one of claims 1 to 18, claims 19 to 38, claims 39 to 53, claims 54 to 63, claims 64 to 69, claims 70 to 77, claims 78 to 81, claims 82 to 87, or claims 88 to 91.

**107.**

A computer program product comprising computer program instructions, wherein the computer program instructions cause a computer to perform a method according to any one of claims 1 to 18, claims 19 to 38, claims 39 to 53, claims 54 to 63, claims 64 to 69, claims 70 to 77, claims 78 to 81, claims 82 to 87, or claims 88 to 91.

**108.**
A computer program, wherein the computer program causes a computer to perform the method according to any one of claims 1 to 18, claims 19 to 38, claims 39 to 53, claims 54 to 63, claims 64 to 69, claims 70 to 77, claims 78 to 81, claims 82 to 87, or claims 88 to 91.

100

FIG. 1

A first device receives a first message from a first network device, the first message carrying a MAC, an authentication parameter and an identifier of a second device ⌐S210

The first device transmits a second message to the second device, the second message carrying the MAC and the authentication parameter, where the authentication parameter is used for the second device to obtain a verification MAC based on a root key, the verification MAC is used for the second device to perform authentication of a core network side device in combination with the MAC, and the root key is a key shared between the second device and the core network side device ⌐S220

FIG. 2

A second device receives a second message from a first device, the second message carrying a MAC and an authentication parameter ⌐S310

The second device calculates a verification MAC based on the authentication parameter and a root key, the root key being a key shared between the second device and a core network side device ⌐S320

In a case where the verification MAC is the same as the MAC, the second device completes authentication of the core network side device ⌐S330

FIG. 3

A first network device transmits a first message to a first device, the first message carrying a MAC, an authentication parameter and an identifier of a second device, where the authentication parameter is used for the second device to obtain a verification MAC based on a root key, the verification MAC is used for the second device to perform authentication of a core network side device in combination with the MAC, and the root key is a key shared between the second device and the core network side device ⌐S410

FIG. 4

An electronic device calculates an integrity protection key and/or an encryption key, where the integrity protection key is related to a key generation parameter and a third random number, the encryption key is related to the key generation parameter and a fourth random number, the key generation parameter includes an anonymous key and/or a first random number, the integrity protection key is used to calculate an integrity verification code, and the encryption key is used to encrypt transmitted data and/or decrypt received data ⌐S510

FIG. 5

FIG. 6

FIG. 7a

FIG. 7b

FIG. 8

FIG. 9

FIG. 10

FIG. 11

A-IoT | UE | KMS | AUSF/UDM/ARPF

Kr (A-IoT)

Kr (AUSF/UDM/ARPF)

1201. Authentication request (A-IoT ID)

1202. Authentication request (A-IoT ID)

1203

$AK = Kr \oplus RAND$

$MAC = f2 \ (Kr, AK)$

$XRES = f2 \ (Kr, RAND)$

1204. Authentication response (AK MAC, A-IoT ID)

1205. Authentication response (AK MAC)

1206

$RAND = AK \oplus Kr$

RES, MAC', RES'

Verify MAC

1207

$KI = Physical\ layer\ key \oplus AK \oplus NONCE1$

1208. Authentication confirmation (RES, RES', NONCE1)

1209. Generate KI' and perform integrity verification

1210. Generate XRES'

1211. Authentication confirmation, the authentication confirmation carrying the RES

$Kc = Physical\ layer\ key \oplus AK \oplus NONCE2$

1212. Authentication response (NONCE2)

1213. Kc, KI'

1214. Generate Kc

1215. Verify RES

FIG. 12

Physical layer key

f2

RAND

XRES'

$\oplus$

AK

Kr

f2

f2

MAC

XRES

FIG. 13

66

| A-IoT | Base station | | AUSF/UDM/ARPF |
|---|---|---|---|

Kr

Kr

1401. Authentication request (A-IoT ID)

1402. Authentication request(A-IoT ID)

1403

AK=Kr⊕RAND

MAC=f2（Kr,AK）

XRES=f2（Kr,RAND）

Ka'

1404. Authentication response （AK，Ka'，MAC）

1405. Authentication response （AK，MAC）

1406

RAND=AK⊕Kr

RES,MAC' ,Ka' ,KI

Verify MAC

1407. Authentication confirmation message (RES)

1408. Generate KI,Kc

1408. Authentication confirmation (RES)

1409. Verify RES

FIG. 14

Physical layer key

f3

Ka'

RAND

⊕

AK

Kr

f2

f2

MAC

XRES

FIG. 15

67

FIG. 16

FIG. 17

FIG. 18

FIG. 19

| A-IoT | UE/Base station | KMS | AUSF/UDM/ARPF |
|---|---|---|---|
| Kr | | | Kr |

2001. Trigger message (AIoT ID and/or Group ID)

2002. Authentication request (AIoT ID and/or Group ID)

AK=Kr⊕RAND 2003

MAC=f2 (Kr,AK)

XRES=f2 (Kr,RAND)

2004. Authentication request (AK, MAC, A-IoT ID, Group ID)

2005. Generate Ka, K-Group

2006. Authentication request (AK, MAC)

Ka and Group key

RAND=AK⊕Kr 2007

RES, MAC', Ka, KI

Verify MAC

2009. Authentication confirmation, the authentication confirmation carrying the RES

2008. Authentication response (RES)

2009. Generate KI, Verify integrity

2011. Response message (encrypted K-Group)

2010. Verify RES

K-Group

**FIG. 20**

A first device receives a first message from a first network device, where the first message carries an authentication parameter and an identifier of a second device — S2110

The first device transmits a second message to the second device, where the second message carries the authentication parameter — S2120

The first device receives a third message from the second device, where the third message carries a first RES, the first RES is obtained by the second device based on the authentication parameter and a root key, and the root key is a key shared between the second device and a core network side device — S2130

The first device transmits a fourth message to the first network device, where the fourth message carries the first RES, and the first RES is used for the core network side device to perform authentication of the second device — S2140

**FIG. 21**

A second device receives a second message from a first device, where the second message carries an authentication parameter — S2210

The second device calculates a first RES based on the authentication parameter and a root key, where the root key is a key shared between the second device and a core network side device — S2220

The second device transmits a third message to the first device, where the third message carries the first RES, and the first RES is used for the core network side device to perform authentication of the second device — S2230

FIG. 22

A first network device transmits a first message to a first device, where the first message carries an authentication parameter and an identifier of a second device — S2310

The first network device receives a fourth message from the first device, where the fourth message carries a first RES, where the first RES is obtained by the second device based on the authentication parameter and a root key, and the root key is a key shared between the second device and a core network side device — S2320

In a case where the first RES is the same as the first verification RES, the first network device determines that authentication of the second device succeeds — S2330

FIG. 23

A first device transmits a second message to a second device, where the second message carries an authentication parameter — S2410

The first device receives a third message from the second device, where the third message carries a second RES, and the second RES is related to the authentication parameter and a first key — S2420

The first device generates a second verification RES based on the authentication parameter and the first key — S2430

In a case where the second verification RES is the same as the second RES, the first device determines that authentication of the second device succeeds — S2440

FIG. 24

A second device receives a second message from a first device, where the second message carries an authentication parameter — S2510

The second device calculates a second RES based on the authentication parameter and a first key, where the first key is related to the first device — S2520

The second device transmits a third message to the first device, where the third message carries a second RES, and the second RES is used for the first device to perform authentication of the second device — S2530

## FIG. 25

## FIG. 26

| UE | SEAF | AUSF | UDM/ARPF |

2701, Generate AV

2702, 5G HE AV

2703, Store XRES*
2704, Calculate HXRES*、KSEAF

2705，Transmit 5G SE AV

2706，Transmit RAND、AUTN

2707, Calculate RES*

2708, Return RES*

2709, Compare HRES* with HXRES*

2710, Transmit RES*

2711，Verify RES*

2712, Indicates to SEAF whether the verification has succeeded from a perspective of the home network

## FIG. 27

FIG. 28

FIG. 29

First device

First communication
unit 3010

First processing unit
3020

FIG. 30

Second device

Second communication
unit 3110

Second processing unit
3120

FIG. 31

First network device

Third communication
unit 3210

Third processing unit
3220

FIG. 32

Electronic device

Fourth processing unit
3310

FIG. 33

Communication device 3400

Memory
3420

Processor
3410

Transceiver
3430

FIG. 34

Chip 3500

Input
interface
3530

Processor
3510

Memory
3520

Output
interface
3540

FIG. 35

Communication system 3500

Second
device

3610

First device

3620

First network
device

3630

FIG. 36

## INTERNATIONAL SEARCH REPORT

| International application No. |
| --- |
| **PCT/CN2023/092602** |

**A.    CLASSIFICATION OF SUBJECT MATTER**

H04W12/06(2021.01)i;  H04L9/14(2006.01)n

According to International Patent Classification (IPC) or to both national classification and IPC

**B.    FIELDS SEARCHED**

Minimum documentation searched (classification system followed by classification symbols)

IPC:H04W H04L

Documentation searched other than minimum documentation to the extent that such documents are included in the fields searched

Electronic data base consulted during the international search (name of data base and, where practicable, search terms used)

3GPP, CNTXT, CNKI, ENTXT, VEN: 消息认证码, 密钥, 参数, 标识, 识别, 加密密钥, 完整性保护密钥, 随机数, MAC, key, parameter, ID, encryption key, integrity protection key, random, nonce

**C.    DOCUMENTS CONSIDERED TO BE RELEVANT**

| Category* | Citation of document, with indication, where appropriate, of the relevant passages | Relevant to claim No. |
| --- | --- | --- |
| X | CN 111669276 A (HUAWEI TECHNOLOGIES CO., LTD.) 15 September 2020 (2020-09-15) description, paragraphs 0034, 0058-0085 and 0204-0234, and figure 2 | 1-10, 16-29, 36-53, 64-94, 96-103, 105-108 |
| Y | CN 111669276 A (HUAWEI TECHNOLOGIES CO., LTD.) 15 September 2020 (2020-09-15) description, paragraphs 0034, 0058-0085 and 0204-0234, and figure 2 | 11-15, 30-35 |
| X | CN 108293223 B (HUAWEI TECHNOLOGIES CO., LTD.) 17 November 2020 (2020-11-17) description, paragraphs 0114-0136 and 0234-0273 | 54-63, 95, 104-108 |
| Y | CN 108293223 B (HUAWEI TECHNOLOGIES CO., LTD.) 17 November 2020 (2020-11-17) description, paragraphs 0114-0136 and 0234-0273 | 11-15, 30-35 |
| A | CN 110012467 A (BEELINKER TECHNOLOGY (SUZHOU) CO., LTD.) 12 July 2019 (2019-07-12) entire document | 1-108 |
| A | CN 101039180 A (ZTE CORP.) 19 September 2007 (2007-09-19) entire document | 1-108 |
| A | CN 102625300 A (HUAWEI TECHNOLOGIES CO., LTD.) 01 August 2012 (2012-08-01) entire document | 1-108 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **25 January 2024** | **26 January 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
| --- |
| **PCT/CN2023/092602** |

---

**Box No. III**     **Observations where unity of invention is lacking (Continuation of item 3 of first sheet)**

This International Searching Authority found multiple inventions in this international application, as follows:

The independent claims of the present application are divided into two groups, wherein independent claims 1, 19, 39, 64, 70, 78, 82, 88, 92-94 and 96-103 and corresponding claims 105-108 mainly relate to the authentication of a device, and independent claims 54, 95 and 104 and corresponding claims 105-108 mainly relate to the generation of a key. The two groups of independent claims do not have a same or corresponding special technical feature, do not have a technical relationship therebetween, do not belong to a single general inventive concept, and therefore lack unity of invention and do not comply with PCT Rule 13.

1. ☐    As all required additional search fees were timely paid by the applicant, this international search report covers all searchable claims.

2. ☑    As all searchable claims could be searched without effort justifying additional fees, this Authority did not invite payment of additional fees.

3. ☐    As only some of the required additional search fees were timely paid by the applicant, this international search report covers only those claims for which fees were paid, specifically claims Nos.:

4. ☐    No required additional search fees were timely paid by the applicant. Consequently, this international search report is restricted to the invention first mentioned in the claims; it is covered by claims Nos.:

**Remark on Protest**     ☐   The additional search fees were accompanied by the applicant's protest and, where applicable, the payment of a protest fee.

                                 ☐   The additional search fees were accompanied by the applicant's protest but the applicable protest fee was not paid within the time limit specified in the invitation.

                                 ☐   No protest accompanied the payment of additional search fees.

Form PCT/ISA/210 (continuation of first sheet) (July 2022)

**INTERNATIONAL SEARCH REPORT**
Information on patent family members

International application No.

**PCT/CN2023/092602**

| Patent document cited in search report | | | Publication date (day/month/year) | Patent family member(s) | | | Publication date (day/month/year) |
|---|---|---|---|---|---|---|---|
| CN | 111669276 | A | 15 September 2020 | None | | | |
| CN | 108293223 | B | 17 November 2020 | WO | 2017091959 | A1 | 08 June 2017 |
| CN | 110012467 | A | 12 July 2019 | None | | | |
| CN | 101039180 | A | 19 September 2007 | None | | | |
| CN | 102625300 | A | 01 August 2012 | US | 2013310006 | A1 | 21 November 2013 |
| | | | | US | 9049594 | B2 | 02 June 2015 |
| | | | | WO | 2012100749 | A1 | 02 August 2012 |
| | | | | EP | 2663107 | A1 | 13 November 2013 |
| | | | | EP | 2663107 | A4 | 26 February 2014 |
| | | | | EP | 2663107 | B1 | 20 November 2019 |

Form PCT/ISA/210 (patent family annex) (July 2022)